(19) Europäisches Patentamt
European Patent Office
Office européen des brevets

(11) **EP 4 536 485 B1**

(12) **EUROPÄISCHE PATENTSCHRIFT**

(45) Veröffentlichungstag und Bekanntmachung des Hinweises auf die Patenterteilung:
**26.11.2025 Patentblatt 2025/48**

(21) Anmeldenummer: **23731587.4**

(22) Anmeldetag: **05.06.2023**

(51) Internationale Patentklassifikation (IPC):
**B42D 25/305** *(2014.01)* **G07D 7/004** *(2016.01)*
**G07D 7/0043** *(2016.01)* **G07D 7/20** *(2016.01)*

(52) Gemeinsame Patentklassifikation (CPC):
**B42D 25/305; G07D 7/0043; G07D 7/2008**

(86) Internationale Anmeldenummer:
**PCT/EP2023/064962**

(87) Internationale Veröffentlichungsnummer:
**WO 2023/237476 (14.12.2023 Gazette 2023/50)**

(54) **VERFAHREN ZUR HERSTELLUNG EINES MEHRSCHICHTKÖRPERS, MEHRSCHICHTKÖRPER, VERFAHREN ZUR AUTHENTIFIZIERUNG EINES MEHRSCHICHTKÖRPERS UND EIN AUTHENTIFIZIERUNGSSYSTEM**

METHOD FOR PRODUCING A MULTILAYER BODY, MULTILAYER BODY, METHOD FOR AUTHENTICATING A MULTILAYER BODY, AND AUTHENTICATION SYSTEM

PROCÉDÉ DE FABRICATION D'UN CORPS MULTICOUCHE, CORPS MULTICOUCHE, PROCÉDÉ D'AUTHENTIFICATION D'UN CORPS MULTICOUCHE ET SYSTÈME D'AUTHENTIFICATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **09.06.2022 DE 102022114564**

(43) Veröffentlichungstag der Anmeldung:
**16.04.2025 Patentblatt 2025/16**

(73) Patentinhaber:
• **SCRIBOS GmbH**
**69126 Heidelberg (DE)**
• **LEONHARD KURZ Stiftung & Co. KG**
**90763 Fürth (DE)**
• **OVD Kinegram AG**
**6300 Zug (CH)**

(72) Erfinder:
• **TERHALLE, Bernd**
**69126 Heidelberg (DE)**
• **BORGSMÜLLER, Stefan**
**69126 Heidelberg (DE)**
• **WALTER, Harald**
**6300 Zug (CH)**
• **METZGER, Jürgen**
**90763 Fürth (DE)**

(74) Vertreter: **Zinsinger, Norbert**
**Louis Pöhlau Lohrentz**
**Patentanwälte Partnerschaft mbB**
**P.O.Box 30 55**
**90014 Nürnberg (DE)**

(56) Entgegenhaltungen:
EP-A1- 3 388 250    WO-A1-2008/058331
WO-A1-2018/189033    WO-A1-2020/239867
DE-A1- 10 345 898

**Beschreibung**

Die Erfindung betrifft ein Verfahren zur Herstellung eines Mehrschichtkörpers und einen Mehrschichtkörper. Die Erfindung betrifft auch ein Verfahren zur Authentifizierung eines Mehrschichtkörpers sowie ein Authentifizierungssystem.

Es ist bekannt, zum Fälschungsschutz Mehrschichtkörper mit Sicherheitsmerkmalen auszustatten. Hierzu eignen sich neben einer Reihe von Hologrammen auch Fouriermuster.

Aus der DE 102017206466 A1 ist ein Verfahren zur Herstellung eines Sicherheitsmerkmals bekannt, bei dem ein maschinenlesbarer graphischer Code zur Verfügung gestellt wird, der graphische Code in eine zweidimensionale diskrete komplexe Funktion eingebettet wird, die zweidimensionale diskrete komplexe Funktion fouriertransformiert wird und zu einem zweidimensionalen Bild binarisiert wird. Das binarisierte Fourierbild wird in einer Pixelauflösung gedruckt, die hinreichend groß ist, so dass bei einer Kopie dieses binarisierten Fourierbildes mittels herkömmlicher Drucker und Kopierer mit max. 600x600 dpi Scan- bzw. Druckauflösung nach der Rücktransformation der maschinenlesbare graphische Code nicht mehr lesbar ist. Mit einer Scan- bzw. Druckauflösung von 600x600 dpi sind die vom Drucker gedruckten Daten gemeint. Die bei herkömmlichen Druckern und Kopierern angegebenen dpi-Werte werden in der Realität nicht immer erreicht.

Nachteilig bei dem bereits bekannten Verfahren bzw. Mehrschichtkörper ist jedoch, dass das Fouriermuster mittels Digitaldruck aufgebracht wird. Deshalb sind derartige Mehrschichtkörper grundsätzlich anfällig für Imitations- und Kopierversuche durch fachkundige Personen mit professionellem Equipment (sog. Expertenkopien), insbesondere mit Scan- bzw. Druckauflösungen von mehr als 600 dpi. Andere konventionelle Verfahren zur Herstellung von Mehrschichtkörpern sind aus WO2008/058331-A1, EP3388250-A1 und WO2018/189033-A1 bekannt.

Der Erfindung liegt nun die Aufgabe zugrunde, ein Verfahren zur Herstellung eines Mehrschichtkörpers sowie einen Mehrschichtkörper anzugeben, bei dem der Fälschungsschutz erhöht wird und zudem die Herstellung nicht auf Digitaldruckverfahren beschränkt wird.

Die Aufgabe wird von einem Verfahren zur Herstellung eines Mehrschichtkörpers nach Anspruch 1 gelöst.

Die Aufgabe wird weiter von einem Mehrschichtkörper nach Anspruch 16, von einem Verfahren zur Authentifizierung eines Mehrschichtkörpers nach Anspruch 26 und von einem Authentifizierungssystem nach Anspruch 29 gelöst.

Hierbei hat sich gezeigt, dass durch den erfindungsgemäßen Mehrschichtkörper, das erfindungsgemäße Verfahren zur Herstellung eines Mehrschichtkörpers, das Verfahren zum Authentifizieren eines Mehrschichtkörpers und das Authentifizierungssystem ein Mehrschichtkörper erhalten wird, in dem in einem binarisierten zweidimensionalen Fouriermuster ein erster graphischer Code enthalten ist. Das binarisierte zweidimensionale Fouriermuster ist als Prägestruktur in den Mehrschichtkörper eingebracht. Somit kann das binarisierte zweidimensionale Fouriermuster von einem Authentifizierungssystem ausgelesen werden und gleichzeitig bietet das binarisierte zweidimensionale Fouriermuster aufgrund der durch die Prägestruktur hervorgerufenen optischen Variabilität einen erhöhten Fälschungsschutz. Durch die optische Variabilität ist es demnach nicht möglich, das binarisierte zweidimensionale Fouriermuster mit herkömmlichen Drucken bzw. Kopieren zu kopieren.

Darüber hinaus wird mit dem erfindungsgemäßen Mehrschichtkörper und dem erfindungsgemäßen Verfahren zur Herstellung eines Mehrschichtkörpers ein Mehrschichtkörper erhalten, in dem das binarisierte zweidimensionale Fouriermuster nicht mittels Digitaldruck ein- bzw. aufgebracht ist. Bei mittels Digitaldruck aufgebrachten Fouriermustern war es bislang nötig, diese Fouriermuster zum Teil mit einer Druckauflösung von bis zu 1200 dpi zu drucken. Um derartige hohe Auflösungen in hoher Qualität drucken zu können, sind sehr teure Drucker nötig. Durch den erfindungsgemäßen Mehrschichtkörper und das erfindungsgemäße Verfahren zur Herstellung eines Mehrschichtkörpers ist es nun möglich, das Fouriermuster ohne Digitaldruck in den Mehrschichtkörper einzubringen.

Das als Prägestruktur zur Verfügung gestellte binarisierte zweidimensionale Fouriermuster bietet zudem den Vorteil, dass dieses mittels herkömmlicher mobiler Endgeräte erfasst und mittels geeigneter Software ausgelesen werden kann. Zur Erfassung reicht hier die Kamera eines handelsüblichen Smartphones aus. Dies ist darauf zurückzuführen, dass lediglich das binarisierte zweidimensionale Fouriermuster von der Kamera als normale Abbildung erfasst wird. Anders als beispielsweise beim Auslesen von Computer generierten Hologrammen wird somit kein direkt durch das Fouriermuster gebeugtes Licht erfasst. Bei Computer generierten Hologrammen (CGH) ist es nämlich erforderlich, diese mittels eines monochromatischen Lasers durch Beugung an den Hologrammstrukturen auszulesen. Dafür müssen die lateralen Strukturen des CGH's in der Größenordnung der Wellenlänge des verwendeten Lichts sein, da ansonsten das Licht nicht effektiv gebeugt wird. Beispielsweise müssen die Strukturen eines CGH's im Wesentlichen eine Größe von 500 nm bis zu 10 μm aufweisen. Dies entspricht einer effektiven Auflösung von 50000 dpi bis zu 2500 dpi. Im Unterschied zu den Strukturen von CGH's liegen bei dem binarisierten zweidimensionalen Fouriermuster niedrigere Auflösungen vor. Bevorzugt liegt eine effektive Auflösung des binarisierten zweidimensionalen Fouriermusters bei höchstens 2500 dpi, bevorzugt bei höchstens 1200 dpi, besonders bevorzugt bei höchstens 900 dpi. Die niedrigeren Auflösungen sind erforderlich, damit die Strukturen auch von handelsüblichen Kameras mittels normaler Abbildung überhaupt erfasst werden können. Für die Erkennung mit einer handelsüblichen Kamera wird üblicherweise eine effektive Auflösung des binarisierten zweidimensionalen Fouriermusters von 650 dpi verwendet. Das binarisierte zweidimensionale Fouriermuster mit einer Auflösung von 650 dpi könnte von einem Drucker/Scanner mit einer Scan- bzw. Druckauflösungen von mind. 650 dpi zwar erzeugt werden, die erzeugte Kopie wäre dann jedoch nicht optisch variabel.

Es ist ferner bevorzugt vorgesehen, dass das binarisierten zweidimensionalen Fouriermuster mit einer effektiven Auflösung von höchstens 2500 dpi, bevorzugt höchstens 1200 dpi, besonders bevorzugt höchstens 900 dpi, abgeformt wird. Weitere vorteilhafte Ausgestaltungen der Erfindung sind in den Unteransprüchen bezeichnet.

Da der Mehrschichtkörper als Laminierfolie, Transferfolie, insbesondere Heißprägefolie oder Kaltprägefolie, ausgestaltet sein kann, kann der Mehrschichtkörper für vielfältige Einsatzzwecke verwendet werden. Beispielsweise findet der Mehrschichtkörper Anwendung in der Verpackungsindustrie zum fälschungssicheren Dekorieren von Verpackungen. Der Mehrschichtkörper kann jedoch auch zur Sicherung von Sicherheitsdokumenten, wie beispielsweise Ausweisen, Pässen, usw., oder aber auch Wertpapieren verwendet werden. Zudem findet der Mehrschichtkörper überall dort Anwendung, wo ein Produkt bezüglich seiner Echtheit authentifiziert werden soll. Denn durch das maschinenlesbare binarisierte zweidimensionale Fouriermuster, in welches wiederum ein erster graphischer Code eingebettet ist, kann mittels eines Authentifizierungsserver die Echtheit des Produkts überprüft werden.

Unter Verpackung ist hier ein allgemeiner Begriff zu verstehen, der sowohl die Verkaufsverpackung eines Produktes, beispielsweise die Tube einer Zahnpasta, als auch die Umverpackung, beispielsweise die Faltschachtel des Produktes betrifft. Es kann sich bei der Verpackung auch um einen Teil einer Verpackung handeln, beispielsweise ein Etikett, welches auf eine Umverpackung aufgeklebt wird. Eine Verpackung kann auch ein Karton oder ähnliches sein, in welchem mehrere Umverpackungen des Produkts verpackt sind.

Unter transparent wird vorliegend insbesondere ein Bereich mit einer Transmissivität im Wellenlängenbereich des für den menschlichen Betrachters sichtbaren Lichts von mehr als 50 %, bevorzugt von mehr als 70 %, besonders bevorzugt von mehr als 80 %, verstanden.

Unter opak wird vorliegend insbesondere ein Bereich mit einer Transmissivität im Wellenlängenbereich des für den menschlichen Betrachters sichtbaren Lichts von weniger als 40 %, bevorzugt von weniger als 30 %, besonders bevorzugt von weniger als 20 %, verstanden.

Zunächst wird im Folgenden die Erzeugung des Fouriermusters genauer beschrieben.

Der maschinenlesbare erste graphische Code wird in eine reelle Amplitudenfunktion einer zweidimensionalen, diskreten komplexen Funktion $G(fx,fy)$ mit einer fx-Frequenzkoordinate und einer fy-Frequenzkoordinate eingebettet. Zur Einbettung wird daher der Code in eine zweidimensionale, vorzugsweise quadratische Bildvorlage positioniert, wobei die x- und y-Werte der Bildvorlage als fx- und fy-Frequenzen interpretiert werden.

Grundsätzlich können komplexe Zahlen oder komplexe Funktionen als Summe des Realteils und Imaginärteils bzw. Summe einer reellen Funktion und einer imaginären Funktion oder in Polarkoordinatenschreibweise als Produkt einer Amplitudenfunktion und Phasenfunktion dargestellt werden.

Das erfindungsgemäße Verfahren geht davon aus, den maschinenlesbaren ersten graphischen Code als Amplitudenfunktion einer zweidimensionalen diskreten komplexen Funktion $G(fx,fy)$ zur Verfügung zu stellen. Die Amplitudenfunktion hat bevorzugt über die zwei Frequenzkoordinaten fx und fy entweder den Funktionswert 0 oder den Funktionswert 1. Der Funktionswert 1 wird insbesondere von schwarzen Koordinatenpunkten des in die Bildvorlage positionierten Codes repräsentiert und der Funktionswert 0 wird insbesondere von weißen Koordinatenpunkten des in die Bildvorlage positionierten Codes repräsentiert. Vorzugsweise beträgt hierbei die höchste verwendete Frequenz in fx oder in fy Richtung mindestens 600 dpi.

Vorzugsweise wird der reellen Amplitudenfunktion eine geeignete Phasenfunktion $e^{i\varphi}(fx, fy)$ durch Multiplikation hinzugefügt.

Die Phasenfunktion hat die Aufgabe, das Frequenzspektrum der Amplitudenfunktion zu glätten.

Bei der Phasenfunktion $e^{i\varphi}(fx, fy)$ kann es sich um eine Zufallsphase handeln. Vorzugsweise wird der erste graphische Code zur Erzeugung der Phasenfunktion zunächst als zufälliges Grauwertbild ausgebildet. Die Umrisse des Grauwertbildes entsprechen dem ersten graphischen Code, nur dass die Werte nicht bei 0 (weiß) und 1 (schwarz) liegen wie bei der Konstruktion der Amplitudenfunktion, sondern zufällige Grauwerte zwischen weiß und schwarz sind. Es findet eine Zuordnung der Grauwerte zu Zahlen zwischen 0 und $2\pi$ statt. Wenn der Grauwert schwarz ist, beträgt die Phase $2\pi$, und wenn der Grauwert weiß ist, beträgt die Phase 0. Die anderen Grauwerte werden je nach Graustufe einem Winkel zwischen 0 und $2\pi$ (Bogenmaß) zugeordnet. Je schwärzer, also dunkler, die Farbe ist, desto größer ist der Winkel. Auf diese Weise kann das zufällige Grauwertbild eindeutig in eine Phasenfunktion $e^{i\varphi}(fx, fy)$ umgewandelt werden, und durch Multiplikation der Amplitudenfunktion mit der Phasenfunktion wird die komplexwertige Funktion $G(fx,fy)$ gebildet. Die Zufallsphase bietet weiterhin den Vorteil, dass jedem Frequenzbereich eine Zufallsphase zugeordnet wird, wodurch das spätere Fouriermuster leichter auslesbar wird.

Es können der reellen Amplitudenfunktion aber auch andere Phasenfunktionen hinzugefügt werden.

Die zweidimensionale diskrete komplexe Funktion G(fx,fy) wird dann fouriertransformiert, und die daraus resultierende Fouriertransformierte g(x,y) wird zu einem zweidimensionalen Bild binarisiert. Zur Binarisierung kann der Realteil der Fouriertransformierten g(x,y) ermittelt werden und mittels eines Schwellenwerts binarisiert werden. Der Realteil der Fouriertransformierten enthält wiederum Graustufen. Binarisierung eines Bildes bedeutet hier, dass jedem Pixel des Bildes, dessen Graustufe oberhalb des Schwellenwertes liegt, der Wert 1 und jedem Pixel, dessen Graustufe unterhalb des Schwellenwertes liegt, der Wert 0 zugeordnet wird. 10%ige Binarisierung bedeutet dann, dass 10 % der Pixel schwarz und 90 % der Pixel weiß sind. 50% Binarisierung bedeutet dann, dass 50 % der Pixel schwarz und 50 % der Pixel weiß sind usw. Alternativ können auch der Imaginärteil oder die Phase der Fouriertransformierten g(x,y) ermittelt werden und mittels eines Schwellenwerts binarisiert werden. Weitere Binarisierungsmöglichkeiten sind aus dem Stand der Technik bekannt (Goodman, J. W., Introduction to Fourier Optics, McGraw-Hill (New York) (1996)).

Vorzugsweise wird der Realteil der Fouriertransformierten binarisiert und durch ihn das binarisierte zweidimensionale Fouriermuster ausgebildet.

Vorzugsweise wird das binarisierte zweidimensionale Fouriermuster mit einer Binarisierung von weniger als 50 %, vorzugsweise weniger als 20 % erzeugt. Üblicherweise liegt die Binarisierung bei ungefähr 15 %.

Die Trägerschicht besteht insbesondere aus einem selbsttragenden Material und/oder aus der Stoffklasse der Kunststoffe. Dabei ist die Trägerschicht bevorzugt einzeln oder kombiniert als Verbundmaterial ausgewählt aus den Stoffklassen: PET; Polyolefin, insbesondere aus OPP, BOPP, MOPP, PP, PE; PMMA; PEN; PA; ABS. Es ist auch möglich, dass die Trägerschicht bereits herstellerseitig vorbeschichtet ist und der Mehrschichtkörper auf diesem vorbeschichteten Material aufgebaut wird. Es ist auch möglich, dass es sich bei der Trägerschicht um eine bioabbaubare und/oder kompostierbare Trägerschicht handelt. Bevorzugt kommt hierbei EVOH zum Einsatz.

Die Schichtdicke der Trägerschicht liegt vorteilhafterweise zwischen 4 $\mu$m und 500 $\mu$m, insbesondere zwischen 4,7 $\mu$m und 250 $\mu$m.

Der Mehrschichtkörper kann als Laminierfolie ausgebildet sein, der eine Trägerschicht und eine mehrschichtige Nutzschicht, beispielsweise eine mehrschichtige Dekorlage, sowie eine insbesondere wärmeaktivierbare Kleberschicht aufweist, wobei Trägerschicht und Nutzschicht zusammen in Form einer Prägeschicht auf einem Zielsubstrat angeordnet werden.

Insbesondere ist der Mehrschichtkörper als Transferfolie ausgebildet. Eine Transferfolie weist insbesondere eine Transferlage auf, die bevorzugt aus mehreren Schichten ausgebildet ist, wobei die Schichten insbesondere einzeln oder mehrfach oder in Kombination ausgewählt sind aus: Kleberschicht, Haftvermittlerschicht, Grundierung, Barriereschicht, Ausgleichsschicht, Metallschicht, Oxidschicht, Farbschicht, Replikationsschicht, Schutzschicht.

Die Transferfolie weist weiterhin eine Trägerschicht auf, wobei die Transferlage von der Trägerschicht ablösbar ist. Zur Erleichterung der Ablösung der Transferlage kann zwischen der Transferlage und der Trägerschicht eine Ablöseschicht angeordnet sein.

Es ist bevorzugt vorgesehen, dass auf der Trägerschicht eine Ablöseschicht und/oder eine Schutzschicht aufgebracht werden, insbesondere wobei die Ablöseschicht und/oder die Schutzschicht zwischen der Trägerschicht und der Replikationsschicht angeordnet werden.

Die Ablöseschicht sorgt insbesondere dafür, dass die Schichten des Mehrschichtkörpers als Übertragungslagen von der Trägerschicht zerstörungsfrei getrennt werden können. Die Ablöseschicht ist bevorzugt aus Wachsen, Polyethylen (PE), Polypropylen (PP), Cellulose-Derivaten und/oder Poly(organo)siloxanen ausgebildet. Vorgenannte Wachse können natürliche Wachse, synthetische Wachse oder Kombinationen davon sein. Vorgenannte Wachse sind beispielsweise Carnauba-Wachse. Vorgenannte Cellulose-Derivate sind beispielsweise Celluloseacetat (CA), Cellulosenitrat (CN), Celluloseacetatbutyrat (CAB) oder Mischungen davon. Vorgenannte Poly(organo)siloxane sind beispielsweise Silicon-Bindemittel, Polysiloxan-Bindemittel oder Mischungen davon. Die Ablöseschicht weist bevorzugt eine Schichtdicke zwischen 1 nm und 500 nm, insbesondere eine Schichtdicke zwischen 5 nm und 250 nm, insbesondere bevorzugt zwischen 10 nm und 250 nm.

Bei einer Verwendung des Mehrschichtkörpers als Laminierfolie, z.B. für Labelund/oder Stickeranwendungen bleibt die Verbindung zwischen Trägerschicht und Folgeschichten bzw. Nutzschicht(en) bei der Applikation in der Regel erhalten. Daher verzichtet man bei Laminierfolien prinzipiell auf eine Ablöseschicht oder führt diese z.B. bei Laminierfolien für Sicherheitsanwendungen so aus, dass bevorzugt erst nach der Applikation eine Trennung der Trägerschicht von den Nutzschichten auftreten kann.

Die Ablöseschicht kann mit den bekannten Druckverfahren hergestellt werden. Insbesondere eignet sich der Tiefdruck, Flexodruck, Siebdruck, Inkjetdruck oder die Aufbringung mittels Schlitzdüse. Die Ablöseschicht kann aber auch durch Bedampfen, physikalische Gasabscheidung (PVD), chemische Gasabscheidung (CVD) und/oder Sputtern ausgebildet werden.

Bei der Schutzschicht handelt es sich bevorzugt um eine thermoplastische Schicht oder eine thermisch härtende Schicht oder eine strahlenhärtende Schicht aus einem Lack, einzeln, in mehreren Teilschichten und/oder als Gemisch ausgewählt aus: PMMA, PVC, Melamine, Acrylate, Polyurethane, Vernetzer, Photoinitiatoren, Additive, Entschäumer, Verlaufmittel, Benetzungsmittel. Die Schutzschicht kann auch aus einem strahlenhärtenden Dual Cure Lack bestehen. Dieser Dual Cure Lack kann in einem ersten Schritt beim und/oder nach dem Aufbringen in flüssiger Form thermisch vorvernetzt werden. Bevorzugt wird in einem zweiten Schritt, insbesondere nach der Verarbeitung der Mehrschichtfolie, der Dual Cure Lack radikalisch nachvernetzt, insbesondere über energiereiche Strahlung, vorzugsweise UV-Strahlung. Dual Cure Lacke dieser Art können aus verschiedenen Polymeren oder Oligomeren bestehen, die ungesättigte Acrylat-, oder Methacrylat-Gruppen besitzen. Diese funktionellen Gruppen können insbesondere in dem zweiten Schritt radikalisch miteinander vernetzt werden. Zur thermischen Vorvernetzung im ersten Schritt ist von Vorteil, dass bei diesen Polymeren oder Oligomeren auch mindestens zwei oder mehrere Alkoholgruppen vorhanden sind. Diese Alkoholgruppen können mit multifunktionellen Isocyanaten oder Melaminformaldehydharzen vernetzt werden. Als ungesättigte Oligomere oder Polymere kommen bevorzugt verschiedene UV-Rohstoffe wie Epoxyacrylate, Polyetheracrylate, Polyesteracrylate und insbesondere Acrylatacrylate in Frage. Als Isocyanat können sowohl geblockte als auch ungeblockte Vertreter auf TDI (TDI = Toluol-2,4-diisocyanat), HDI (HDI = Hexamethylendiisocyanat) oder IPDI-Basis (IPDI = Isophorondiisocyanat) in Frage kommen. Die Melaminvernetzer können vollveretherte Versionen sein, können Imino-Typen sein oder Benzoguanamin-Vertreter darstellen.

Vorzugsweise weist die Schutzschicht eine Schichtdicke zwischen 50 nm und 30 $\mu$m, bevorzugt zwischen 1 $\mu$m und 3 $\mu$m, auf. Die Schutzschicht kann mittels Tiefdruck, Flexodruck, Siebdruck, Inkjetdruck, mittels einer Schlitzdüse und/oder mittels Bedampfen, insbesondere mittels physikalischer Gasabscheidung (PVD), chemischer Gasabscheidung (CVD) und/oder Sputtern, hergestellt werden. Die Bedampfung erfolgt insbesondere bei dünneren Schutzschichten unter 1 $\mu$m.

Insbesondere ist es möglich, dass, vorzugsweise nach Aushärtung des Replikationslacks, teilweise oder vollflächig eine Metallschicht und/oder eine HRI-Schicht und/oder eine Grundierung und/oder eine Kleberschicht auf der Replikationsschicht aufgebracht werden.

Erfindungsgemäß sind auf der Replikationsschicht eine Metallschicht und/oder eine HRI-Schicht und/oder eine Grundierung und/oder eine Kleberschicht angeordnet.

Die Metallschicht kann sowohl vollflächig wie auch bereichsweise aufgebracht sein. Die Metallschicht kann bevorzugt musterförmig ausgebildet sein und ein Muster und/oder ein Motiv darstellen, welches insbesondere auch im Register zu einem Druck und/oder zu den Prägestrukturen der Replikationsschicht angeordnet sein kann. Es kann ferner auch möglich sein, dass die Metallschicht zumindest teilweise oder vollflächig im ersten Bereich angeordnet ist. Wie oben beschrieben, ist die Prägestruktur des binarisierten zweidimensionalen Fouriermusters in einem ersten Bereich zumindest teilweise vorgesehen. Dadurch, dass die Metallschicht ebenfalls im ersten Bereich vorgesehen ist, wird sichergestellt, dass das binarisierte zweidimensionale Fouriermuster metallisiert wird und somit ein metallisches Erscheinungsbild erhält.

Es ist bevorzugt auch vorgesehen, dass die Metallschicht im Register zu der Prägestruktur ausgebildet ist.

Unter registriert oder Register bzw. passergenau bzw. registergenau oder Passergenauigkeit oder Registergenauigkeit ist eine Lagegenauigkeit zweier oder mehrerer Schichten relativ zueinander zu verstehen. Dabei soll sich die Registergenauigkeit innerhalb einer vorgegebenen Toleranz bewegen und dabei möglichst gering sein. Gleichzeitig ist die Registergenauigkeit von mehreren Elementen und/oder Schichten zueinander ein wichtiges Merkmal, um die Prozesssicherheit und/oder die Produktqualität und/oder die Fälschungssicherheit zu erhöhen. Die lagegenaue Positionierung kann dabei insbesondere mittels sensorisch, vorzugsweise optisch detektierbarer Passermarken oder Registermarken erfolgen. Diese Passermarken oder Registermarken können dabei entweder spezielle separate Elemente oder Bereiche oder Schichten darstellen oder selbst Teil der zu positionierenden Elemente oder Bereiche oder Schichten sein.

Die Metallschicht ist bevorzugt einzeln oder als Legierung oder als Eutektikum ausgebildet, ausgewählt aus: Aluminium, Chrom, Gold, Kupfer, Zinn, Indium, Silber. Die Metallschicht wird bevorzugt mittels Bedampfung, insbesondere mittels Vakuumbedampfung hergestellt. Die aufgedampfte Metallschicht kann vollflächig erfolgen und wahlweise vollflächig erhalten bleiben oder aber mit bekannten Demetallisierungsverfahren wie Ätzen, Lift-Off (Waschlack-Verfahren) oder Photolithografie strukturiert werden und dadurch anschließend nur partiell vorliegen. Die Schichtdicke der Metallschicht liegt insbesondere zwischen 10 nm und 500 nm.

Die Metallschicht kann aber auch aus einer gedruckten Schicht bestehen, insbesondere aus einer gedruckten Schicht aus Metallpigmenten in einem Bindemittel. Diese gedruckten Metallpigmente können vollflächig oder partiell aufgebracht sein und/oder in unterschiedlichen Flächenbereichen unterschiedliche Einfärbungen aufweisen. Die Schichtdicke der Metallschicht aus Metallpigmenten liegt insbesondere zwischen 1 $\mu$m und 10 $\mu$m.

Es ist auch möglich, die Metallschicht aus einem Lack mit elektrisch leitfähigen, metallischen Pigmenten herzustellen, insbesondere aufzudrucken und/oder aufzugießen.

Alternativ kann an Stelle der Metallschicht auch eine HRI- oder LRI-Schicht (engl. high refraction index - HRI, low refraction index - LRI) verwendet werden. Eine solche dielektrische HRI- oder LRI-Schicht besteht beispielsweise aus einer aufgedampften Schicht aus einem Metalloxid, Metallsulfid, Titanoxid, etc. Die Schichtdicke einer solchen Schicht beträgt bevorzugt 10 nm bis 500 nm.

Weiter ist es auch möglich, eine erste Metallschicht in einer semitransparenten Ausführung als optische Filterschicht bereitzustellen. Eine solche Metallschicht besteht beispielsweise aus einer aufgedampften Schicht aus dünnem Metall (Al, Cr) oder einem dünn aufgebrachten Metalloxid, Metallsulfid, Siliziumoxid, etc. Die Schichtdicke einer solchen Schicht wird so gewählt, dass die optische Dichte in einem Bereich insbesondere von 0,1 bis 0,9 OD (OD = optische Dichte) liegt. Die für einen Dünnfilm-Farbkippeffekt benötigte nachfolgende dielektrische Abstandsschicht kann analog zur Replikationsschicht beschichtet werden, wobei die Schichtdickenbereich bevorzugt zwischen 0,1 μm und 1,0 μm liegt und/oder die Zusammensetzung insbesondere der Replikationsschicht entspricht. Die Abstandsschicht kann in diesem Fall auch direkt als Replikationsschicht dienen. Die Abstandsschicht kann auch als keramische Abstandsschicht aufgedampft werden. Typischerweise werden hier dann Metalloder Halbmetalloxide wie z.B. $SiO_2$, $TiO_2$, $Na_3AlF_6$ oder $MgF_2$ nach einem der auch für die Metallschicht genannten Verfahren aufgedampft. Die Schichtdicken liegen hier insbesondere zwischen 20 nm und 500 nm. Die Abstandsschicht kann auch als transparente Lackschicht aufgedruckt werden.

Diese optische Filterschicht kann auch bereits vor der Replikationsschicht aufgebracht werden. Dann dient die Replikationsschicht insbesondere als dielektrische Abstandsschicht, wobei der Schichtdickenbereich bevorzugt zwischen 0,1 μm und 1,0 μm liegt.

Im Anschluss an die dielektrische Abstandsschicht wird dann insbesondere wie oben beschrieben eine opake oder semitransparente Metallschicht aufgedampft.

Bevorzugt ist die Kleberschicht und/oder die Grundierung aus einem Lack, einzeln, in mehreren Teilschichten und/oder als Gemisch ausgebildet, ausgewählt aus: PMMA, PVC, Acrylate, Polyamid, Polyvinylacetate, Kohlenwasserstoffharze, Polyester, Polyurethane, chlorierte Polyolefine, Polypropylene, Epoxidharze, Polyurethan-Polyole, insbesondere in Kombination mit inaktivierten Isocyanaten, Füllstoffe, beispielsweise $SiO_2$ und/oder $TiO_2$. Es kann zusätzlich zu einer Kleberschicht auch eine Grundierung vorgesehen sein.

Die Schichtdicke der Kleberschicht und/oder der Grundierung beträgt bevorzugt zwischen 0,5 μm und 20 μm, besonders bevorzugt zwischen 1,5 μm und 5 μm. Die Kleberschicht und/oder die Grundierung kann mittels Tiefdruck, Flexodruck, Siebdruck, Inkjetdruck und/oder Aufbringung mittels einer Schlitzdüse hergestellt werden.

Die Replikationsschicht weist bevorzugt zumindest bereichsweise an einer ihrer Oberseiten das binarisierte zweidimensionale Fouriermuster als Prägestruktur auf. Die Replikationsschicht ist bevorzugt aus einem thermoplastischen Lack oder aus einem strahlenhärtenden Lack ausgebildet, einzeln, in mehreren Teilschichten und/oder als Gemisch ausgewählt aus Acrylat, Cellulose, PMMA, Polyurethane, Isocyanate. Insbesondere in thermoplastischen Replikationsschichten wird bevorzugt mittels Hitze und Druck durch Einwirkung eines Prägewerkzeugs eine Oberflächenstruktur abgeformt.

Weiter ist es auch möglich, dass die Replikationsschicht einen UV-härtbaren Replikationslack aufweist, welcher nach Abformung der Prägestruktur mittels UV-Strahlung vorgehärtet oder vollständig ausgehärtet wird. Dabei wird die Prägestruktur durch Einwirkung eines Prägewerkzeugs in die noch nicht endgehärtete Replikationsschicht abgeformt und die Replikationsschicht unmittelbar während oder nach der Abformung durch Bestrahlung mit UV-Licht gehärtet. Vor und/oder während der Abformung kann eine zusätzliche Bestrahlung mit UV-Licht erfolgen.

Die Replikationsschicht kann grundsätzlich mittels den bekannten Druckverfahren hergestellt werden. Insbesondere eignet sich der Tiefdruck, Flexodruck, Siebdruck oder Inkjetdruck. Aber auch die Herstellung mittels einer Schlitzdüse ist möglich.

Es ist bevorzugt vorgesehen, dass das binarisierte zweidimensionale Fouriermuster als Nanostrukturen und/oder als Mikrostrukturen bereitgestellt wird, insbesondere als diffraktive Gitter, streuende Mattstrukturen, reflektierende Facetten und/oder reflektierende Mikrostrukturen bereitgestellt wird. Ferner ist es möglich, dass das binarisierte zweidimensionale Fouriermuster als Nanostrukturen und/oder Mikrostrukturen in die Replikationsschicht abgeformt ist, insbesondere als diffraktive Gitter, streuende Mattstrukturen, reflektierende Facetten und/oder reflektierende Mikrostrukturen in die Replikationsschicht abgeformt ist.

Wie weiter oben bereits zur Erzeugung des Fouriermusters beschrieben, ist das binarisierte zweidimensionale Fouriermuster bevorzugt aus hellen Pixeln und dunklen Pixeln gebildet. Diese hellen Pixel und dunklen Pixel sind bevorzugt innerhalb eines zweidimensionalen Rasters mit einer Auflösung von M x N Pixeln angeordnet.

Es hat sich gezeigt, dass handelsübliche Drucker in etwa eine Druckauflösung von 600 dpi haben, so dass beim Abfotografieren des binarisierten zweidimensionalen Fouriermusters und erneutem Ausdrucken des fotografierten binarisierten zweidimensionalen Fouriermusters so viel Information verlorengeht, dass eine Rekonstruktion des ersten graphischen Codes nicht mehr möglich ist. Soll das binarisierte zweidimensionale Fouriermuster kopiert werden und dabei die darin enthaltene Information erhalten bleiben, so muss beim Kopiervorgang mindestens die effektive Auflösung des binarisierten zweidimensionalen Fouriermusters erhalten bleiben. Wenn beispielsweise beim Kopiervorgang entweder der verwendete Scanner oder der verwendete Drucker eine niedrigere Auflösung als die effektive Auflösung des binarisierten zweidimensionalen Fouriermusters haben, wird das binarisierte zweidimensionale Fouriermuster nur unvollständig übertragen, und der darin enthaltene erste graphische Code wird beschädigt und dadurch nicht mehr lesbar. Es hat sich gezeigt, dass bei den oben genannten Pixelgrößen ein Kopierschutz gegen handelsübliche Bürokopierer gewährleistet ist. Dadurch, dass das binarisierte zweidimensionale Fouriermuster jedoch als Prägestruktur ausgestaltet ist, kann die durch die Prägestruktur optische Variabilität des binarisierten zweidimensionalen Fouriermusters nicht von Kopierern imitiert werden, wodurch der Fälschungsschutz weiter erhöht wird.

Bei der effektiven Auflösung handelt es sich bevorzugt um die Auflösung, die das binarisierte zweidimensionale Fouriermuster aufweist. Bei der effektiven äquivalenten Auflösung handelt es sich bevorzugt um die Auflösung die das in die Prägestruktur eingebrachte binarisierte zweidimensionale Fouriermuster aufweist.

Die effektive äquivalente Auflösung des in die Prägestruktur eingebrachten binarisierten zweidimensionalen Fouriermusters wird durch die Positionierung des ersten graphischen Codes innerhalb der Bildvorlage bestimmt, die vor der Fouriertransformation vorgenommen wird. Die horizontale und die vertikale Achse der Bildvorlage werden hierbei als (Orts-) Frequenzachsen interpretiert. Im Zentrum der Bildvorlage befindet sich die Frequenz 0 und an den Rändern der Bildvorlage die höchsten im Prägeprozess erreichbaren Frequenzen fx_limit bzw. fy_limit. Die Positionierung des ersten graphischen Codes innerhalb der Bildvorlage in fx- und fy-Richtung legt den größten horizontalen Abstand fx_max des ersten graphischen Codes von der Bildmitte sowie den größten vertikalen Abstand fy_max des ersten graphischen Codes von der Bildmitte fest. Es werden Quotienten fx_max/fx_limit und fy_max/fy_limit gebildet. Die effektive Auflösung in x-Richtung ist das Produkt aus dem Quotienten fx_max/fx_limit multipliziert mit der verwendeten Auflösung des Prägeprozesses

$$Aufl\ddot{o}sung_{eff,\ x} = \frac{fx_{max}}{fx_{limit}} \cdot Aufl\ddot{o}sung$$

und die effektive Auflösung in y-Richtung ist das Produkt aus dem Quotienten fy_max/ fy_limit multipliziert mit der verwendeten Auflösung des Prägeprozesses

$$Aufl\ddot{o}sung_{eff,\ y} = \frac{fy_{max}}{fy_{limit}} \cdot Aufl\ddot{o}sung.$$

Die maximale effektive Auflösung ist der größere Wert der effektiven Auflösung in x-Richtung und effektiven Auflösung in y-Richtung. Der erste graphische Code wird vorzugsweise so weit außen an der Bildvorlage positioniert, dass die Werte fx_max, oder fy_max so groß sind, dass die maximale effektive äquivalente Auflösung oberhalb von 600 dpi liegt. Wird der erste graphische Code beispielsweise genau bis an den Rand der Bildvorlage positioniert, so entspricht die maximale effektive äquivalente Auflösung genau der verwendeten Auflösung des Prägeprozesses. Wird der erste graphische Code beispielsweise bis zur Hälfte zwischen der Mitte und dem Rand der Bildvorlage positioniert, so entspricht die maximale effektive äquivalente Auflösung genau der halben verwendeten Auflösung des Prägeprozesses.

Gleichzeitig ist es bevorzugt, dass die maximale effektive äquivalente Auflösung höchstens so groß ist wie die typische Auflösung einer Kamera eines Authentifizierungssystems. Insbesondere bei mobilen Authentifizierungssystemen sollte die maximale effektive äquivalente Auflösung unterhalb von 1200 dpi liegen.

Insbesondere ist es möglich, dass die hellen Pixel und dunklen Pixel aus diffraktiven Gittern gebildet werden, wobei sich die Gitter der hellen Pixel und der dunklen Pixel durch die Gitterperiode und/oder Gittertiefe und/oder Orientierung unterscheiden. Die Gitter können Linear- oder Kreuz- oder schlangenförmige Gitter sein oder auch komplexere Varianten umfassen. Die Profilform kann sinusförmig, blazeartig oder komplexer sein.

Weiter kann es möglich sein, dass die Gitterperiode der diffraktiven Gitter in einem Bereich von 200 nm bis 20 μm, bevorzugt von 250 nm bis 10 μm, liegt und/oder die Gittertiefe der diffraktiven Gitter in einem Bereich von 50 nm bis 2 μm liegt und/oder die Gittertiefe der diffraktiven Gitter 5% bis 20% der Gitterperiode beträgt.

Wenn der Kontrast zwischen den diffraktiven Gittern der hellen Pixel und dunklen Pixel durch eine unterschiedliche Gitterperiode erzeugt wird, so beträgt dieser Unterschied in der Periode bevorzugt mindestens 20 nm und weiter bevorzugt mindestens 50 nm und insbesondere bevorzugt mindestens 100 nm.

In einer Ausführungsform handelt es sich bei den Gittern um sinusförmige Linear- oder schlangenförmige Gitter, bei denen sich die Orientierung der Gitterlinien in den hellen Pixeln und dunklen Pixeln um mindestens 30°, bevorzugt mehr als 45°, weiter bevorzugt mindestens 60° und insbesondere um nahezu 90° unterscheidet.

Alternativ kann auch vorgesehen sein, dass die hellen Pixel und dunklen Pixel durch eine in direkter Reflexion hell bzw. dunkel erscheinende Strukturen gebildet werden, wobei die dunkel erscheinenden Strukturen hochfrequente und tiefe Kreuzgitterstrukturen und/oder Kreuzgitter und/oder Hexagonalgitter und/oder Spiegel umfassen, und/oder wobei die hell erscheinenden Strukturen statische und/oder dynamische Mattstrukturen und/oder Fourier-Hologramme umfassen. Die dunkel erscheinende Struktur kann hierbei farbneutral, also dunkelgrau bis schwarz erscheinen oder auch dunkelfarbig erscheinen, wie zum Beispiel dunkelrot. Die hell erscheinende Struktur kann ebenfalls farbneutral, also hellgrau bis weiß erscheinen, z.B. goldfarben.

Bevorzugt sind die dunkel erscheinenden Strukturen aus Spiegel oder hochfrequente und tiefe Kreuzgitterstrukturen, auch als Subwellengitter bekannt, gebildet. Bevorzugt ist es möglich, dass die Gitterperiode der Kreuzgitter und/oder Hexagonalgitter in einem Bereich von 200 nm bis 450 nm liegt und die Gittertiefe der Kreuzgitter und/oder Hexagonalgitter mehr als 150 nm beträgt. Kreuzgitter und/oder hexagonales Gitter bieten den Vorteil, dass diese gegenüber Lineargittern stärkere Farbeindrücke zeigen. Dies ist insbesondere dann vorteilhaft, wenn das binarisierte zweidimensionale Fouriermuster farbig ausgestaltet sein soll.

Darüber hinaus ist es bevorzugt vorgesehen, dass der mittlere Abstand der Mattstrukturen in einem Bereich von 500 nm bis 5 $\mu$m liegt und die mittlere Tiefe der Mattstrukturen in einem Bereich von 100 nm bis 2 $\mu$m liegt.

Alternativ ist es auch denkbar, dass die hellen Pixel und dunklen Pixel durch Blazegitter gebildet werden, wobei sich die Orientierung des Blazegitters in den hellen Pixeln und den dunklen Pixeln um mindestens 150° unterscheidet und insbesondere ca. 180° beträgt. Vorzugsweise ist es vorgesehen, dass die Gitterperiode der Blazegitter in einem Bereich von 3 $\mu$m bis 20 $\mu$m liegt und/oder die Gittertiefe der Blazegitter in einem Bereich von 500 nm bis 2 $\mu$m liegt. Dadurch wird ein weißes Erscheinungsbild erzeugt und zudem sind derartige Blazegitter gut thermisch replizierbar.

Zum Ausgleich von Oberflächenrauigkeiten des Zielsubstrats, kann der Mehrschichtkörper auch zumindest eine Ausgleichsschicht umfassen, welche vorzugsweise zwischen der Replikationsschicht und der Kleberschicht bzw. Grundierung oder zwischen der Metallschicht und der Kleberschicht bzw. Grundierung angeordnet wird. Eine solche Ausgleichsschicht findet insbesondere dann Anwendung, wenn der Mehrschichtkörper oder die Transferlage des Mehrschichtkörpers auf ein Zielsubstrat mit vergleichsweise hoher Oberflächenrauigkeit, beispielsweise ungestrichener Karton oder ungestrichenes Papier, appliziert wird. Durch die Ausgleichsschicht wird dann das Erfassen und das Auslesen des binarisierten zweidimensionalen Fouriermusters mittels eines mobilen Endgerätes verbessert. Es ist auch möglich, mehrere Ausgleichsschichten, insbesondere zwischen unterschiedlichen Schichten der Transferlage vorzusehen. Beispielsweise zwischen der Kleberschicht und der Grundierung.

Die Ausgleichsschicht kann mittels Tiefdruck, Flexodruck, Siebdruck, Inkjetdruck, mittels einer Schlitzdüse und/oder mittels Bedampfen, insbesondere mittels physikalischer Gasabscheidung (PVD), chemischer Gasabscheidung (CVD) und/oder Sputtern, hergestellt werden. Vorzugsweise weist die Ausgleichsschicht eine Schichtdicke im Bereich von 5 $\mu$m bis 20 $\mu$m auf.

Die Ausgleichschicht kann insbesondere Materialien einzeln oder in Kombination aufweisen, ausgewählt aus: Acrylate, Polyurethane, Nitrocellulose, Füllstoffe, Additive.

Handelt es sich bei dem Mehrschichtkörper um eine Heißprägefolie, so kann der Ausgleich von Oberflächenrauigkeiten bevorzugt auch durch einen glättenden Vordruck auf dem Substrat erfolgen. Dies ist besonders dann vorteilhaft, wenn das Zielsubstrat ein Papier oder ein Karton ist. Durch den Vordruck auf dem Substrat erhält man ein sog. gestrichenes Papier oder einen gestrichenen Karton. Bei dem Vordruck auf dem Substrat handelt es sich vorzugsweise um einen Auftrag eines Bindemittels, welches die Oberfläche des Papiers oder Kartons glättet. Vorzugsweise umfasst das Bindemittel ein oder mehrere Komponenten ausgewählt aus: Kreide, Kaolin, Kalziumcarbonat. Bevorzugt wird das Bindemittel mittels eines Streichrakels gleichmäßig und vollflächig auf das Papier oder den Karton aufgebracht und somit die Oberfläche versiegelt. Ggf. kann anschließend der Karton oder das Papier noch durch einen Kalander geführt werden, bei dem die Oberfläche des Kartons oder des Papiers mit Hilfe von Walzen unter Einwirkung von Wärme und Druck geglättet und satiniert wird. Durch die geglättete Oberfläche des Zielsubstrats erscheint nach Applikation des Mehrschichtkörpers oder einer Transferlage des Mehrschichtkörpers das binarisierte zweidimensionale Fouriermuster intensiver, wodurch dieses leichter für ein mobiles Endgerät auch bei schlechten Beleuchtungsqualitäten erfassbar ist.

Alternativ kann bei der Verwendung des Mehrschichtkörpers als Heißprägefolie für das Zielsubstrat, insbesondere ungestrichener Karton oder ungestrichenes Papier, vorgesehen sein, die Oberfläche des Zielsubstrats mit Wasserglas zu beschichten. Als Wasserglas werden aus einer Schmelze erstarrte glasartige, amorphe, wasserlösliche Natrium, Kalium- und/oder Lithiumsilicate oder ihre wässrigen Lösungen bezeichnet. Um das feste Wasserglas auf ein Papier oder einen Karton aufbringen zu können, wird dieses zunächst zu einem Pulver gemahlen. Daraus wird durch Lösen in Wasser bei hohen Temperaturen, insbesondere in einem Bereich von 100°C bis 200°C, und bei hohen Drücken, insbesondere in einem Bereich von 1 bar bis 8 bar, flüssiges Wasserglas (sog. Flüssigglas) als klare kolloide alkalische Lösung oder auch als alkalisches Gel gewonnen. Diese Lösung oder dieses Gel kann anschließend zur Beschichtung auf das Papier oder den Karton aufgebracht werden. Nach einer vorbestimmten Trocknungszeit weist das Zielsubstrat eine glatte Oberfläche auf. Auch hier erscheint nach Applikation des Mehrschichtkörpers oder einer Transferlage des Mehrschichtkörpers das binarisierte zweidimensionale Fouriermuster intensiver und ist somit leichter erfassbar für ein mobiles Endgerät.

Bei der Verwendung des Mehrschichtkörpers als Kaltprägefolie kann zum Ausgleich von Oberflächenrauigkeiten eine vergleichsweise dicke Kleberschicht verwendet werden. Beim Kaltprägen wird die Kleberschicht erst unmittelbar vor Applikation entweder auf die Unterseite des Mehrschichtkörpers oder auf die Oberseite des Zielsubstrats aufgebracht. Bevorzugt wird hierzu ein Kaltkleber, insbesondere ein UV-härtender Kaltkleber, verwendet. Bevorzugt wird der Kaltkleber mit einem Auftragsgewicht im Bereich von 5 g/m$^2$ bis 6 g/m$^2$ auf das Zielsubstrat und/oder auf den Mehrschichtkörper aufgebracht.

Es ist ferner auch bei der Verwendung des Mehrschichtkörpers als Kaltprägefolie möglich, dass vor Applikation des Mehrschichtkörpers oder der Transferlage des Mehrschichtkörpers ein Substratvordruck auf das Zielsubstrat erfolgt. Bezüglich der Spezifikationen des Substratvordrucks sei auf die obigen Ausführungen verwiesen, welche hier in gleicherweise gelten.

Bevorzugt ist es vorgesehen, dass der erste graphische Code ein maschinenlesbarer Code ist, insbesondere ein 2D-Barcode, ein QR-Code oder ein Datamatrix-Code. Es ist weiter möglich, dass der erste graphische Code ein chargenspezifischer Code ist, insbesondere dass beim Auslesen des ersten graphischen Codes eine Chargennummer bereitgestellt wird.

Vorzugsweise wird hierzu zunächst eine Serie von Mehrschichtkörpern in vorzugsweise disjunkte Chargen aufgeteilt. Jedem Mehrschichtkörper einer Charge wird eine chargenspezifische Chargennummer zugeordnet. Innerhalb einer Charge und innerhalb eines Masters können mehrere Seriennummern verwendet werden, indem man den Prägezylinder und/oder das Prägewerkzeug mit unterschiedlichen individuellen Seriennummern ausstattet.

Insbesondere ist daher vorgesehen, dass der Mehrschichtkörper einen zweiten graphischen Code aufweist. Bevorzugt ist, dass der zweite graphische Code ein individueller Code ist, insbesondere ein stückindividueller oder ein serien individueller Code ist, besonders bevorzugt, dass beim Auslesen des zweiten graphischen Codes eine Seriennummer bereitgestellt wird. Der zweite graphische Code ist vorzugsweise offen lesbar. Unter offen lesbar ist zu verstehen, dass er so auf den Mehrschichtkörper aufgebracht ist, dass er mit einem herkömmlichen Lesealgorithmus, der auf ein handelsübliches mobiles Endgerät, bspw. Smartphone, heruntergeladen ist, das eine Kamera aufweist, erfasst wird und die in ihm enthaltene Information, beispielsweise die Seriennummer, ausgelesen werden kann. Offen lesbar kann auch verstanden werden, dass der zweite graphische Code ohne Hilfsmittel durch einen Menschen in seiner Bedeutung erfassbar ist. Dies kann beispielsweise eine Datumsangabe oder eine laufende Seriennummer oder Stücknummerierung sein.

Bei der Chargennummer wie auch der Seriennummer kann es sich um Zahlenfolgen, Buchstabenfolgen, Zeichenfolgen oder um Kombinationen der oben genannten Zeichen handeln. Bei den Chargen- und Seriennummern handelt es sich um eine Information, durch die die Charge bzw. der individuelle Mehrschichtkörper identifiziert werden kann. Es kann sich auch um eine zweidimensionale Zeichen- oder Bildanordnung handeln.

Die chargenspezifischen Chargennummern werden in maschinenlesbaren chargenspezifischen ersten graphischen Codes codiert. Die individuellen Seriennummern werden in individuellen maschinenlesbaren zweiten graphischen Codes codiert. Bei den ersten graphischen Codes und/oder den zweiten graphischen Codes handelt es sich vorzugsweise um herkömmliche maschinenlesbare Codes wie 2D-Barcodes, insbesondere Datamatrixcodes oder QR-Codes. Es kann sich auch um eindimensionale Barcodes handeln, aber auch um Trillcodes, Quickmarkcodes, Shotcodes usw. Allgemein umfassen die maschinenlesbaren graphischen Codes optoelektronisch lesbare Symbole, die aus unterschiedlich breiten Strichen oder Punkte und dazwischen liegenden Lücken mit möglichst hohem Kontrast bestehen.

Es ist jedoch auch möglich, dass in dem zweiten graphischen Code eine URL eines Authentifizierungsservers gespeichert wird. Mit dieser URL kann sich ein Benutzer mit einem Authentifizierungsserver verbinden. Eine solche URL könnte beispielsweise https://www.auth server.com/ lauten, vorzugsweise ist die Seriennummer Teil der URL, beispielsweise https://www.authserver.com/serialnumber/12345, wobei 12345 die Seriennummer ist. So kann sich ein Verbraucher durch das Scannen des maschinenlesbaren zweiten graphischen Codes mit einem Smartphone über einen Internetbrowser mit dem Authentifizierungsserver verbinden.

Insbesondere ist es vorgesehen, dass der erste graphische Code, insbesondere die Chargennummer, und/oder der zweite graphische Code, insbesondere die Seriennummer, in einer Authentifizierungsdatenbank eines Authentifizierungsservers abgelegt werden, insbesondere paarweise in einer Authentifizierungsdatenbank eines Authentifizierungsservers abgelegt werden.

Bevorzugt ist es vorgesehen, dass mit einem mobilen Endgerät das binarisierte zweidimensionale Fouriermuster und/oder der zweite graphische Code erfasst werden und eine datenleitende Verbindung zwischen dem mobilen Endgerät und dem Authentifizierungsserver hergestellt wird und eine Authentifizierungssoftware einen Vergleich der vom mobilen Endgerät erfassten und an den Authentifizierungsserver übermittelten Daten und der in der Authentifizierungsdatenbank abgelegten ausgelesenen ersten graphischen Codes, insbesondere der Chargennummer und/oder des ausgelesenen zweiten graphischen Codes , insbesondere der Seriennummer, ermöglicht.

Besonders bevorzugt ist, dass der zweite graphische Code in Form eines Drucks vor der Replikationsschicht aufgebracht wird, in dem der Druck zumindest teilweise in einem zweiten Bereich auf die Trägerschicht und/oder auf eine Ablöseschicht und/oder auf eine Schutzschicht aufgebracht wird und/oder dass der zweite graphische Code in Form eines Drucks hinter der Replikationsschicht aufgebracht wird, in dem der Druck zumindest teilweise in einem zweiten Bereich auf die Replikationsschicht und/oder eine Metallschicht und/oder eine HRI-Schicht und/oder eine Kleberschicht und/oder eine Grundierung aufgebracht wird.

Beide Anordnungen ermöglichen unterschiedliche optische Effekte. Beispielsweise kann bei Betrachtung von der Trägerschicht bei einem Druck nach dem strukturgebenden Replikationsschritt dem Druck eine Prägestruktur überlagert werden. Dies ist bei Betrachtung von der Trägerschicht nicht möglich, wenn bereits vor dem strukturgebenden Replikationsschritt der Druck durchgeführt wird. Bei Anwendungen, bei denen der Mehrschichtkörper sowohl von der Trägerschicht als auch von der der Trägerschicht abgewandten Seite betrachtet wird, insbesondere in einem Fenster oder einem transparenten Substratbereich, ermöglicht die gezielte Positionierung des Druckes oder der Drucke vor oder von der Trägerschicht betrachtet hinter einer Replikationsschicht so betrachtungsseitig unterschiedliche visuelle Effekte.

Vorzugsweise bieten die beiden oben genannten Anordnungen den Vorteil, dass der Druck sowohl gegen äußere mechanische Einflüsse als auch gegen Manipulationsversuche geschützt ist.

In diesem Druckverfahrensschritt wird vorzugsweise mit einem digitalen Druckverfahren ein offener maschinenlesbarer zweiter graphischer Code mit, vorzugsweise niedriger, Auflösung auf den Mehrschichtkörper gedruckt. Der maschinenlesbare graphische Code kann als Information zumindest eine individuelle Seriennummer enthalten. Unter individuelle Seriennummer ist dabei zu verstehen, dass die Nummer in der Serie von Mehrschichtkörpern nur einmal verwendet wird und somit einzigartig ist. Die Seriennummer ist vorzugsweise aus einem großen Nummernkreis gewählt oder kryptographisch erzeugt, so dass potentielle Fälscher nicht in der Lage sind, eine gültige Seriennummer zu erraten.

Es kann möglich sein, dass der Druck mittels eines digitalen Druckverfahrens erfolgt und aus der Gruppe Tintenstrahldruck, Thermotransferdruck, Laserdruck, Lasergravur gewählt wird.

Es ist auch denkbar, dass der Druck bzw. die Tinte auf eine im Wesentlichen glatte Oberfläche der Replikationsschicht, insbesondere auf eine noch nicht replizierte Replikationsschicht, aufgebracht wird. Hierbei wird die Oberfläche bevorzugt zu einem späteren Zeitpunkt zumindest bereichsweise repliziert.

Die Tinte kann transparent, transluzent, opak, unsichtbar, farbig und/oder farblos ausgebildet sein. Der Druck ist ebenso grundsätzlich auf keine spezielle Ausgestaltung beschränkt. Der Druck kann transparent, transluzent, opak, unsichtbar, farbig und/oder farblos ausgebildet sein.

Ferner ist auch das Bereitstellen von lumineszenter Tinte, sowohl transparenter als auch farbiger lumineszenter Tinte, fluoreszenter Tinte, sowohl transparenter wie auch farbiger fluoreszenter Tinte, phosphoreszenter einschließlich chemolumineszenter Tinte, sowohl transparenter als auch farbiger phosphoreszenter Tinte, und/oder flüssigkristalliner Tinten, insbesondere mit dichroitischen Farbeffekten und/oder lasersensitiven Tinten und/oder Tinten mit Taggants, wodurch das Hinzufügen einer zusätzlichen Maschinenlesbarkeit erreicht werden kann, denkbar.

Es können sowohl lichthärtende, insbesondere UV-härtende Tinten als auch Lösemittel- und/oder wässrige Tinten zur Anwendung kommen.

Wird ein Druck auf eine bereits replizierte Replikationsschicht aufgebracht, so kommt es bevorzugt an dieser Stelle zur Abschwächung der entsprechenden replizierten Struktur. Bei geeigneten Drucklacken und Schichtdicken der Druckschicht kann die replizierte Struktur sogar ausgelöscht oder nahezu ausgelöscht werden, wodurch lokal der optische Effekt der Struktur zerstört wird. Bevorzugt ist die Oberfläche der Druckschicht, welche bei Druckprozess zur Luft hin entsteht, nach der Trocknung der Druckschicht glatt oder auch isotrop matt. Wird also bevorzugt ein transparenter Druck aufgebracht, so ist an dieser Stelle weder die Struktur noch der Druck selber sichtbar bzw. nahezu nicht sichtbar. Wird bevorzugt ein nicht-transparenter Druck aufgebracht so ist an dieser Stelle die Struktur nicht mehr sichtbar. Der Druck erscheint in der entsprechenden Farbgebung. Die Bereiche mit den ausgelöschten Strukturen erscheinen bevorzugt für einen Betrachter und/oder Sensor, nachdem auf die Replikationsschicht eine Metallschicht aufgebracht wurde, als Spiegelflächen oder matte Oberflächen.

Die Dicke der aufgebrachten bzw. gedruckten Tinten-Schicht liegt bevorzugt zwischen $0,1\ \mu m$ und $30\ \mu m$, insbesondere zwischen $0,5\ \mu m$ und $15\ \mu m$, besonders bevorzugt zwischen $0,5\ \mu m$ und $15\ \mu m$ und vorteilhafterweise zwischen $1\ \mu m$ und $8\ \mu m$. Werden Lösemittel- und/oder wässrige Tinten verwendet, dann beträgt die Schichtdicke bevorzugt etwa $0,5\ \mu m$. Werden UV-härtende Tinten verwendet, dann beträgt die Schichtdicke etwa zwischen $1\ \mu m$ und $30\ \mu m$, bevorzugt zwischen $1\ \mu m$ und $15\ \mu m$, besonders bevorzugt zwischen $1\ \mu m$ und $8\ \mu m$.

Es ist ferner auch möglich, dass die Replikationsschicht zusammen mit dem darauf aufgebrachten Druck repliziert wird.

Es ist weiter auch möglich, dass der Druck eine Tinte, bevorzugt UV-härtbare Tinte, aufweist und/oder dass der Druck von einem UV-härtenden Replikationslack übergossen, überschichtet und/oder eingekapselt wird, wodurch insbesondere eine Anvernetzung und/oder Vernetzung stattfindet. Eine Anvernetzung ist eine nicht vollständige, nur teilweise Vernetzung. Insbesondere kann neben der Oberflächenvernetzung auch die Durchhärtung der UV-härtbaren Tinte durch das Übergießen und/oder Einkapseln mit dem UV-härtenden Replikationslack verbessert werden, weil durch die Vernetzung insbesondere dünner UV-härtbarer Schichten störende Inhibierungseffekte, beispielsweise durch Luftsauerstoff, verhindert werden können. Insbesondere kann dies bei dünner als ca. $1,5\ \mu m$ aufgebrachten UV-härtbaren Tinten besonders vorteilhaft sein, da mit abnehmender Schichtdicke der UV-härtbaren Tinte sich Inhibierungseffekte stärker auswirken bzw. eine Oberflächen- und Schichtvernetzung sogar soweit verhindern können, so dass der Druck bzw. die Tinte klebrig bleiben kann und sich z.B. ein bedruckter Mehrschichtkörper nicht als Rolle aufwickeln lässt.

Zur Härtung dünner UV-härtender Schichten sind in der Regel aufwendige und teure Inertisierungsmaßnahmen bei der UV-Härtung notwendig, insbesondere bei der UV-Härtung unter Schutzgasen wie Argon oder Stickstoff. Wird der Druck mit der UV-härtenden Tinte ohne Aufwickeln des Mehrschichtkörpers im gleichen Fertigungsschritt wie die UV-Replikation durchgeführt, können durch das den UV-härtbaren Druck nachgelagerte Überschichten mit dem UV-härtenden Replikationslack diese aufwendigen und teuren Maßnahmen vermieden werden.

Der bei der UV-Replikation zum Einsatz kommende UV-Trocknungsprozess stellt zudem eine zusätzliche und wegen Minimierung der Inhibierung effektive Nachhärtung für den UV-Druck dar. Insbesondere kann nach einem optionalen Pinning (UV-Vorhärten) beim Aufbringen des UV-Druckes die UV-Härtungsanlage der UV-Replikation mitgenutzt werden, ohne dass eine zusätzliche UV-Härtungsanlage für das Aushärten des Drucks selbst notwendig wäre.

Insbesondere kann die Zusammenfassung von dem Druck der UV-härtenden Tinte mit einem direkt nachgelagerten UV-Replikationsprozess dazu führen, dass UV-Inks sehr viel dünner aufgebracht werden können, als dies härtungsbedingt ohne aufwendige Maßnahmen überhaupt möglich wäre.

Insbesondere führt das "Anvernetzen" der UV-härtenden Ink bzw. des UV-härtenden Druckes an die umgebende Matrix des UV-Replizierlackes dazu, dass der Druck materialseitig untrennbar mit der Polymerumgebung verbunden ist. Der Druck stellt dann in vorteilhafter Weise für sich allein keine diskrete Schicht mehr dar. Dies erschwert eine Manipulation zusätzlich.

Insbesondere ist es vorteilhaft, wenn durch die UV-Härtung des UV-härtenden Replikationslacks die UV-härtbare Tinte die Möglichkeit einer Nachvernetzung erfährt, was zu höheren Beständigkeiten der UV-härtenden Tinte führen kann.

Weiterhin vorteilhaft für eine Anwendung von UV-Replikation auf einen Druck ist, insbesondere unabhängig von der stofflichen Zusammensetzung des Druckes, dass mechanische und/oder thermische Belastungen des Druckes insbesondere durch Anpressdrücke oder vor allem durch Temperaturen, wie sie beim thermischen Replizieren auftreten, deutlich reduziert werden.

Ferner ist es auch möglich, dass der Druck auf eine bereits replizierte Oberfläche der Replikationsschicht aufgebracht wird. Dies bedeutet, dass die Replikationsschicht bereits mit einer Prägestruktur versehen ist. Die Tinte wird bevorzugt zumindest bereichsweise auf die strukturierte Oberfläche bzw. auf die Prägestruktur aufgebracht. Bevorzugt erfolgt dabei der Auftrag des Drucks im Register zur Prägestruktur. Idealerweise wird die Tinte derart aufgebracht, dass die Tinte die Prägestrukturen nur teilweise füllt. Eine teilweise Füllung der Strukturen tritt insbesondere dann ein, wenn die letztendlich aufgebrachte Tinten-Schichtdicke geringer ist als die Tiefe der Prägestrukturen des binarisierten zweidimensionalen Fouriermusters. Die Tinte kann weiterhin auch in einem Raster teilflächig so aufgebracht werden, dass die Tinte nur einen Teil der Fläche der Prägestrukturen bedeckt. Die Auflösung des Rasters liegt bevorzugt unterhalb des Auflösungsvermögens des menschlichen Auges, wobei vorzugsweise benachbarte Rasterelemente der Tinte einen gegenseitigen Abstand aufweisen, der in einem Bereich von 5 $\mu$m bis 250 $\mu$m, vorzugsweise von 20 $\mu$m bis 200 $\mu$m, liegt, und/oder wobei eine Linienbreite und/oder ein Punktdurchmesser und/oder ein Einzelelement-Durchmesser Rasterelemente in einem Bereich von 5 $\mu$m bis 250 $\mu$m, vorzugsweise von 20 $\mu$m bis 200 $\mu$m, liegt.

Unter bestimmten Bedingungen kann die Tinte die Prägestrukturen des binarisierten zweidimensionalen Fouriermusters auch vollständig auffüllen, ohne dass optisch eine Auslöschung erfolgt. Dies ist insbesondere dann der Fall, wenn die Tinte reflektive oder hochbrechende Eigenschaften hat und sich in ihrem komplexen Brechungsindex insbesondere um mehr als 0,2 von dem komplexen Brechungsindex der Replikationsschicht unterscheidet. Ein Beispiel für reflektive Tinten sind Tinten mit Metalleffektpigmenten oder Metallflakes. Ein Beispiel für hochbrechende Tinten sind Tinten auf Basis von Flüssigkristallen. Für eine teilweise Füllung sind insbesondere auch makroskopische Strukturen, d.h. insbesondere nicht diffraktive wirksame Strukturen in einer Replikationsschicht geeignet. Dadurch, dass durch den Druck die Prägestruktur des binarisierten zweidimensionalen Fouriermuster optisch nicht ausgelöscht wird, wird sichergestellt, dass sämtliche Informationen im Fouriermuster erhalten bleiben und diese beim Auslesen des Fouriermusters mittels eines mobilen Endgeräts stets erfassbar und auswertbar sind.

Bevorzugt ist es vorgesehen, dass der erste Bereich und der zweite Bereich einander angrenzend oder beabstandet zueinander oder zumindest bereichsweise überlappend zueinander angeordnet sind. Dadurch dass das binarisierte zweidimensionale Fouriermuster im ersten Bereich und der zweite graphische Code mittels Drucks im zweiten Bereich angeordnet sind, sind vielfältige gestalterische Ausführungen denkbar.

Beispielsweise kann das binarisierte zweidimensionale Fouriermuster beabstandet zum zweiten graphischen Code angeordnet sein. Idealerweise sollte der Abstand jedoch so gewählt werden, dass sowohl das binarisierte zweidimensionale Fouriermuster als auch der zweite graphische Code stets zeitgleich, vorzugsweise mit einer Aufnahme, mit einem mobilen Endgerät erfassbar sind. Hierzu ist die Auflösung der benutzten Kamera maßgebend.

Alternativ können das binarisierte zweidimensionale Fouriermuster und der zweite graphische Code sich auch teilweise überlappen. So kann der zweite graphische Code beispielsweise derart angeordnet sein, dass ein Teil des zweiten graphischen Codes von dem binarisierten zweidimensionalen Fouriermusters umgeben ist und ein anderer Teil des zweiten graphischen Codes von einem anderen Hintergrund umgeben ist. Als Hintergrund kommen hier beispielsweise sämtliche Dekorschichten, wie beispielsweise Farbschichten und/oder Metallschichten und/oder Druckschichten in Frage. Es kann auch möglich sein, dass der andere Hintergrund selbst ein weiteres Sicherheitsmerkmal darstellt. Beispielsweise kann es sich dabei um Beugungsstrukturen wie Hologramme oder Kinegram® und/oder um Mattstrukturen und/oder um Blazegitter und/oder um computergenerierte Hologramme (CGH) handeln.

Es ist weiter auch denkbar, dass der zweite Bereich vollständig im ersten Bereich angeordnet ist. Der zweite graphische Code liegt dann innerhalb des binarisierten zweidimensionalen Fouriermusters. Wie oben bereits beschrieben, wird der Druck bzw. die Tinte des zweiten graphischen Codes derart aufgebracht, sodass der Druck bzw. die Tinte die Prägestrukturen des binarisierten zweidimensionalen Fouriermusters nur teilweise auffüllt. Dadurch werden sämtliche Informationen des Fouriermusters erhalten. Eine derartige Anordnung bietet den Vorteil, dass sowohl das binarisierte zweidimensionale Fouriermuster als auch der zweite graphische Code stets mit einer Aufnahme erfasst werden können.

Es ist ferner auch möglich, dass in einem dritten Bereich bzw. in Bereichen, in denen kein binarisiertes zweidimensionales Fouriermuster vorliegt, zusätzliche Prägestrukturen vorgesehen sind. Hierbei kann es sich beispielsweise um Strukturen handeln, einzeln oder in Kombination und/oder in Überlagerung ausgewählt aus: lichtbeugende Mikro- oder Nanostruktur, lichtbrechende Mikrooder Nanostruktur, lichtfokussierende Mikro- oder Nanostruktur, binäre oder kontinuierliche Fresnellinse, binäre oder kontinuierliche Fresnel-Freiformfläche; diffraktive Makrostruktur, refraktive Makrostruktur, insbesondere Linsenstruktur oder Mikroprismenstruktur, Spiegelfläche, Mattstruktur, insbesondere anisotrope Mattstruktur oder isotrope Mattstruktur, computergenerierte Hologrammstrukturen, Blazegitter, Volumenhologramme, Kinegram® oder ähnliches. Dies sorgt für einen optisch ansprechenden Gesamteindruck und/oder für einen zusätzlichen Fälschungsschutz.

Es ist sowohl eine räumliche Trennung des binarisierten zweidimensionalen Fouriermuster und den zusätzlichen Prägestrukturen als auch eine Integration des binarisierten zweidimensionalen Fouriermusters in zumindest ein Designelement der zusätzlichen Prägestrukturen denkbar. Unter räumlicher Trennung ist hier vorzugsweise eine Beabstandung zwischen binarisierten zweidimensionalen Fouriermuster und den zusätzlichen Prägestrukturen zu verstehen. Unter Designelement werden hier vorzugsweise vollständige Motive und auch unvollständige Motive, das heißt Fragmente von Motiven verstanden. Dabei kann ein Motiv insbesondere ausgewählt sein oder eine Kombination sein aus: Bild, Symbol, Logo, Wappen, Flagge, Portrait, alphanumerisches Zeichen. Beispielsweise kann das binarisierte zweidimensionale Fouriermuster in ein Motiv integriert sein, um einen besonders hohen Fälschungsschutz des Mehrschichtkörpers zu erzeugen.

Weiter ist es möglich, dass zumindest bereichsweise oder vollflächig in Blickrichtung eines Betrachters hinter dem zumindest einen ersten Bereich und/oder zweiten Bereich zumindest eine lasierende Farbschicht vollflächig oder partiell angeordnet ist. Ist die lasierende Farbschicht hinter dem ersten Bereich, in dem das binarisierte zweidimensionale Fouriermuster angeordnet ist, und/oder hinter dem zweiten Bereich, in dem der zweite graphische Code angeordnet ist, angeordnet, so ist die Wirkung der lasierenden Farbschicht vorzugsweise nur an den Stellen sichtbar, an denen das binarisierte zweidimensionale Fouriermuster helle Pixel aufweist und/oder der zweite graphische Code helle Pixel, insbesondere weiße oder transparente Pixel, aufweist.

Diese lasierende Farbschicht kann direkt an die Metallschicht angrenzen oder durch eine dielektrische Zwischenschicht von der Metallschicht beabstandet sein. Die zumindest eine lasierende Farbschicht wirkt hierbei als farbiger Hintergrund und damit als optisch kontrastierender Bereich und erzeugt für einen Betrachter einen erfassbaren Farbeindruck in der entsprechenden Färbung der Farbschicht. Zudem wird durch die Verstärkung des Kontrasts zum Hintergrund auch das Erfassen des binarisierten zweidimensionalen Fouriermusters mittels eines mobilen Endgeräts verbessert.

Es ist vorteilhaft, wenn die zumindest eine lasierende Farbschicht, insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, insbesondere im CIELAB-Farbraum einen Gesamtfarbstand dE von 50 bis 270, bevorzugt von 100 bis 270, weiter bevorzugt von 130 bis 270, zu dem ersten Bereich und/oder zu dem zweiten Bereich aufweisen.

Es ist auch vorteilhaft, dass die zumindest eine lasierende Farbschicht, insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, eine hellere Farbe, insbesondere mit einem höheren Helligkeitswert L, und der erste Bereich und/oder zweite Bereich, insbesondere die dunklen Pixel des ersten und/oder zweiten Bereichs, insbesondere mit einem niedrigeren Helligkeitswert L, aufweist. Dadurch kann der Farbeffekt der lasierenden Farbschicht durch die hellen Pixel hindurch wirken, wodurch der Kontrast von den hellen zu den dunklen Pixeln weiter verstärkt wird.

Zur Authentifizierung wird günstiger Weise das eingangserwähnte Authentifizierungsverfahren durchgeführt, welches vorzugsweise mit einem Authentifizierungssystem durchgeführt wird. Das Authentifizierungsverfahren eignet sich zur Durchführung mit einem der oben genannten Mehrschichtkörper oder einer Serie von Mehrschichtkörpern, die nach einem der oben genannten Herstellungsverfahren hergestellt werden.

Das Authentifizierungsverfahren wird erfindungsgemäß mit einem mobilen Endgerät durchgeführt, das eine Kamera aufweist. Bei dem mobilen Endgerät kann es sich um handelsübliche Smartphones handeln und bei der Kamera um eine handelsübliche in Smartphones integrierte Kamera.

Die Bilderfassung durch die Kamera erfolgt dabei typischerweise als RGB-Farbbild mit einer Bilddarstellung in drei Farbkanälen rot ($0 \leq R \leq 255$), grün ($0 \leq G \leq 255$) und blau ($0 \leq B \leq 255$). Für die Auswertung wird das Farbbild in ein Graustufenbild konvertiert, wobei der jeweilige Grauwert des Einzelpixels als gewichtete Summe der Farbkanäle bestimmt werden kann:

$$G = C_R \cdot R + C_G \cdot G + C_B \cdot B$$

Die Koeffizienten $C_R$, $C_G$ und $C_B$ können dabei je nach Sensortyp und verwendetem Umwandlungsalgorithmus unterschiedlich ausfallen.

Bevorzugt verwendet werden die Kombinationen $C_R=1/4$, $C_G=1/2$ und $C_B=1/4$ (Baier Sensor) oder $C_R=C_G=C_B=1/3$ (HSI-Modell).

Unter Kontrast wird in diesem Zusammenhang der nach folgender Formel aus dem maximalen Graustufenwert $I_{max}$ und dem minimalen Graustufenwert $I_{min}$ des binarisierten zweidimensionalen Fouriermusters berechnete Wert K verstanden:

$$K = \frac{I_{max} - I_{min}}{I_{max} + I_{min}}$$

Tests zum Ausleseverhalten haben ergeben, dass bei idealer Beleuchtungssituation ein minimaler Kontrast von K = 0,05 benötigt wird.

Unter Realbedingungen mit wechselnden Beleuchtungsqualitäten wird hingegen für einen robusten Ausleseprozess ein minimaler Kontrast von K = 0,1 bevorzugt.

Es ist insbesondere vorgesehen, dass der Kontrast K im Grauwertbild von den Prägestrukturen im Bereich von 0,1 bis 0,2 liegt. Die beiden Grenzwerte sind in dem genannten Bereich miteingeschlossen.

Der Kontrast des binarisierten zweidimensionalen Fouriermusters, wird wie oben beschrieben, über die durch die Prägestruktur gebildeten hellen Pixel und dunklen Pixel erzeugt.

Durch den generierten Kontrast ist eine einwandfreie Erfassung des ersten graphischen Code des Mehrschichtkörpers möglich.

Insbesondere ist es möglich, dass beim Erfassen des Bildes auch der zweite graphische Code des Mehrschichtkörpers erfasst wird,
das erfasste Bild einem zweiten Lesealgorithmus für den zweiten graphischen Code zugeführt wird und der zweite graphische Code ausgelesen wird und der ausgelesene erste graphische Code und der zweite ausgelesene graphische Code geprüft werden.

Weiter ist es möglich, dass durch das Auslesen des ersten graphischen Codes eine Chargennummer bereitgestellt wird und durch das Auslesen des zweiten graphischen Codes eine Seriennummer bereitgestellt wird, und dass die Chargennummer und die Seriennummer überprüft werden. Dabei wird bevorzugt geprüft, ob die Chargennummer und die Seriennummer und deren Zuordnung zueinander gültig sind.

Zunächst werden chargenspezifische Chargennummern und individuelle Seriennummern als Paare einander zugeordnet und vorzugsweise in einer Datenbank gespeichert. Vorteilhafterweise sind die Seriennummern nicht fortlaufend gebildet, sondern kryptographisch verschlüsselt, so dass sich ein Fälscher eine gültige Seriennummer nicht einfach ausdenken oder erraten kann.

Es ist weiter auch möglich, dass der ausgelesene erste graphische Code, insbesondere die ausgelesene Chargennummer, einem Authentifizierungsserver zugeführt wird und mit auf dem Authentifizierungsserver abgelegten gültigen ersten graphischen Codes, insbesondere Chargennummern, verglichen wird und der ausgelesene erste graphische Code, insbesondere Chargennummer, bei Übereinstimmung mit einem der abgelegten gültigen ersten graphischen Codes, insbesondere Chargennummer, authentifiziert wird.

Ferner ist es möglich, dass der ausgelesene zweite graphische Code, insbesondere die ausgelesene Seriennummer, dem Authentifizierungsserver zugeführt wird und mit auf dem Authentifizierungsserver abgelegten gültigen zweiten graphischen Codes, insbesondere Seriennummern, verglichen wird und der ausgelesene zweite graphische Code, insbesondere Seriennummer, bei Übereinstimmung mit einem der abgelegten gültigen zweiten graphischen Codes, insbesondere Seriennummer, authentifiziert wird.

Besonders bevorzugt ist vorgesehen, dass der Mehrschichtkörper authentifiziert wird, wenn der erste graphische Code authentifiziert wurde oder wenn sowohl der erste graphische Code, insbesondere die Chargennummer, als auch der zweite graphische Code, insbesondere die Seriennummer, authentifiziert wurden.

Bevorzugt wird der Mehrschichtkörper authentifiziert, wenn die Kombination aus ausgelesenem ersten graphischen Code, insbesondere Chargennummer, und ausgelesenem zweiten graphischen Code, insbesondere Seriennummer, authentifiziert wurden.

Hierzu sind sowohl die Seriennummer als auch die Chargennummer in einer Datenbank abgelegt, wobei die Datenbank mit dem Authentifizierungsserver datenleitend verbunden ist. Die Seriennummer und die Chargennummer werden mit in der Datenbank abgelegten Seriennummern und Chargennummern verglichen. Wenn beide Nummern für sich allein und als Paar übereinstimmen, wird der Mehrschichtkörper authentifiziert. Es handelt sich dann um einen originalen Mehrschichtkörper.

Wenn die Chargennummer bzw. der erste graphische Code nicht ausgelesen werden kann, beispielsweise weil es sich um eine unscharfe Fotokopie des binarisierten zweidimensionalen Fouriermusters des Mehrschichtkörpers handelt, wird der Mehrschichtkörper nicht authentifiziert. Wenn die Seriennummer bzw. der zweite graphische Code bereits einmal oder mehrfach abgefragt wurde, wird die Seriennummer bzw. der zweite graphische Code vorzugsweise bei einer nächsten Abfrage nicht mehr authentifiziert. Eine Seriennummer bzw. der zweite graphische Code darf vorzugsweise nur einmal oder eine bestimmte Anzahl oft abgefragt werden und wird dann blockiert oder ungültig gemacht.

Das für das Authentifizierungsverfahren erforderliche Fourierrücktransformationsprogramm, der erste Lesealgorithmus und/oder der zweite Lesealgorithmus können alle oder einige von ihnen auf dem mobilen Endgerät angeordnet sein. Es ist jedoch auch denkbar, dass eines oder mehrere dieser Programme auf einem Authentifizierungsserver abgelegt sind. Auf dem Authentifizierungsserver ist vorzugsweise auch die Datenbank abgelegt, die gültige Chargennummern- und Seriennummernpaare gespeichert hat.

Es wird auch geprüft, ob die Zuordnung von abgelegter Seriennummer und abgelegter Chargennummer mit der Zuordnung von ausgelesener Chargennummer und ausgelesener Seriennummer übereinstimmt. Stimmen die einzelnen Nummern und auch die Zuordnungen überein, wird ein Authentifizierungssignal an das mobile Endgerät abgegeben. Die Verbindung zwischen mobilem Endgerät und Datenbankserver kann über eine herkömmliche, vorzugsweise kabellose Verbindung wie eine WLAN-Verbindung ins Internet, eine 3G /4G /5G-Verbindung ins Internet oder eine ähnliche Verbindung erfolgen.

Insbesondere wird zur Durchführung des Authentifizierungsverfahrens das eingangserwähnte Authentifizierungssystem verwendet.

Es ist ferner möglich, dass das Authentifiziersystem weiter einen zweiten Lesealgorithmus für den zweiten graphischen Code aufweist, der den zweiten graphischen Code ausliest und wobei der ausgelesene erste graphische Code, insbesondere die Chargennummer, und der ausgelesene zweite graphische Code, insbesondere die Seriennummer, mittels des Authentifizierungsservers authentifiziert werden.

Insbesondere kann das Fourierrücktransformationsprogramm auf das mobile Endgerät heruntergeladen sein, es kann aber auch sein, dass das von der Kamera erfasste binarisierte zweidimensionale Fouriermuster mittels der Sendeempfangseinheit an den Authentifizierungsserver übermittelt wird. Ebenso können der erste wie auch der zweite Lesealgorithmus entweder auf dem mobilen Endgerät oder auf dem Datenbankauthentifizierungsserver abgelegt sein. Günstigerweise sind jedoch beide Leseprogramme wie auch das Fourierrücktransformationsprogramm auf dem mobilen Endgerät abgelegt, so dass über die Sendeempfangseinheit des mobilen Endgerätes lediglich die bereits ausgelesenen chargenspezifischen Chargennummern bzw. erster graphischer Codes und die ausgelesenen individuellen Seriennummern bzw. zweiten graphischen Codes an den Authentifizierungsserver übermittelt zu werden brauchen. Die Nummern sind mit deutlich geringerem Datenvolumen übermittelbar als das von der Kamera eingescannte Fouriermuster.

Im Folgenden wird die Erfindung anhand von mehreren Ausführungsbeispielen unter Zuhilfenahme der beiliegenden Zeichnungen beispielhaft erläutert. Die gezeigten Ausführungsbeispiele sind daher nicht einschränkend zu verstehen.

Fig. 1    zeigt eine schematische Darstellung eines Mehrschichtkörpers

Fig. 2    zeigt eine schematische Darstellung eines Mehrschichtkörpers

Fig. 3    zeigt eine schematische Darstellung eines Mehrschichtkörpers

Fig. 4    zeigt eine schematische Darstellung eines Mehrschichtkörpers

Fig. 5    zeigt eine schematische Darstellung eines Mehrschichtkörpers

Fig. 6    zeigt eine schematische Darstellung eines Mehrschichtkörpers

Fig. 7    zeigt eine schematische Darstellung eines Mehrschichtkörpers

Fig. 8    zeigt eine Codierung einer Chargennummer in einem Datamatrixcode als ersten graphischen Code

Fig. 9    zeigt die Positionierung des Datamatrixcodes als ersten graphischen Code in einer Bildvorlage

Fig. 10a    zeigt die Amplitudenfunktion des in die Bildvorlage positionierten ersten graphischen Codes

Fig. 10b    zeigt die Phasenfunktion des in die Bildvorlage positionierten ersten graphischen Codes

Fig. 11a    zeigt das Fouriermuster als Realteil der Fouriertransformation des ersten graphischen Codes in den Fig. 10a und 10b

Fig. 11b    zeigt das Fouriermuster der Fig. 11a in einer 50%igen Binarisierung

Fig. 11c    zeigt das Fouriermuster der Fig. 11a in einer 20%igen Binarisierung

Fig. 12a    zeigt die Amplitude der Fourierrücktransformation des Fouriermusters in Fig. 11a

Fig. 12b    zeigt die Amplitude der Fourierrücktransformation des binarisierten zweidimensionalen Fouriermusters in Fig. 11b

Fig. 12c    zeigt die Amplitude der Fourierrücktransformation des binarisierten zweidimensionalen Fouriermusters in Fig. 11c

Fig. 13a    zeigt die applizierte Transferlage eines Mehrschichtkörpers auf ein Papiersubstrat in der Draufsicht

Fig. 13b    zeigt einen mit der Prägestruktur aufweisenden Nickelshim in einer Mikroskopaufnahme

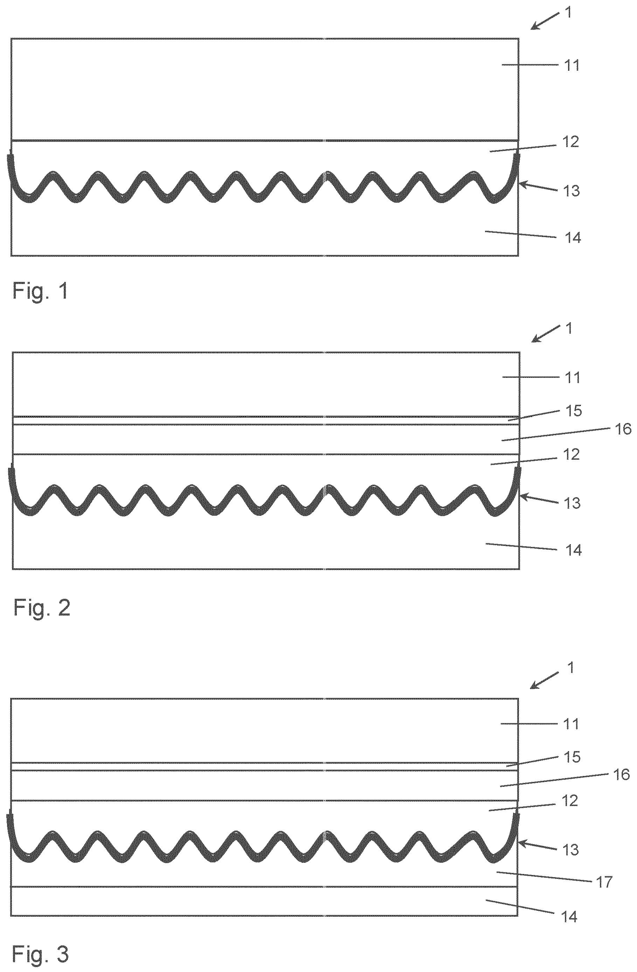

Die Figur 1 zeigt eine schematische Darstellung eines Mehrschichtkörpers 1. Bei dem Mehrschichtkörper 1 kann es sich beispielsweise um eine Laminierfolie oder eine Transferfolie handeln. Es ist auch möglich, dass der Mehrschichtkörper 1 dazu dient, ein Sicherheitsdokument mit zumindest einem fälschungssicheren Sicherheitselement zu versehen.

In der in Fig. 1 gezeigten Darstellung weist der Mehrschichtkörper 1 eine Trägerschicht 11 und eine Replikationsschicht 12 auf. In diese Replikationsschicht 12 ist ein in ein binarisiertes zweidimensionales Fouriermuster 24 fouriertransformierter erster graphischer Code 21 mittels einer Prägestruktur eingebettet. In der Ausgestaltung gemäß Fig. 1 ist die Prägestruktur vollflächig ausgestaltet. Es ist jedoch auch möglich, dass die Prägestruktur zumindest teilweise in einem ersten Bereich in der Replikationsschicht 12 abgeformt ist. Zudem weist der Mehrschichtkörper 1 eine über der Prägestruktur der Replikationsschicht 12 aufgebrachte Metallschicht 13 auf. Dadurch erscheint das binarisierte zweidimensionale Fouriermuster 24 optisch variabel. Dies erhöht maßgeblich den Fälschungsschutz des Fouriermusters. Denn durch herkömmliches Kopieren mittels eines handelsüblichen Kopierers oder der Kombination einer handelsüblichen Kamera und eines handelsüblichen Druckers, kann die optische Variabilität des Fouriermusters nicht erfasst werden.

Die Metallschicht 13 ist bevorzugt einzeln oder als Legierung oder als Eutektikum ausgebildet, ausgewählt aus: Aluminium, Chrom, Gold, Kupfer, Zinn, Indium, Silber. Die Metallschicht 13 wird bevorzugt mittels Bedampfung, insbesondere mittels Vakuumbedampfung hergestellt. Die aufgedampfte Metallschicht 13 kann vollflächig erfolgen und wahlweise vollflächig erhalten bleiben oder aber mit bekannten Demetallisierungsverfahren wie Ätzen, Lift-Off (Waschlack-Verfahren) oder Photolithografie strukturiert werden und dadurch anschließend nur partiell vorliegen. Die Schichtdicke der Metallschicht liegt insbesondere zwischen 10 nm und 500 nm.

Die Metallschicht 13 kann aber auch aus einer gedruckten Schicht bestehen, insbesondere aus einer gedruckten Schicht aus Metallpigmenten in einem Bindemittel. Diese gedruckten Metallpigmente können vollflächig oder partiell aufgebracht sein und/oder in unterschiedlichen Flächenbereichen unterschiedliche Einfärbungen aufweisen. Die Schichtdicke der Metallschicht aus Metallpigmenten liegt insbesondere zwischen 1 $\mu$m und 10 $\mu$m.

Es ist auch möglich, die Metallschicht 13 aus einem Lack mit elektrisch leitfähigen, metallischen Pigmenten herzustellen, insbesondere aufzudrucken und/oder aufzugießen.

Alternativ kann an Stelle der Metallschicht 13 auch eine HRI- oder LRI-Schicht (engl. high refraction index - HRI, low refraction index - LRI) verwendet werden. Eine solche dielektrische HRI- oder LRI-Schicht besteht beispielsweise aus einer aufgedampften Schicht aus einem Metalloxid, Metallsulfid, Titanoxid, etc. Die Schichtdicke einer solchen Schicht beträgt bevorzugt 10 nm bis 500 nm.

Weiter umfasst der Mehrschichtkörper 1 gemäß Fig. 1 auch eine Kleberschicht 14. Diese Kleberschicht 14 stellt nach Applikation die Haftung zum Zielsubstrat her. Alternativ kann es sich hierbei auch um eine Grundierung handeln. In diesem Fall wird dann vor der Applikation eine Kleberschicht 14 entweder auf den Mehrschichtkörper 1 oder auf das Zielsubstrat aufgebracht. Die Grundierung erhöht dabei die Haftung zum Kleber.

Bevorzugt ist die Kleberschicht 14 und/oder die Grundierung 14 aus einem Lack einzeln, in mehreren Teilschichten und/oder als Gemisch ausgebildet, ausgewählt aus: PMMA, PVC, Acrylat, Polyamid, Polyvinylacetate, Kohlenwasserstoffharze, Polyestern, Polyurethane, chlorierte Polyolefine, Polypropylen, Epoxidharze und/oder Polyurethan-Polyolen, insbesondere in Kombination mit inaktivierten Isocyanaten, Füllstoffe, beispielsweise SiO$_2$ und/oder TiO$_2$. Die Kleberschicht 14 bzw. die Grundierung 14 kann außerdem Füllstoffe, wie beispielsweise SiO$_2$ und/oder TiO$_2$, enthalten. Es kann zusätzlich zu einer Kleberschicht auch eine Grundierung vorgesehen sein.

Die Schichtdicke der Kleberschicht 14 und/oder der Grundierung 14 beträgt bevorzugt zwischen 0,5 $\mu$m und 20 $\mu$m, besonders bevorzugt zwischen 1,5 $\mu$m und 5 $\mu$m. Die Kleberschicht 14 und/oder. die Grundierung 14 kann mittels Tiefdruck, Flexodruck, Siebdruck, Inkjetdruck und/oder mittels einer Schlitzdüse hergestellt werden.

Des Weiteren erfüllt die Kleberschicht 14 oder die Grundierung 14 den Zweck, die Vertiefungen der Prägestruktur aufzufüllen. Dadurch wird sichergestellt, dass die Vertiefungen und/oder Erhebungen der Prägestruktur eingekapselt sind und somit geschützt vor äußeren Umwelteinflüssen sind.

Bei einem Zielsubstrat kann es sich beispielsweise um ein Sicherheitsdokument, insbesondere Ausweisdokument oder Pass handeln. Es ist jedoch auch möglich, dass das Zielsubstrat ein Verpackungsmaterial ist. Aber auch Zielsubstrate aus Karton oder Papier sind denkbar.

In Fig. 2 ist eine weitere schematische Darstellung eines Mehrschichtkörpers 1 gezeigt. Der Mehrschichtkörper 1 der Fig. 2 entspricht dabei dem Aufbau des Mehrschichtkörpers 1 gemäß Fig. 1, jedoch mit dem Unterschied, dass zwischen der Trägerschicht 11 und der Replikationsschicht 12 eine Ablöseschicht 15 und eine Schutzschicht 16 angeordnet sind. Die Ablöseschicht 15 kann sowohl partiell wie auch vollflächig vorliegen.

Die Ablöseschicht 15 sorgt insbesondere dafür, dass die Schichten des Mehrschichtkörpers 1 von der Trägerschicht 11 zerstörungsfrei getrennt werden können. Die Ablöseschicht 15 ist bevorzugt aus Wachsen, Polyethylen (PE), Polypropylen (PP), Cellulose-Derivaten und/oder Poly(organo)siloxanen ausgebildet. Vorgenannte Wachse können natürliche Wachse, synthetische Wachse oder Kombinationen davon sein. Vorgenannte Wachse sind beispielsweise Carnauba-Wachse. Vorgenannte Cellulose-Derivate sind beispielsweise Celluloseacetat (CA), Cellulosenitrat (CN), Celluloseacetatbutyrat (CAB) oder Mischungen davon. Vorgenannte Poly(organo)siloxane sind beispielsweise Silicon-Bindemittel, Polysiloxan-Bindemittel oder Mischungen davon. Die Ablöseschicht 15 weist bevorzugt eine Schichtdicke im Bereich von 1 nm bis 500 nm, insbesondere eine Schichtdicke im Bereich von 5 nm bis 250 nm, insbesondere bevorzugt im Bereich von 10 nm bis 250 nm, auf.

Die Ablöseschicht 15 kann mittels bekannten Druckverfahren hergestellt werden. Insbesondere eignet sich hierfür der Tiefdruck, Flexodruck, Siebdruck, Inkjetdruck oder die Aufbringung mittels Schlitzdüse. Die Ablöseschicht 15 kann aber auch durch Bedampfen, physikalische Gasabscheidung (PVD), chemische Gasabscheidung (CVD) und/oder Sputtern ausgebildet werden.

Bei der Schutzschicht 16 handelt es sich bevorzugt um eine thermoplastische Schicht oder eine thermisch härtende Schicht oder eine strahlenhärtende Schicht aus einem Lack, einzeln, in mehreren Teilschichten und/oder als Gemisch ausgewählt aus: PMMA, PVC, Melamin, Acrylate, Polyurethane, Vernetzer, Photoinitiatoren, Additive, Entschäumer, Verlaufsmittel, Benetzungsmittel. Die Schutzschicht kann auch aus einem strahlenhärtenden Dual Cure Lack bestehen. Dieser Dual Cure Lack kann in einem ersten Schritt beim und/oder nach dem Aufbringen in flüssiger Form thermisch vorvernetzt werden. Bevorzugt wird in einem zweiten Schritt, insbesondere nach der Verarbeitung der Mehrschichtfolie, der Dual Cure Lack radikalisch nachvernetzt, insbesondere über energiereiche Strahlung, vorzugsweise UV-Strahlung. Dual Cure Lacke dieser Art können aus verschiedenen Polymeren oder Oligomeren bestehen, die ungesättigte Acrylat-, oder Methacrylat-Gruppen besitzen. Diese funktionellen Gruppen können insbesondere in dem zweiten Schritt radikalisch miteinander vernetzt werden. Zur thermischen Vorvernetzung im ersten Schritt ist von Vorteil, dass bei diesen Polymeren oder Oligomeren auch mindestens zwei oder mehrere Alkoholgruppen vorhanden sind. Diese Alkoholgruppen können mit multifunktionellen Isocyanaten oder Melaminformaldehydharzen vernetzt werden. Als ungesättigte Oligomere oder Polymere kommen bevorzugt verschiedene UV-Rohstoffe wie Epoxyacrylate, Polyetheracrylate, Polyesteracrylate und insbesondere Acrylatacrylate in Frage. Als Isocyanat können sowohl geblockte als auch ungeblockte Vertreter auf TDI (TDI = Toluol-2,4-diisocyanat), HDI (HDI = Hexamethylendiisocyanat) oder IPDI-Basis (IPDI = Isophorondiisocyanat) in Frage kommen. Die Melaminvernetzer können vollveretherte Versionen sein, können Imino-Typen sein oder Benzoguanamin-Vertreter darstellen.

Vorzugsweise weist die Schutzschicht 16 eine Schichtdicke im Bereich von 50 nm bis 30 $\mu$m auf, bevorzugt 1 $\mu$m bis 5 $\mu$m. Die Schutzschicht 16 kann mittels Tiefdruck, Flexodruck, Siebdruck, Inkjetdruck oder mittels einer Schlitzdüse und/oder mittels Bedampfen, insbesondere mittels physikalischer Gasabscheidung (PVD), chemischer Gasabscheidung (CVD) und/oder Sputtern, hergestellt werden.

In Fig. 3 ist eine weitere schematische Darstellung eines Mehrschichtkörpers 1 gezeigt. Dieser Mehrschichtkörper 1 entspricht im Wesentlichen dem Mehrschichtkörper 1 aus Fig. 2, jedoch mit dem Unterschied, dass dieser zusätzlich zumindest eine Ausgleichsschicht 17 aufweist. Diese Ausgleichsschicht 17 kann zwischen der Replikationsschicht 12 und der Kleberschicht 14 bzw. Grundierung 14 oder, wie in Fig. 3 gezeigt, zwischen der Metallschicht 13 und der Kleberschicht 14 bzw. Grundierung 14 angeordnet sein.

Durch die Ausgleichsschicht 17 wird das Auslesen des binarisierten zweidimensionalen Fouriermusters 24 verbessert, wenn der Mehrschichtkörper 1 auf ein Zielsubstrat mit rauem Untergrund aufgebracht ist, beispielsweise ungestrichener Karton. Versuche unter verschieden Lichtbedingungen haben ergeben, dass ohne Ausgleichsschicht 17 das Auslesen des Fouriermusters mit dem Smartphone erschwert wird.

Vorzugsweise wird die Ausgleichsschicht 17 mittels Druckverfahren aufgebracht. Bevorzugt eignet sich hierfür Tiefdruck, Flexodruck, Siebdruck, Inkjetdruck oder mittels Schlitzdüse. Die Ausgleichsschicht 17 kann aber auch durch Bedampfen, physikalische Gasabscheidung (PVD), chemische Gasabscheidung (CVD) und/oder Sputtern ausgebildet werden.

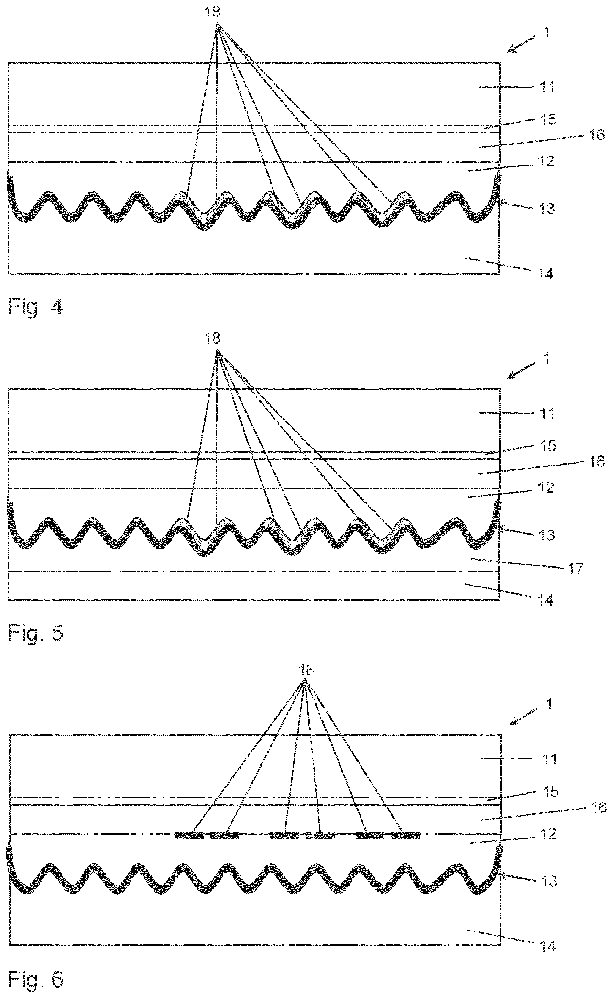

In Fig. 4 ist eine weitere schematische Darstellung eines Mehrschichtkörpers 1 dargestellt. Der Mehrschichtkörper 1 entspricht dabei im Wesentlichen der Ausführung gemäß Fig. 2, jedoch mit dem Unterschied, dass der zweite graphische Code in Form eines Drucks 18 hinter der Replikationsschicht 12 aufgebracht ist, in dem der Druck 18 zumindest teilweise in einem zweiten Bereich auf die Replikationsschicht 12 aufgebracht ist.

Die Prägestruktur des binarisierten zweidimensionalen Fouriermusters 24 ist vollflächig in einem ersten Bereich aufgebracht, wobei sich der erste Bereich über die gesamte Fläche des Mehrschichtkörpers 1 erstreckt. Der zweite Bereich ist überlappend zu dem ersten Bereich angeordnet. Somit überdeckt der Druck 18 im zweiten Bereich das binarisierte zweidimensionale Fouriermuster 24.

Der Druck 18 kann auf eine noch nicht replizierte Replikationsschicht 12 aufgebracht werden. Die Replikationsschicht 12 bzw. der Replikationslack weist insbesondere noch glatte Oberflächen auf. Die Replikation erfolgt dann insbesondere nachdem der Druck 18 bereitgestellt worden ist. Durch die Replikation können die Prägestrukturen des binarisierten zweidimensionalen Fouriermusters 24 sowohl in den Druck 18 als auch in die Replikationsschicht 12 eingebracht werden. Dabei kann z.B. eine chargenspezifische Information in der Replikationsschicht 12 in Form des binarisierten zweidimensionalen Fouriermuster 24 mit einem individualisierten, insbesondere serienspezifischen, Druck 18 in Form des zweiten graphischen Codes kombiniert werden. Eine Replikation in den Druck 18 kann dabei eine zusätzliche Schutzmaßnahme gegen Fälschung darstellen, weil der Druck 18 dadurch noch mehr in das Gesamtsystem der Mehrschichtfolie integriert ist.

Idealerweise wird der Druck 18 auf eine im Wesentlichen glatte Oberfläche der Replikationsschicht 12 bzw. den Replikationslack aufgebracht, wobei die Oberfläche bevorzugt zu einem späteren Zeitpunkt dann zumindest bereichsweise repliziert wird.

Es ist aber auch möglich, dass der Druck 18 auf eine bereits replizierte Replikationsschicht 12 aufgebracht wird, also auch auf eine Replikationsschicht 12, die bereits mit der Prägestruktur des binarisierten zweidimensionalen Fouriermusters 24, versehen ist. Der Druck 18 wird bevorzugt zumindest bereichsweise oder zumindest teilweise in den zweiten Bereichen auf die Prägestruktur bzw. die Replikationsschicht 12 aufgebracht.

Wird der Druck 18 auf eine bereits replizierte Replikationsschicht 12 aufgebracht, dann können hierdurch zumindest Teilbereiche der Prägestrukturen, ausgelöscht werden, wenn der Druck 18 einen zur Replikationsschicht 12 ähnlichen Brechungsindex aufweist, insbesondere mit einem Brechungsindex mit einem Unterschied kleiner 0,2. Dies tritt insbesondere dann auf, wenn der Druck 18 mit einer Schichtdicke aufgebracht wird, die größer als die Tiefe der Strukturen ist. Es ist aber auch möglich, dass die Tinte in geringerer Schichtdicke derart aufgebracht wird, dass der Druck 18 der Topologie der Strukturen folgt und somit insbesondere Teil der Diffraktion wird. Dies ist insbesondere denkbar, wenn eine Lösemittel-Tinte zum Einsatz kommt.

Ferner kann der Druck 18 auch derart aufgebracht werden, dass der Druck 18 die Prägestrukturen auf der Oberfläche der Replikationsschicht 12 nur teilweise füllt. Eine nur teilweise Füllung der Prägestrukturen tritt insbesondere dann ein, wenn die letztendlich aufgebrachte Schichtdicke des Drucks 18 geringer ist als die Tiefe der Replikationsstrukturen 28. Unter bestimmten Bedingungen kann der Druck 18 die Prägestrukturen auch auffüllen, ohne dass optisch eine Auslöschung erfolgt. Dies ist insbesondere dann der Fall, wenn der Druck 18 reflektive oder hochbrechende Eigenschaften hat und sich in ihrem komplexen Brechungsindex insbesondere um mehr als 0,2 von dem komplexen Brechungsindex der Replikationsschicht 12 unterscheidet. Ein Beispiel für reflektive Drucke sind Tinten mit Metalleffektpigmenten oder Metallflakes. Ein Beispiel für hochbrechende Tinten sind Tinten auf Basis von Flüssigkristallen.

Bevorzugt wird der Druck 18 mit einer Schichtdicke auf die Replikationsschicht 12 aufgebracht, die größer als die Tiefe der in die Replikationsschicht 12 einzubringenden Prägestrukturen ist. Insbesondere ist die Schichtdicke des aufgebrachten Drucks 18 im Wesentlichen doppelt so dick wie die Schichtdicke der in die Replikationsschicht 12 einzubringenden Prägestrukturen. Eine zumindest doppelt so große Schichtdicke des Drucks 18 als die Tiefe der in die Replikationsschicht 12 einzubringenden Strukturen ist von Vorteil, wenn erst nach dem Aufbringen der Tinte eine Replikation durchgeführt wird. Dadurch wird verhindert, dass bei der Replikation die eingebrachten Prägestrukturen den aufgebrachten Druck 18 komplett durchdringen. Dadurch wird somit sichergestellt, dass der zweite graphische Code stets maschinell erfassbar ist.

In einem anderen Ausführungsbeispiel wird der Druck 18 bevorzugt mit einer Schichtdicke kleiner als die Tiefe der in die Replikationsschicht 12 einzubringenden Prägestrukturen aufgebracht. Dadurch kann bei der Replikation der Druck 18 über die gesamte Schichtdicke des Drucks 18 hinweg mit den eingebrachten Prägestrukturen durchdrungen werden, womit der Druck 18 durch die durchgehenden Prägestrukturen eine auch von der Trägerschicht 11 sichtbare hochaufgelöste Feinstrukturierung bekommen kann, die die Druckauflösung von herkömmlichen Inkjetdruckern übersteigt und somit ein weiteres Sicherheitsmerkmal darstellt.

Die Replikationsschicht 12 ist bevorzugt aus einem thermoplastischen Lack oder aus einem strahlenhärtenden Lack ausgebildet, einzeln, in mehreren Teilschichten und/oder als Gemisch ausgewählt aus: Acrylat, Cellulose, PMMA, Polyurethane, Isocyanaten. Die Replikationsschicht 12 kann auch aus einem thermoplastischen Lack bestehen. In den Lack wird bevorzugt mittels Hitze und Druck 18 durch Einwirkung eines Prägewerkzeugs eine Prägestruktur abgeformt. Weiter ist es auch möglich, dass die Replikationsschicht 12 von einem UV-vernetzbaren Lack gebildet wird und die Prägestruktur mittels UV-Replikation in die Replikationsschicht 12 abgeformt wird. Dabei wird die Oberflächenstruktur durch Einwirkung eines Prägestempels auf die ungehärtete Replikationsschicht 12 abgeformt und die Replikationsschicht 12 unmittelbar während oder nach der Abformung durch Bestrahlung mit UV-Licht gehärtet. Das Prägewerkzeug kann entweder direkt oder über weitere Produktionsstufen, wie bspw. galvanische Abformung und/oder Lasergravur und/oder mechanische Abformung hergestellt werden oder als Vorlage für ein weiteres Prägewerkzeug dienen.

Die Replikationsschicht 12 kann grundsätzlich mittels den bekannten Druckverfahren hergestellt werden. Insbesondere eignet sich der Tiefdruck, Flexodruck, Siebdruck oder Inkjetdruck. Aber auch die Herstellung mittels Schlitzdüse ist möglich.

Bei der in der Replikationsschicht 12 abgeformten Prägestruktur handelt es sich bevorzugt um Nanostrukturen und/oder Mikrostrukturen, insbesondere diffraktive Gitter, streuende Mattstrukturen, reflektierende Facetten und/oder reflektierende Mikrostrukturen, die das binarisierte zweidimensionale Fouriermuster 24 ausbilden.

Vorzugsweise wird das binarisierte zweidimensionale Fouriermuster 24 aus hellen Pixeln 31 und dunklen Pixeln 32 gebildet, welche innerhalb eines zweidimensionalen Rasters mit einer Auflösung von M x N Pixeln angeordnet werden.

Wenn die hellen Pixel 31 und dunklen Pixel 32 des binarisierten zweidimensionalen Fouriermusters 24 aus diffraktiven Gittern gebildet werden, ist es bevorzugt vorgesehen, dass sich die Gitter der hellen Pixel 31 und der dunklen Pixel 32 durch die Gitterperiode und/oder Gittertiefe und/oder Orientierung unterscheiden. Die Gitter können Linear- oder Kreuz- oder schlangenförmige Gitter sein oder auch komplexere Varianten umfassen. Die Profilform kann sinusförmig, blazeartig oder komplexer sein. Vorzugsweise liegt die Gitterperiode der diffraktiven Gitter in einem Bereich von 200 nm bis 20 $\mu$m, bevorzugt von 250 nm bis 10 $\mu$m. Insbesondere liegt die Gittertiefe der diffraktiven Gitter in einem Bereich von 50 nm bis 2 $\mu$m. Weiter ist es möglich, dass die Gittertiefe der diffraktiven Gitter 5% bis 20% der Gitterperiode beträgt.

Es ist jedoch auch möglich, dass die hellen Pixel 31 und dunklen Pixel 32 durch eine in direkter Reflexion hell bzw. dunkel erscheinende Strukturen gebildet werden, wobei die dunkel erscheinenden Strukturen hochfrequente und tiefe Kreuzgitterstrukturen und/oder Kreuzgitter und/oder Hexagonalgitter und/oder Spiegel umfassen, und/oder wobei die hell erscheinenden Strukturen statische und/oder dynamische Mattstrukturen und/oder Fourier-Hologramme umfassen. Vorzugsweise liegt die Gitterperiode der Kreuzgitter und/oder Hexagonalgitter in einem Bereich von 200 nm bis 450 nm. Weiterhin ist es möglich, dass die Gittertiefe der Kreuzgitter und/oder Hexagonalgitter mehr als 150 nm beträgt. Bevorzugt ist es vorgesehen, dass der mittlere Abstand der Mattstrukturen in einem Bereich von 500 nm bis 5 $\mu$m

liegt und die mittlere Tiefe der Mattstrukturen in einem Bereich von 100 nm bis 2 $\mu$m liegt.

Es ist jedoch auch denkbar, dass die hellen Pixel 31 und dunklen Pixel 32 durch Blazegitter gebildet werden, wobei sich die Orientierung des Blazegitters in den hellen Pixeln 31 und den dunklen Pixeln 32 um mindestens 150° unterscheidet und insbesondere ca. 180° beträgt. Vorzugsweise liegt die Gitterperiode der Blazegitter in einem Bereich von 3 $\mu$m bis 20 $\mu$m und/oder die die Gittertiefe der Blazegitter in einem Bereich von 500 nm bis 2 $\mu$m.

Die Replikationsschicht 12 weist vorzugsweise eine Schichtdicke zwischen 200 nm und 5 $\mu$m auf. Weist die Replikationsschicht 12 eine diffraktive Oberflächenstruktur auf, dann beträgt die Schichtdicke bevorzugt zwischen 0,3 $\mu$m und 6 $\mu$m.

Die Replikation bzw. Strukturierung einer Oberfläche der Replikationsschicht 12 kann auf unterschiedliche Weise erfolgen. Bei thermoplastischen Replikationsschichten 12 erfolgt eine thermische Replikation, insbesondere unter Einwirkung von Hitze und/oder Druck 18. Ein Druck 18, insbesondere der zweite graphische Code, kann zu diesem Zeitpunkt bereits auf die Replikationsschicht 12 aufgebracht worden sein. Der Druck 18 wurde hierbei im Wesentlichen auf eine glatte Oberfläche der Replikationsschicht 12 aufgebracht.

Denkbar ist auch, dass eine UV-Replikation erfolgt. Wenn der Druck 18, insbesondere der zweite graphische Code, mit einer UV-härtbaren Tinte ausgebildet ist, kann man mit dem UV-härtenden Replikationslack den UV-Druck vorteilhaft schützen. An der Oberfläche der UV-härtbaren Tinte befinden sich dabei reaktive Gruppen, die an den UV-härtbaren Replikationslack "anvernetzen". Die Vernetzung und dadurch auch die Beständigkeit speziell dünner Drucke mit UV-härtenden Tinten kann insbesondere verbessert werden, weil durch das Einkapseln im UV-Replikationslack bei der UV-Härtung die dann insbesondere bei dünnen UV-härtenden Schichten wirksamen Inhibierungseffekte minimiert werden. Auch lässt sich durch die beschriebene Einkapselung ohne aufwendige und teure Inertisierungsmaßnahmen eine geringere Schichtdicke des mit der UV-härtenden Tinte ausgebildeten Drucks 18 realisieren. Auch mechanische Belastungen durch Anpressdrücke und/oder thermische Belastungen wie beim thermischen Replizieren können reduziert werden.

Bevorzugt ist die Replikationsschicht 12 mit einer Metallschicht 13 oder einer HRI-Schicht mit hohem Brechungsindex (HRI = High Refractive Index) versehen. Dabei kann die Metallschicht 13 als auch die HRI-Schicht opak, semitransparent oder transparent sein, insbesondere wobei die Transparenz betrachtungswinkelabhängig sein kann.

Wie in Fig. 4 zu sehen ist, überdeckt die Metallschicht 13 vollflächig den Druck 18, insbesondere den zweiten graphischen Code. Da die Betrachtungsrichtung des applizierten Mehrschichtkörper 1 jedoch auf die Replikationsschicht 12 erfolgt, bildet die Metallschicht 13 einen Hintergrund für den Druck 18 bzw. den zweiten graphischen Code aus.

In Fig. 5 ist eine weitere schematische Darstellung eines Mehrschichtkörpers 1 gezeigt. Der Mehrschichtkörper 1 entspricht dabei im Wesentlichen der Ausführung gemäß Fig. 4, jedoch mit dem Unterschied, dass der Mehrschichtkörper 1 nun weiter eine Ausgleichsschicht 17 aufweist. Wie bereits zur Fig. 3 beschrieben, kann diese Ausgleichsschicht 17 zwischen der Replikationsschicht 12 und der Kleberschicht 14 oder, wie in Fig. 5 gezeigt, zwischen der Metallschicht 13 und der Kleberschicht 14 angeordnet sein. Bezüglich der Spezifikationen der Ausgleichsschicht 17 sei auf die Textstellen weiter oben verwiesen.

In Fig. 6 ist eine weitere schematische Darstellung eines Mehrschichtkörpers 1 gezeigt. Dabei entspricht dieser dem Aufbau des Mehrschichtkörpers 1 gemäß Fig. 4, jedoch mit dem Unterschied, dass der Druck 18 bzw. der zweite graphische Code in der Fig. 6 nun vor der Replikationsschicht 12 aufgebracht ist.

Wie in Fig. 6 zu sehen ist, ist der Druck 18 in einem zweiten Bereich zumindest teilweise auf der Schutzschicht 16 aufgebracht, wobei bevorzugt die Schutzschicht 16 vollflächig ausgebildet ist. Man erhält so einen Mehrschichtkörper 1, bei dem zumindest bereichsweise auf der Schutzschicht 16 ein Druck 18 bzw. der zweite graphische Code angeordnet ist. Insbesondere ist der Druck 18 in Blickrichtung unterhalb der Schutzschicht 16 angeordnet und damit auch durch die Schutzschicht 16 vor mechanischen, chemischen und/oder physikalischen Einflüssen geschützt.

In einer alternativen Ausgestaltung kann vorgesehen sein, dass der Druck 18 in einem zweiten Bereich zumindest teilweise auf eine Ablöseschicht 15 aufgebracht ist, insbesondere wobei die Ablöseschicht 15 vollflächig ausgebildet ist. Man erhält somit einen Mehrschichtkörper 1, bei dem zumindest bereichsweise auf der Ablöseschicht 15 zumindest ein Druck 18 bzw. ein zweiter graphischer Code angeordnet ist.

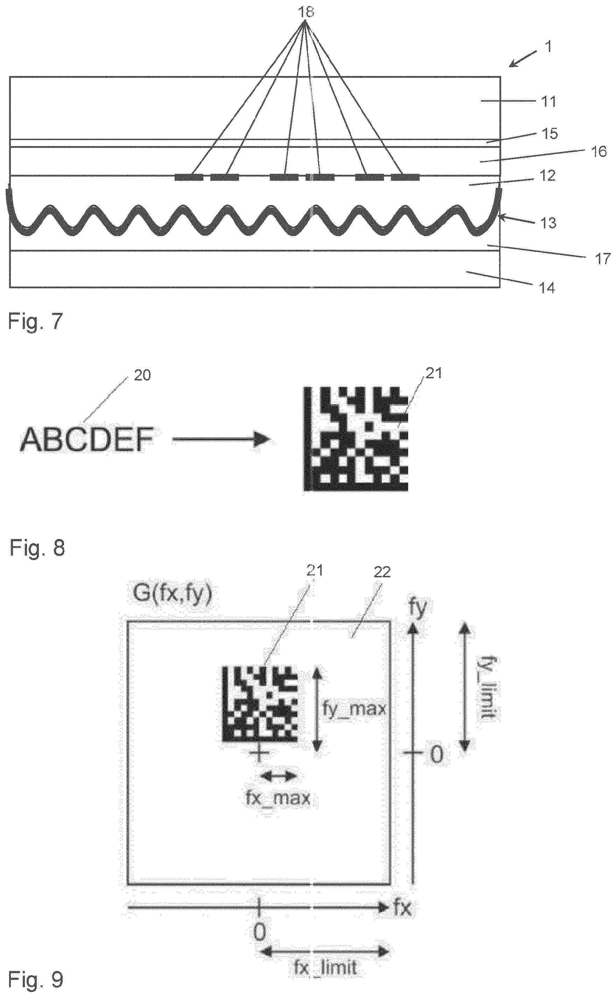

In Fig. 7 ist eine weitere schematische Darstellung eines Mehrschichtkörpers 1 dargestellt. Der Mehrschichtkörper 1 entspricht dabei dem Aufbau des Mehrschichtkörpers 1 aus Fig. 6, jedoch mit dem Unterschied, dass der Mehrschichtkörper 1 gemäß Fig. 7 noch eine Ausgleichsschicht 17 aufweist.

In Fig. 8 ist die Codierung einer Chargennummer 20, in diesem Fall die Abfolge ABCDEF in einen Datamatrixcode als ersten graphischen Code 21 dargestellt. Die Chargennummer 20 kann eine weitgehend beliebige Gestalt haben, es kann sich um eine Buchstaben-, Zeichen-, Zahlen, Bitfolge oder eine Kombination davon handeln. Die Chargennummer 20 wird in einem Datamatrixcode gemäß Fig. 8 codiert. Der Datamatrixcode ist in diesem Ausführungsbeispiel der maschinenlesbare erste graphische Code 21. Der Datamatrixcode ist für jeden Mehrschichtkörper 1 einer Charge gleich.

Die Chargennummer 20 kann auch in jeden anderen maschinenlesbaren Code verschlüsselt werden. Beispielsweise kann die Chargennummer 20 in der Fig. 8 auch in einem QR-Code oder einem Strichcode codiert werden.

Bevorzugt wird anschließend der erste graphische Code 21, hier der Datamatrixcode, in ein zugehöriges Fouriermuster umgewandelt. Dazu wird der erste graphische Code 21 in eine leere Bildvorlage 22 gemäß Fig. 9 positioniert. Die Ebene wird als Frequenzebene aufgefasst. Die Funktion ist in der Frequenzebene definiert, die durch eine fx-Frequenz und eine fy-Frequenz aufgespannt wird. Je nachdem wo in der fx-, fy-Ebene der Datamatrixcode positioniert wird, wird er durch höhere oder geringere Frequenzen gebildet. Die Bildvorlage hat eine Größe von M x N Pixeln.

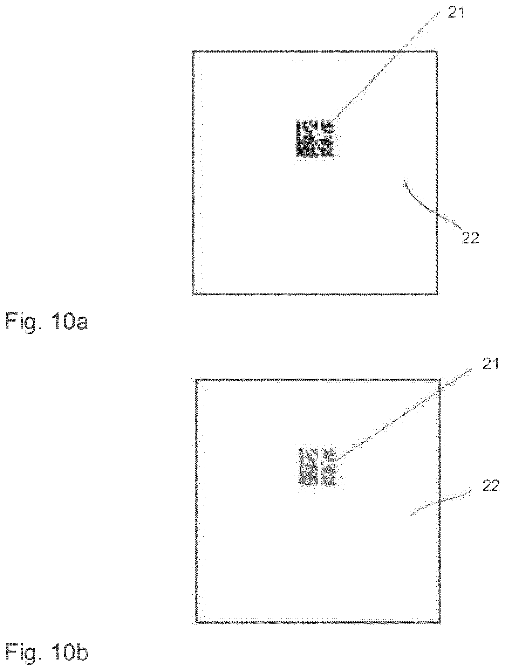

Anschließend wird aus der Anordnung des ersten graphischen Codes 21 in der leeren Bildvorlage eine Funktion G(fx,fy) gebildet. Die Bildvorlage von $M \times N$ Pixeln bildet den Definitionsbereich der Funktion G(fx,fy). Die Funktion G(fx,fy) besteht aus dem Produkt einer Amplitudenfunktion und einer Phasenfunktion. Die Amplitudenfunktion ist für den Datamatrixcode in Fig. 8 in Fig. 10a graphisch dargestellt. Die Amplitudenfunktion beträgt an den weißen Punkten 0 und an den schwarzen Punkten 1 oder einen anderen konstanten Wert. Das heißt, dass die Amplitudenfunktion als eine reellwertige Funktion mit den Funktionswerten 0 und 1 ausgebildet ist.

Die Amplitudenfunktion wird mit einer geeigneten Phasenfunktion $e^{i\varphi}$(fx,fy) multipliziert. Bei der Phasenfunktion $e^{i\varphi}$(fx,fy) kann es sich um eine Zufallsphase handeln, jedoch sind im Stand der Technik auch andere Phasenverteilungen bekannt (Akahori, H., Comparison of deterministic phase coding with random face coding in terms of dynamic range, Appl. Opt. 12, S. 2336-43 (1973)). Bei einer Zufallsphase bietet sich jedoch der wesentliche Vorteil, dass jeder Frequenz in der Bildvorlage eine zufällige Phase zugeordnet wird. Dies erleichtert später das Auslesen des binarisierten zweidimensionalen Fouriermusters 24.

In Fig. 10b ist die hier gewählte Phase $\varphi$(fx,fy) als zufälliger Grauwert des Datamatrixcodes ausgebildet und dargestellt. Die Umrisse der Phase entsprechen dem Datamatrixcode, nur dass die Werte nicht bei 0 (weiß) und 1 (schwarz) liegen, sondern zufällige Grauwerte zwischen weiß und schwarz sind. Innerhalb des Datamatrixcodes wird jedem Pixel ein zufälliger Grauwert zwischen weiß und schwarz zugeordnet. Es findet jetzt eine Zuordnung der Grauwerte zu Zahlen zwischen 0 und $2\pi$ statt. Wenn dieser Grauwert schwarz ist, beträgt die Phase $2\pi$, und wenn der Grauwert weiß ist, beträgt die Phase 0. Die anderen Grauwerte werden je nach Graustufe, einem Winkel zwischen 0 und $2\pi$ zugeordnet. Je schwärzer die Farbe ist, desto höher ist der Winkel. Auf diese Weise kann das zufällige Grauwertbild eindeutig in eine Phasenfunktion umgewandelt werden, und durch Multiplikation der in Fig. 10a graphisch dargestellten Amplitudenfunktion mit der Phasenfunktion in Fig. 10b $e^{i\varphi}$(fx,fy) wird die komplexwertige Funktion G(fx,fy) gebildet.

Die komplexe Funktion G(fx,fy) ist auf einem Definitionsbereich gemäß Fig. 9 von M x N Pixeln, wobei M die Anzahl der Pixel in fx-Richung und N die Anzahl der Pixel in fy-Richtung bezeichnet, ausgebildet. Im Beispiel ist M = N = 512. Die komplexe Funktion G(fx,fy) wird in üblicher Weise fouriertransformiert, wodurch eine neue zweidimensionale komplexe Funktion auf M x N Pixeln, die zweidimensionale Fouriertransformierte g(x,y) entsteht. Alternativ zur Fouriertransformation kann bei diesem Verfahren auch eine inverse Fouriertransformation oder eine Fourierrücktransformation verwendet werden, da sich aufgrund der Symmetriebedingungen zwischen Fouriertransformation und inverser Fouriertransformation keine für die Erfindung relevanten Unterschiede ergeben.

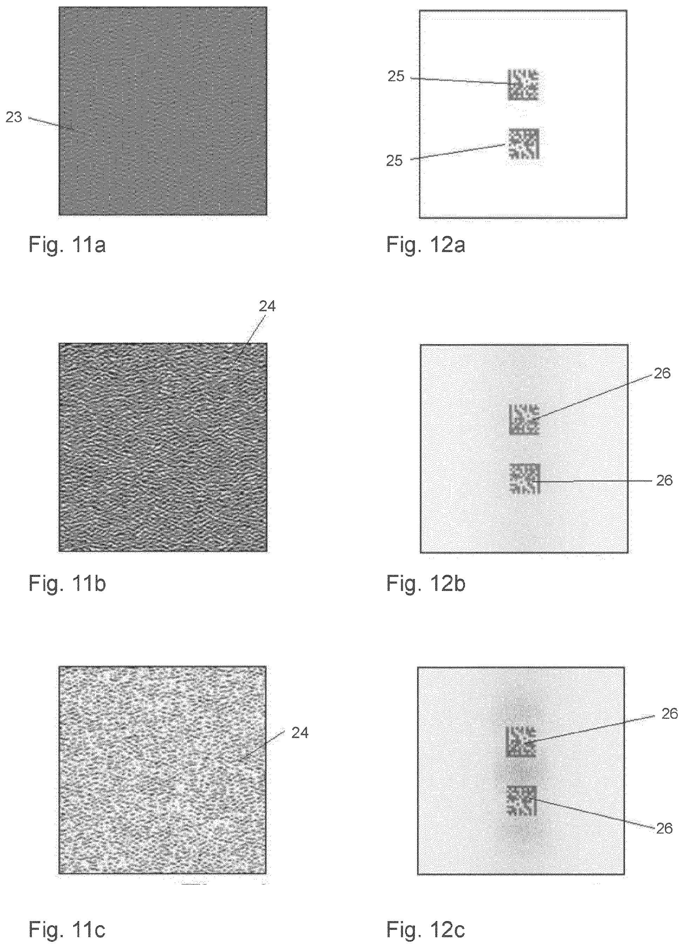

Der Realteil der Fouriertransformation g(x,y) wird hier als zweidimensionales Fouriermuster 23 bezeichnet und ist in der Fig. 11a dargestellt. Das zweidimensionale Fouriermuster 23 ist ebenfalls chargenspezifisch und weist Grauwerte zwischen weiß und schwarz auf.

Fig. 11b und Fig. 11c zeigen sogenannte binarisierte Fouriermuster 24 des Fouriermusters 23 der Fig. 11a. Binarisierung bedeutet, dass jedem Pixel des Fouriermusters 23 in Fig. 11a entweder ein Pixelwert 1 oder ein Pixelwert 0 zugeordnet ist. Schwarz wird als Pixelwert 1 und weiß als Pixelwert 0 verwendet. Es sind jedoch auch zwei unterschiedliche Grauwerte oder auch zwei verschiedene Farbwerte denkbar. Zur Binarisierung sind verschiedene Verfahren aus der Literatur für computergenerierte Hologramme bekannt, z. B. das Detour-Phase Verfahren (Goodman, J. W., Introduction to Fourier Optics, McGraw-Hill (New York) (1996)).

Ein bevorzugtes Verfahren, das auch hier verwendet wird, ist die diskrete Binarisierung des Realteils der Fouriertransformierten g(x,y). Hierbei wird ein Schwellenwert gewählt, und alle Werte des Realteils der Fouriertransformierten g(x,y), die unterhalb des Schwellenwertes liegen, werden dem Pixelwert 0 zugeordnet und alle anderen Werte dem Pixelwert 1. Der Schwellenwert kann so gewählt werden, wie in der Fig. 11b geschehen, dass 50 % den Pixelwert 1 erhalten, also schwarz sind, und 50 % den Pixelwert 0 erhalten, also weiß sind. Fig. 11b stellt ein 50 % binarisiertes zweidimensionales Fouriermuster 24 dar. Der Schwellenwert kann aber auch so gewählt werden, dass jeder gewünschte andere Prozentsatz den Pixelwert 1 bekommt und die restlichen Pixel den Pixelwert 0. Ein 20%ig binarisiertes zweidimensionale Fouriermuster 24 ist in der Fig. 11c dargestellt. Der Prozentsatz der Binarisierung liegt bevorzugt bei weniger als 50%, weiter bevorzugt bei weniger als 20%. Üblicherweise liegt die Binarisierung bei ca. 15%.

In den Fig. 12a, 12b, 12c ist die Amplitude einer Fourierrücktransformation 25, 26 der Fouriermuster 23, 24 in den Fig. 11a, 11b, 11c dargestellt. Es ist erkennbar, dass durch die Verwendung des Realteils als Fouriermuster eine symmetrische sogenannte negative Ordnung entsteht. Es ist weiterhin erkennbar, dass die Binarisierung das Rauschen (grauer Schatten im Hintergrund) erhöht, wobei eine geringe Binarisierung zu einem größeren Rauschen führt. Dennoch verbleibt das rücktransformierte Fouriermuster 25, 26 in den Fig. 12a, 12b, 12c jeweils maschinenlesbar erhalten.

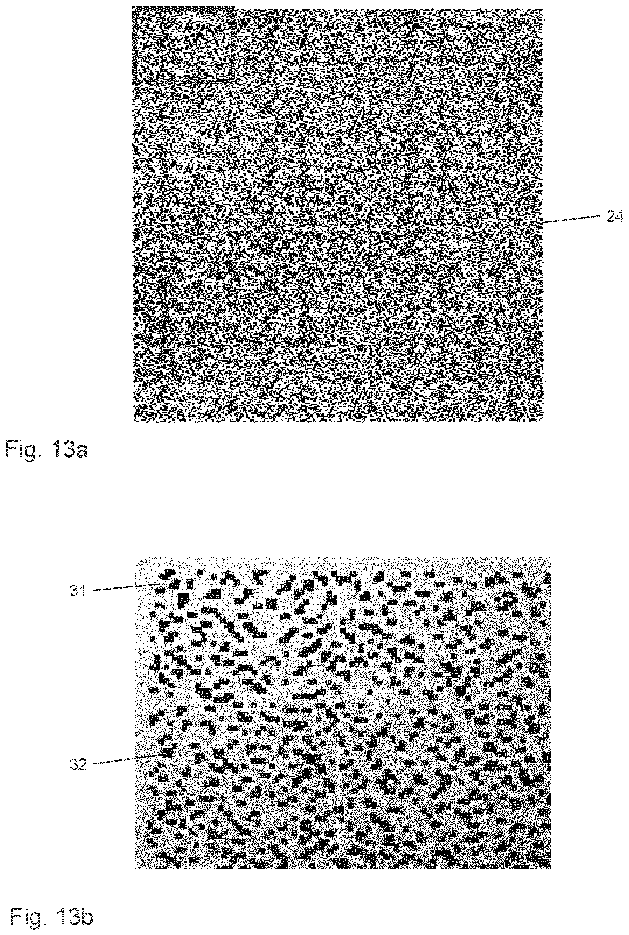

In Fig. 13a ist ein applizierter Mehrschichtkörper 1 auf ein Papiersubstrat bei senkrechter Betrachtung auf die Oberfläche des Mehrschichtkörpers 1 dargestellt. Bei der Fig. 13a handelt es sich um einen Schwarz-Weiß-Scan in einer Scanauflösung von 1200 dpi. Dabei wurde eine Transferlage des Mehrschichtkörpers 1 mittels Kaltprägens vollflächig auf das Papiersubstrat appliziert und anschließend die Trägerschicht 11 abgelöst. Für den Betrachter ist somit ein vollflächiges binarisiertes zweidimensionales Fouriermuster 24 erkennbar, welches optisch variabel ist. Dadurch, dass das binarisierte zweidimensionale Fouriermuster 24 optisch variabel ist, kann es von herkömmlichen Druckern bzw. Kopieren nicht vervielfältigt werden. Somit ist ein zusätzlicher Fälschungsschutz gegeben. Als Papiersubstrat wurde ein GC 2 Chromokarton verwendet.

Der Schichtaufbau des applizierten Mehrschichtkörpers 1 kann dabei dem Aufbau gemäß Fig. 3 entsprechen. Somit umfasst die applizierte Transferlage des Mehrschichtkörpers 1 in der genannten Reihenfolge eine Schutzschicht 16, eine Replikationsschicht 12, eine Metallschicht 13, eine Ausgleichsschicht 17 und eine Grundierung. In die Replikationsschicht 12 ist in einem ersten Bereich, welcher sich vollflächig über die gesamte Oberfläche des Mehrschichtkörpers 1 erstreckt, vollflächig ein binarisiertes zweidimensionales Fouriermuster 24 als Prägestruktur abgeformt.

In Fig. 13b ist eine Detailansicht des Nickelshims, welcher für die Replikation der Prägestruktur in die Replikationsschicht 12 des applizierten Mehrschichtkörpers 1 aus Fig. 13a verwendet wurde, dargestellt. Dabei korrespondiert der in Fig. 13b dargestellte Ausschnitt des Nickelshims mit der linken oberen Ecke des binarisierten zweidimensionalen Fouriermusters 24 aus Fig. 13a. Die Gesamtgröße des Ausschnitts im Original entspricht einer Fläche von ca. 15 mm$^2$. Der Nickelshim kann entweder direkt oder über weitere Produktionsstufen, wie bspw. galvanische Abformung und/oder Lasergravur und/oder mechanische Abformung, als Prägewerkzeug verwendet werden oder als Vorlage für ein Prägewerkzeug dienen.

In Fig. 13b sind die hellen Pixel 31 und die dunklen Pixel 32 der Prägestruktur erkennbar, wobei jeder Pixel eine Fläche von 30 $\mu$m$^2$ aufweist. Die dunklen Pixel 32 sind dabei als diffraktive Gitter ausgestaltet und die hellen Pixel 31 als streuende Mattstruktur. Durch diese Kombination wird ein ausreichend guter Kontrast zwischen den hellen Pixeln 31 und dunklen Pixeln 32 erzielt, welcher später von einem mobilen Endgerät und dessen Kamera erfassbar ist.

Bevorzugt weist ein Pixel in seinen beiden lateralen Richtungen eine Länge von weniger als 45 μm, insbesondere von weniger als 30 μm, auf. Bevorzugt beträgt der Flächeninhalt eines Pixels weniger als 1800 μm$^2$, insbesondere weniger als 900 μm$^2$.

Wie weiter oben bereits beschrieben, wird durch die Auflösung des binarisierten zweidimensionalen Fouriermusters 24 ein Kopierschutz gegenüber herkömmlicher Drucker und Kopierer gewährleistet. Üblicherweise haben handelsübliche Drucker eine Druckauflösung von unter 600 dpi, so dass beim Abfotografieren des binarisierten zweidimensionalen Fouriermusters 24 und erneutem Ausdrucken des fotografierten binarisierten zweidimensionalen Fouriermusters 24 so viel Information verloren geht, dass eine Rekonstruktion des ersten graphischen Codes 21 nicht mehr möglich ist.

Die effektive Auflösung des binarisierten zweidimensionalen Fouriermusters 24 ist bevorzugt jedoch größer als die äquivalente Druckauflösung von herkömmlichen Druckern, insbesondere größer als 600 dpi. Weiter bevorzugt ist es vorgesehen, dass das binarisierte zweidimensionale Fouriermuster eine effektive Auflösung von höchstens 2500 dpi, bevorzugt höchstens 1200 dpi, besonders bevorzugt höchstens 900 dpi, aufweist. Derart niedrige Auflösungen sind erforderlich, damit die Strukturen auch von handelsüblichen Kameras mittels normaler Abbildung überhaupt erfasst werden können.

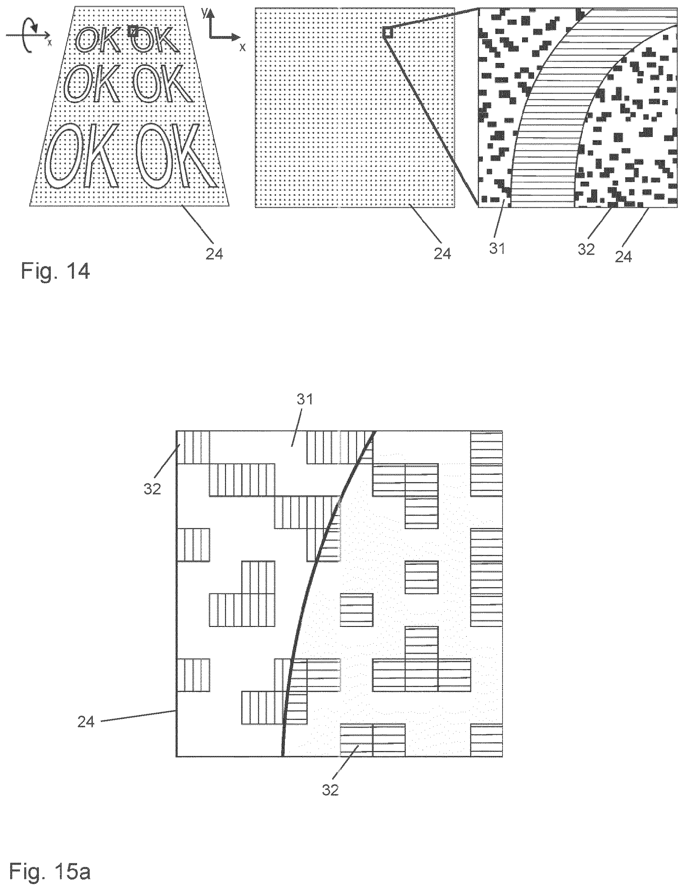

Vorteilhafterweise ist das vollflächig binarisierte zweidimensionale Fouriermuster 24 mit mindestens einer weiteren optisch variablen Nanostruktur und/oder Mikrostruktur kombiniert. Diese weitere optisch variable Nanostruktur und/oder Mikrostruktur kann die Form von Zusatzinformationen wie Logos, Schriftzügen oder Icons einnehmen. Auch feinlinienförmige Designelemente wie Guillochen sind möglich. In Fig. 14 ist dies beispielhaft mit den Buchstaben "OK" dargestellt. In diesem Beispiel ist die Fläche mit den Buchstaben mit einem diffraktiven linearen Gitter versehen, wodurch diese Buchstaben beim Kippen mit einem charakteristischen Regebogeneffekt aufleuchten. Die weiteren optisch variablen Nanostrukturen und/oder Mikrostrukturen reduzieren bevorzugt, in dem Beispiel nach Fig. 14, die Fläche des binarisierten zweidimensionalen Fouriermusters 24. Um ein zuverlässiges Auslesen des binarisierten zweidimensionalen Fouriermusters 24 sicher zu stellen, ist die Flächenbelegung der weiteren optisch variablen Nanostrukturen und/oder Mikrostrukturen bevorzugt kleiner als 50%, weiter bevorzugt kleiner als 30% und insbesondere bevorzugt kleiner als 20%, insbesondere bezogen auf die Gesamtfläche des binarisierten zweidimensionalen Fouriermusters 24.

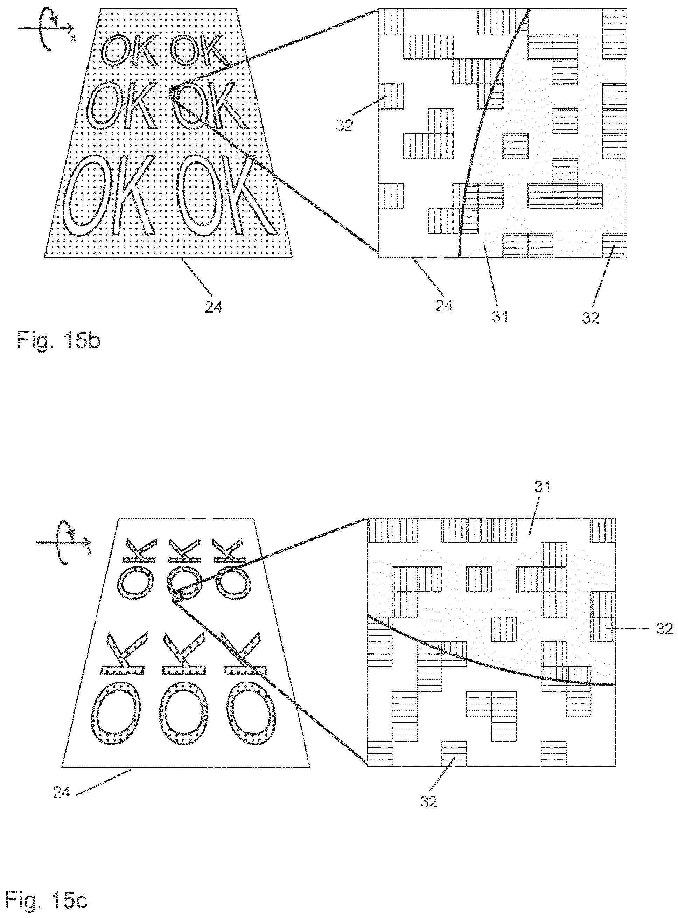

Ferner kann vorgesehen sein, dass Logos, Schriftzüge und/oder Icons derart in dem vollflächig binarisierten zweidimensionalen Fouriermuster 24 integriert sind, sodass diese bei Normalbetrachtung nicht sichtbar sind und erst beim Kippen um die horizontale und/oder vertikale Achse erkennbar werden. Hierdurch ergibt sich anders als bei der in Fig. 14 gezeigten Ausgestaltung kein Flächenverlust für das binarisierte zweidimensionale Fouriermuster 24. Dies ist exemplarisch in den Figuren 15a bis 15c dargestellt. Realisieren lässt sich dies bevorzugt indem die Nanostrukturen und/oder Mikrostrukturen in den dunklen oder hellen Pixeln lokal so verändert werden, dass sie zwar das dunkle oder helle Erscheinungsbild bei Normalbetrachtung zeigen, beim Kippen aber ein anderes optisch variables Verhalten aufweisen als in dem Hintergrund des binarisierten zweidimensionalen Fouriermusters 24.

Beispielsweise können die dunklen Pixel 32 mit einem hochfrequenten Lineargitter mit einer Gitterperiode von 400nm (Subwellenlängengitter) und einer Gittertiefe von 200nm versehen sein. Dieses Lineargitter wird bevorzugt mit Aluminium bedampft und nachträglich in eine oder mehrere Polymerschichten eingebettet. Bevorzugt absorbiert dieses Lineargitter einen Teil des einfallenden sichtbaren Lichts, wodurch diese Pixel in Normalbetrachtung dunkel erscheinen. Bevorzugt wird dieses Lineargitter in den dunklen Pixeln 32 in Teilbereichen des binarisierten zweidimensionalen Fouriermusters 24 mit den Zusatzinformationen - beispielsweise den Buchstaben "OK" aus den Figuren 15a bis 15c- mit einem Azimuthwinkel von 0° und in den dunklen Pixeln 32 in Teilbereichen des binarisierten zweidimensionalen Fouriermusters 24, in welchen keine Zusatzinformationen vorliegen, mit einem Azimuthwinkel von 90° versehen. Bei Normalbetrachtung erscheinen alle mit dem Lineargitter versehenen Pixel dunkel. Figur 15a zeigt dies schematisch anhand eines beispielhaften Ausschnitts mit einem Teilbereich des Buchstaben "O". In dem Teilbereich sind die beiden Lineargitter mit einem Azimuthwinkel von 0° und von 90° durch unterschiedliche Schraffuren in den dunklen Pixeln 32 dargestellt.

Figur 15b zeigt nun das gesamte, vollflächig binarisierte zweidimensionale Fouriermuster 24, in welchem in sechs Bereichen die Buchstaben "OK" durch die Variation des Azimuthwinkels der Lineargitterstruktur in den dunklen Pixeln 32 integriert wurden. Im vorliegenden Beispiel wurde ein Azimuthwinkel von 0° gewählt. Beim starken Abkippen um die horizontale Achse leuchten diese Buchstaben hell auf, da die erste Beugungsordnung der Subwellenlängengitter in das Auge des Betrachters fällt. Die Pixel ohne Zusatzinformation, in welchen ein Lineargitter mit einem Azimuthwinkel von 90° vorliegt, leuchten hingegen nicht auf und erscheinen dunkel. So lässt sich einfach überprüfen ob das binarisierte zweidimensionale Fouriermuster 24 mit den Nanostrukturen und/oder Mikrostrukturen erstellt oder ob es stattdessen gedruckt wurde. Wird nun der Mehrschichtkörper mit dem vollflächig binarisierten, zweidimensionalen Fouriermuster 24 im stark abgekippten Zustand um 90° gedreht, so leuchten die Pixel mit dem Lineargitter (lineares Subwellenlängengitter) ohne Zusatzinformation hell auf und die Lineargitter mit den Zusatzinformationen (Buchstaben "OK") erscheinen dunkel. Dieser Kontrastwechsel ist ein einfach zu überprüfendes Sicherheitsmerkmal.

Dunkel erscheinende Pixel lassen sich bevorzugt noch besser mittels hochfrequenter Kreuzgitter realisieren. Dies liegt daran, dass Lineargitter in erster Linie eine Polarisationsrichtung des einfallenden Lichts absorbieren, die andere Polarisationsrichtung hingegen nicht oder kaum. Kreuzgitter hingegen sind in der Lage beide Polarisationsrichtungen zu absorbieren. Diese hochfrequenten Kreuzgitter absorbieren folglich einfallendes sichtbares Licht noch effizienter als Lineargitter. Im Fall von Kreuzgittern sind diese bevorzugt um 45° im Azimuthwinkel gedreht in Teilbereichen mit der Zusatzinformation im Vergleich zu den Teilbereichen ohne Zusatzinformation. Der Kontrastwechsel zwischen hell aufleuchtenden Buchstaben und dunklem Hintergrund und dunklen Buchstaben auf hellem Hintergrund erfolgt hierbei bei einer Drehung um 45°.

Bezugszeichenliste

1      Mehrschichtkörper

11     Trägerschicht
12     Replikationsschicht
13     Metallschicht
14     Kleberschicht / Grundierung
15     Ablöseschicht
16     Schutzschicht
17     Ausgleichsschicht
18     Druck

20     Chargennummer
21     erster graphischer Code
22     leere Bildvorlage
23     zweidimensionales Fouriermuster
24     binarisiertes zweidimensionales Fouriermuster
25     Fourierrücktransformation des zweidimensionalen Fouriermusters
26     Fourierrücktransformation des binarisierten zweidimensionalen Fouriermusters

31     helle Pixel
32     dunkle Pixel

**Patentansprüche**

1.  Verfahren zur Herstellung eines Mehrschichtkörpers (1), insbesondere Laminierfolie oder Transferfolie, wobei auf eine Trägerschicht (11) eine Replikationsschicht (12) aufgebracht wird, und ein erster graphischer Code (21) in ein zweidimensionale Fouriermuster (23) fouriertransformiert wird und das zweidimensionale Fouriermuster (23) binarisiert wird, um ein binarisiertes zweidimensionales Fouriermuster (24) zu erhalten, und das binarisierte zweidimensionale Fouriermuster (24) an ein Prägewerkzeug überführt wird und mittels des Prägewerkzeugs das binarisierte zweidimensionale Fouriermuster (24) als Prägestruktur zumindest teilweise in einem ersten Bereich in die Replikationsschicht (12) abgeformt wird und dass auf der Replikationsschicht (12) eine Metallschicht (13) und/oder eine HRI-Schicht und/oder eine Grundierung (14) und/oder eine Kleberschicht (14) aufgebracht werden.

2.  Verfahren nach Anspruch 1,
    **dadurch gekennzeichnet,**
    **dass** auf der Trägerschicht (11) eine Ablöseschicht (15) und/oder eine Schutzschicht (16) aufgebracht werden, insbesondere wobei die Ablöseschicht (15) und/oder die Schutzschicht (16) zwischen der Trägerschicht (11) und der Replikationsschicht (12) angeordnet werden.

3.  Verfahren nach einem der vorhergehenden Ansprüche,
    **dadurch gekennzeichnet,**
    **dass** das binarisierte zweidimensionale Fouriermuster (24) als Nanostrukturen und/oder als Mikrostrukturen bereitgestellt wird, insbesondere als diffraktive Gitter, streuende Mattstrukturen, reflektierende Facetten und/oder reflektierende Mikrostrukturen bereitgestellt wird, und/oder dass das binarisierte zweidimensionale Fouriermuster (24) aus hellen Pixeln (31) und dunklen Pixeln (32) gebildet wird, welche innerhalb eines zweidimensionalen Rasters mit einer Auflösung von M x N Pixeln angeordnet werden.

4.  Verfahren nach Anspruch 3,
    **dadurch gekennzeichnet,**

    **dass** die hellen Pixel (31) und dunklen Pixel (32) aus diffraktiven Gittern gebildet werden, wobei sich die Gitter der hellen Pixel (31) und der dunklen Pixel (32) durch die Gitterperiode und/oder Gittertiefe und/oder Orientierung unterscheiden, insbesondere wobei die Gitterperiode der diffraktiven Gitter in einem Bereich von 200 nm bis 20 $\mu$m, bevorzugt von 250 nm bis 10 $\mu$m, liegt und/oder die Gittertiefe der diffraktiven Gitter in einem Bereich von 50 nm bis 2 $\mu$m liegt und/oder die Gittertiefe der diffraktiven Gitter 5% bis 20% der Gitterperiode beträgt.

5.  Verfahren nach Anspruch 3,
    **dadurch gekennzeichnet,**

    **dass** die hellen Pixel (31) und dunklen Pixel (32) durch eine in direkter Reflexion hell bzw. dunkel erscheinende Strukturen gebildet werden, wobei die dunkel erscheinenden Strukturen hochfrequente und tiefe Kreuzgitterstrukturen und/oder Kreuzgitter und/oder Hexagonalgitter und/oder Spiegel umfassen, und/oder wobei die hell erscheinenden Strukturen statische und/oder dynamische Mattstrukturen und/oder Fourier-Hologramme umfassen, insbesondere wobei die Gitterperiode der Kreuzgitter und/oder Hexagonalgitter in einem Bereich von 200 nm bis 450 nm liegt und die Gittertiefe der Kreuzgitter und/oder Hexagonalgitter mehr als 150 nm beträgt, und/oder

**dass** der mittlere Abstand der Mattstrukturen in einem Bereich von 500 nm bis 5 $\mu$m liegt und die mittlere Tiefe der Mattstrukturen in einem Bereich von 100 nm bis 2 $\mu$m liegt.

6. Verfahren nach Anspruch 3 oder 4, **dadurch gekennzeichnet,**

**dass** die hellen Pixel (31) und dunklen Pixel (32) durch Blazegitter gebildet werden, wobei sich die Orientierung des Blazegitters in den hellen Pixeln (31) und den dunklen Pixeln (32) um mindestens 150° unterscheidet und insbesondere ca. 180° beträgt und/oder

**dass** die Gitterperiode der Blazegitter in einem Bereich von 3 $\mu$m bis 20 $\mu$m liegt und/oder die Gittertiefe der Blazegitter in einem Bereich von 500 nm bis 2 $\mu$m liegt.

7. Verfahren nach einem der vorhergehenden Ansprüche, **dadurch gekennzeichnet,** **dass** die Replikationsschicht (12) einen UV-härtbaren Replikationslack aufweist, welcher nach Abformung der Prägestruktur mittels UV-Strahlung vorgehärtet oder vollständig ausgehärtet wird, insbesondere wobei, vorzugsweise nach Aushärtung des Replikationslack, zumindest teilweise oder vollflächig eine Metallschicht (13) auf die Replikationsschicht (12) aufgebracht wird.

8. Verfahren nach einem der vorhergehenden Ansprüche, **dadurch gekennzeichnet,**

**dass** der erste graphische Code (21) ein maschinenlesbarer Code ist, insbesondere ein 2D-Barcode, ein QR-Code oder ein Datamatrix-Code und/oder

**dass** der erste graphische Code (21) ein chargenspezifischer Code ist, insbesondere dass beim Auslesen des ersten graphischen Codes (21) eine Chargennummer (20) bereitgestellt wird.

9. Verfahren nach einem der vorhergehenden Ansprüche, **dadurch gekennzeichnet,**

**dass** ein zweiter graphischer Code in Form eines Drucks (18) vor der Replikationsschicht (12) aufgebracht wird, in dem der Druck (18) zumindest teilweise in einem zweiten Bereich auf die Trägerschicht (11) und/oder auf eine Ablöseschicht (15) und/oder auf eine Schutzschicht (16) aufgebracht wird und/oder,

**dass** der zweite graphische Code in Form eines Drucks (18) hinter der Replikationsschicht (12) aufgebracht wird, in dem der Druck (18) zumindest teilweise in einem zweiten Bereich auf die Replikationsschicht (12) und/oder eine Metallschicht (13) und/oder eine HRI-Schicht und/oder eine Kleberschicht (14) und/oder eine Grundierung (14) aufgebracht wird, insbesondere wobei der Druck (18) mittels eines digitalen Druckverfahrens erfolgt und aus der Gruppe Tintenstrahldruck, Thermotransferdruck, Laserdruck, Lasergravur gewählt wird; und/oder

**dass** der Druck (18) eine Tinte, bevorzugt UV-härtbare Tinte, aufweist und/oder dass der Druck (18) von einem UV-härtenden Replikationslack übergossen, überschichtet und/oder eingekapselt wird, wodurch insbesondere eine Anvernetzung und/oder Vernetzung stattfindet.

10. Verfahren nach Anspruch 9, **dadurch gekennzeichnet,**

**dass** das Aufbringen der Tinte, insbesondere UV-härtenden Tinte, bzw. das Bereitstellen des Drucks (18) im gleichen Fertigungsschritt wie die UV-Replikation durchgeführt wird und/oder

**dass** die Tinte und der UV-härtende Replikationslack zusammen gehärtet werden und/oder dass durch die UV-Härtung des UV härtenden Replikationslack die Tinte, insbesondere die UV-härtbare Tinte eine Nachvernetzung erfährt und/oder

**dass** die Tinte auf eine im Wesentlichen glatte Oberfläche der Replikationsschicht (12), insbesondere auf eine noch nicht replizierte Replikationsschicht (12), aufgebracht wird.

11. Verfahren nach Anspruch 9 oder 10, **dadurch gekennzeichnet,**

**dass** die Replikationsschicht (12) zusammen mit dem darauf aufgebrachten Druck (18) repliziert wird und/oder

**dass** der Druck (18) auf eine bereits replizierte Oberfläche der Replikationsschicht (12) (18, 24) aufgebracht wird.

12. Verfahren nach einem der Ansprüche 9 bis 11, **dadurch gekennzeichnet,**

**dass** der zweite graphische Code ein maschinenlesbarer Code ist, insbesondere ein 2D-Barcode, ein QR-Code oder ein Datamatrix-Code und/oder

**dass** der zweite graphische Code ein individueller Code ist, insbesondere ein stückindividueller oder ein serien individueller Code ist, besonders bevorzugt, dass beim Auslesen des zweiten graphischen Codes eine Seriennummer bereitgestellt wird, und/oder

**dass** in dem zweiten graphischen Code eine URL eines Authentifizierungsservers gespeichert wird.

13. Verfahren nach einem der Ansprüche 9 bis 12, **dadurch gekennzeichnet,**

**dass** der erste Bereich und der zweite Bereich einander angrenzend oder beabstandet zueinander oder zumindest bereichsweise überlappend zueinander angeordnet werden, und/oder

**dass** weiter zumindest eine Ausgleichsschicht (17) aufgebracht wird, welche vorzugsweise zwischen der Replikationsschicht (12) und der Kleberschicht (14) bzw. Grundierung (14) oder zwischen der Metallschicht (13) und der Kleberschicht (14) bzw. Grundierung (14) angeordnet wird.

14. Verfahren nach einem der Ansprüche 9 bis 13, **dadurch gekennzeichnet,**

**dass** der erste graphische Code (21), insbesondere die Chargennummer (20), und/oder der zweite graphische Code, insbesondere die Seriennummer, in einer Authentifizierungsdatenbank eines Authentifizierungsservers abgelegt werden, insbesondere paarweise in einer Authentifizierungsdatenbank eines Authentifizierungsservers abgelegt werden, insbesondere wobei

mit einem mobilen Endgerät das binarisierte zweidimensionale Fouriermuster (24) und/oder der zweite graphische Code erfasst werden und eine datenleitende Verbindung zwischen dem mobilen Endgerät und dem Authentifizierungsserver hergestellt wird und eine Authentifizierungssoftware einen Vergleich der vom mobilen Endgerät erfassten und an den Authentifizierungsserver übermittelten Daten und der in der Authentifizierungsdatenbank abgelegten ausgelesenen ersten graphischen Codes (21), insbesondere der Chargennummer (20) und/oder des ausgelesenen zweiten graphischen Codes , insbesondere der Seriennummer, ermöglicht.

15. Verfahren nach einem der vorhergehenden Ansprüche,

**dadurch gekennzeichnet,**

**dass** das binarisierte zweidimensionale Fouriermuster mit einer effektiven Auflösung von höchstens 2500 dpi, bevorzugt höchstens 1200 dpi, besonders bevorzugt höchstens 900 dpi, abgeformt wird.

16. Mehrschichtkörper (1), insbesondere Laminierfolie oder Transferfolie, vorzugsweise hergestellt nach einem der Ansprüche 1 bis 15, **dadurch gekennzeichnet,**

**dass** der Mehrschichtkörper (1) eine Trägerschicht (11) und eine darauf angeordnete Replikationsschicht (12) aufweist, wobei ein in ein binarisiertes zweidimensionales Fouriermuster (24) fouriertransformierter eingebetteter erster graphischer Code (21) als Prägestruktur zumindest teilweise in einem ersten Bereich in der Replikationsschicht (12) abgeformt ist und dass auf der Replikationsschicht (12) eine Metallschicht (13) und/oder eine HRI-Schicht und/oder eine Grundierung (14) und/oder eine Kleberschicht (14) angeordnet sind.

17. Mehrschichtkörper (1) nach Anspruch 16, **dadurch gekennzeichnet,** **dass** zwischen der Trägerschicht (11) und der Replikationsschicht (12) eine Ablöseschicht (15) und/oder eine Schutzschicht (16) angeordnet sind.

18. Mehrschichtkörper (1) nach Anspruch 16 oder 17, **dadurch gekennzeichnet,**

**dass** das binarisierte zweidimensionale Fouriermuster (24) als Nanostrukturen und/oder Mikrostrukturen in die Replikationsschicht (12) abgeformt ist, insbesondere als diffraktive Gitter, streuende Mattstrukturen, reflektierende Facetten und/oder reflektierende Mikrostrukturen in die Replikationsschicht (12) abgeformt ist und/oder

**dass** das binarisierte zweidimensionale Fouriermuster (24) aus hellen Pixeln (31) und dunklen Pixeln (32) gebildet ist, welche innerhalb eines zweidimensionalen Rasters mit einer Auflösung von M x N Pixeln angeordnet sind.

19. Mehrschichtkörper (1) nach Anspruch 18, **dadurch gekennzeichnet,**

**dass** die hellen Pixeln (31) und dunklen Pixel (32) aus diffraktiven Gittern gebildet sind, wobei sich die Gitter der hellen Pixel (31) und der dunklen Pixel (32) durch die Gitterperiode und/oder Gittertiefe und/oder Orientierung unterscheiden, insbesondere wobei die Gitterperiode der diffraktiven Gitter in einem Bereich von 200 nm bis 20 $\mu$m, bevorzugt von 250 nm bis 10 $\mu$m, liegt und/oder die Gittertiefe der diffraktiven Gitter in einem Bereich von 50 nm bis 2 $\mu$m liegt und/oder die Gittertiefe der diffraktiven Gitter 5% bis 20% der Gitterperiode beträgt.

20. Mehrschichtkörper (1) nach Anspruch 18,
**dadurch gekennzeichnet,**

**dass** die hellen Pixel (31) und dunklen Pixel (32) durch in direkter Reflexion hell bzw. dunkel erscheinende Strukturen gebildet sind, wobei die dunkel erscheinenden Strukturen hochfrequente und tiefe Kreuzgitterstrukturen und/oder Kreuzgitter und/oder Hexagonalgitter und/oder Spiegel umfassen, und/oder wobei die hell erscheinenden Strukturen statische und/oder dynamische Mattstrukturen und/oder Fourier-Hologramme umfassen, insbesondere wobei
**dass** die Gitterperiode der Kreuzgitter und/oder Hexagonalgitter in einem Bereich von 200 nm bis 450 nm liegt und die Gittertiefe der Kreuzgitter und/oder Hexagonalgitter mehr als 150 nm beträgt und/oder dass der mittlere Abstand der Mattstrukturen in einem Bereich von 500 nm bis 5 $\mu$m liegt und die mittlere Tiefe der Mattstrukturen in einem Bereich von 100 nm bis 2 $\mu$m liegt.

21. Mehrschichtkörper (1) nach Anspruch 18 oder 19,
**dadurch gekennzeichnet,**

**dass** die hellen Pixel (31) und dunklen Pixel (32) durch Blazegitter gebildet sind, wobei sich die Orientierung des Blazegitters in den hellen Pixeln (31) und den dunklen Pixeln (32) um mindestens 150° unterscheidet und insbesondere ca. 180° beträgt, insbesondere wobei
die Gitterperiode der Blazegitter in einem Bereich von 3 $\mu$m bis 20 $\mu$m liegt und/oder die Gittertiefe der Blazegitter in einem Bereich von 500 nm bis 2 $\mu$m liegt.

22. Mehrschichtkörper nach einem der Ansprüche 16 bis 21,
**dadurch gekennzeichnet,**

**dass** der erste graphische Code (21) ein maschinenlesbarer Code ist, insbesondere ein 2D-Barcode, ein QR-Code oder ein Datamatrix-Code und/oder
**dass** der erste graphische Code (21) ein chargenspezifischer Code ist, insbesondere welcher beim Auslesen eine Chargennummer (20) bereitstellt.

23. Mehrschichtkörper (1) nach einem der Ansprüche 16 bis 22,

**dadurch gekennzeichnet,**

**dass** ein zweiter graphischer Code in Form eines Drucks (18) vor der Replikationsschicht (12) aufgebracht ist, in dem der Druck (18) zumindest teilweise in einem zweiten Bereich auf die Trägerschicht (11) und/oder auf eine Ablöseschicht (15) und/oder auf eine Schutzschicht (16) aufgebracht ist und/oder,
**dass** der zweite graphische Code in Form eines Drucks (18) hinter der Replikationsschicht (12) aufgebracht ist, in dem der Druck (18) zumindest teilweise in einem zweiten Bereich auf die Replikationsschicht (12) und/oder eine Metallschicht (13) und/oder eine HRI-Schicht und/oder eine Kleberschicht (14) und/oder eine Grundierung (14) aufgebracht ist, und/oder dass der zweite graphische Code ein maschinenlesbarer Code ist, insbesondere ein 2D-Barcode, ein QR-Code oder ein Datamatrix-Code, und/oder
**dass** der zweite graphische Code ein individueller Code ist, insbesondere ein stückindividueller oder ein serienindividueller Code ist.

24. Mehrschichtkörper (1) nach Anspruch 23,
**dadurch gekennzeichnet,**

**dass** der erste Bereich und der zweite Bereich einander angrenzend oder beabstandet zueinander oder zumindest bereichsweise überlappend zueinander angeordnet sind; und/oder
**dass** der Mehrschichtkörper (1) zumindest eine Ausgleichsschicht (17) aufweist, welche vorzugsweise zwischen der Replikationsschicht (12) und der Kleberschicht (14) oder zwischen der Metallschicht (13) und der Kleberschicht (14) angeordnet ist.

25. Mehrschichtkörper nach einem der Ansprüche 16 bis 24,
**dadurch gekennzeichnet,**
**dass** das binarisierten zweidimensionalen Fouriermuster eine effektive Auflösung von höchstens 2500 dpi, bevorzugt höchstens 1200 dpi, besonders bevorzugt höchstens 900 dpi, aufweist.

26. Verfahren zur Authentifizierung eines Mehrschichtkörpers (1) nach einem der Ansprüche 16 bis 25, hergestellt mit einem Verfahren nach den Ansprüchen 1 bis 15, mit einem Authentifizierungssystem,

indem ein Bild eines binarisierten zweidimensionalen Fouriermusters (24) des Mehrschichtkörpers (1) mit einer Kamera eines mobilen Endgerätes erfasst wird,
das erfasste Bild fourierrücktransformiert wird und
das fourierrücktransformierte Bild einem ersten Lesealgorithmus für einen ersten graphischen Code (21) zugeführt wird und der erste graphische Code (21) ausgelesen wird und der erste graphische Code (21) geprüft wird.

27. Verfahren nach Anspruch 26,
**dadurch gekennzeichnet,**

**dass** beim Erfassen des Bildes auch ein zweiter graphischer Code des Mehrschichtkörpers (1) erfasst wird, das erfasste Bild einem zweiten Lesealgorithmus für den zweiten graphischen Code zugeführt wird und der zweite graphische Code ausgelesen wird und der ausgelesene erste graphische Code (21) und der zweite ausgelesene graphische Code geprüft werden; und/oder dass durch das Auslesen des ersten graphischen Codes (21) eine Chargennummer (20) bereitgestellt wird und durch das Auslesen des zweiten graphischen Codes eine Seriennummer bereitgestellt wird, und dass die Chargennummer (20) und die Seriennummer überprüft werden; und/oder

**dass** der ausgelesene erste graphische Code (21), insbesondere die ausgelesene Chargennummer (20), einem Authentifizierungsserver zugeführt wird und mit auf dem Authentifizierungsserver abgelegten gültigen ersten graphischen Codes (21), insbesondere Chargennummern (20), verglichen wird und der ausgelesene erste graphische Code (21), insbesondere Chargennummer (20), bei Übereinstimmung mit einem der abgelegten gültigen ersten graphischen Codes (21), insbesondere Chargennummer (20), authentifiziert wird; und/oder

**dass** der ausgelesene zweite graphische Code, insbesondere die ausgelesene Seriennummer, dem Authentifizierungsserver zugeführt wird und mit auf dem Authentifizierungsserver abgelegten gültigen zweiten graphischen Codes, insbesondere Seriennummern, verglichen wird und der ausgelesene zweite graphische Code, insbesondere Seriennummer, bei Übereinstimmung mit einem der abgelegten gültigen zweiten graphischen Codes, insbesondere Seriennummer, authentifiziert wird.

28. Verfahren nach Anspruch 26 oder 27,
**dadurch gekennzeichnet,**

**dass** der Mehrschichtkörper (1) authentifiziert wird, wenn der erste graphische Code (21) authentifiziert wurde oder wenn sowohl der erste graphische Code (21), insbesondere die Chargennummer (20), als auch der zweite graphische Code, insbesondere die Seriennummer, authentifiziert wurden; und/oder

**dass** der Mehrschichtkörper (1) authentifiziert wird, wenn die Kombination aus ausgelesenem ersten graphischen Code (21), insbesondere Chargennummer (20), und ausgelesenem zweiten graphischen Code, insbesondere Seriennummer, authentifiziert wurden.

29. Authentifizierungssystem zum Authentifizieren eines Mehrschichtkörpers (1) nach einem der Ansprüche 16 bis 25, hergestellt mit einem Verfahren nach einem der Ansprüche 1 bis 15,

- mit einem mobilen Endgerät mit einer Kamera zur Erfassung des Bildes des binarisierten zweidimensionalen Fouriermusters (24) des fälschungssicheren Mehrschichtkörpers (1) und einer Sendeempfangseinheit, mit der Daten des von der Kamera erfassten Mehrschichtkörpers (1) an einen Authentifizierungsserver übermittelbar sind,
- einem Fourierrücktransformationsprogramm, mit dem das binarisierte zweidimensionale Fouriermuster (24) fourierrücktransformierbar ist,
- einem ersten Lesealgorithmus für den ersten graphischen Code (21), der aus dem fourierrücktransformierten Bild ausgelesen wird,
- mit einem Authentifizierungsserver, der mit dem mobilen Endgerät datenleitend in Verbindung steht und auf dem Mehrschichtkörper (1) abgelegter ausgelesener erster graphischer Code (21), insbesondere die Chargennummer (20), abgelegt sind und auf dem der vom mobilen Endgerät übermittelte ausgelesene erste graphische Code (21), insbesondere Chargennummer (20), authentifizierbar ist und mit dem ein Authentifizierungssignal an das mobile Endgerät abgebbar ist.

## Claims

1. Method for producing a multilayer body (1), in particular a laminating film or transfer film, wherein a replication layer (12) is applied to a carrier layer (11), and
a first graphic code (21) is Fourier-transformed into a two-dimensional Fourier pattern (23) and the two-dimensional Fourier pattern (23) is binarised in order to obtain a binarised two-dimensional Fourier pattern (24), and the binarised two-dimensional Fourier pattern (24) is transferred to an embossing tool and, by means of the embossing tool, the binarised two-dimensional Fourier pattern (24) is moulded, as an embossed structure, into the replication layer (12) at least partially in a first region, and a metal layer (13) and/or an HRI layer and/or a primer (14) and/or an adhesive layer (14) are applied to the replication layer (12).

2. Method according to Claim 1, **characterised**
   **in that** a detachment layer (15) and/or a protective layer (16) are applied to the carrier layer (11), in particular wherein the detachment layer (15) and/or the protective layer (16) are arranged between the carrier layer (11) and the replication layer (12).

3. Method according to one of the preceding claims, **characterised**
   **in that** the binarised two-dimensional Fourier pattern (24) is provided as nanostructures and/or as microstructures, in particular as diffractive gratings, scattering matte structures, reflective facets and/or reflective microstructures; and/or in that the binarised two-dimensional Fourier pattern (24) is formed from light pixels (31) and dark pixels (32) which are arranged within a two-dimensional grid with a resolution of M x N pixels.

4. Method according to Claim 3, **characterised**

   **in that** the light pixels (31) and dark pixels (32) are formed from diffractive gratings, wherein the gratings of the light pixels (31) and the dark pixels (32) differ in the grating period and/or grating depth and/or orientation, in particular wherein
   the grating period of the diffractive gratings is in a range from 200 nm to 20 $\mu$m, preferably from 250 nm to 10 $\mu$m, and/or the grating depth of the diffractive gratings is in a range from 50 nm to 2 $\mu$m and/or the grating depth of the diffractive gratings is 5% to 20% of the grating period.

5. Method according to Claim 3, **characterised**

   **in that** the light pixels (31) and dark pixels (32) are formed by structures which appear light or dark in direct reflection, wherein the structures which appear dark comprise high-frequency and deep cross-grating structures and/or cross-gratings and/or hexagonal gratings and/or mirrors, and/or wherein the structures which appear light comprise static and/or dynamic matte structures and/or Fourier holograms, in particular wherein
   the grating period of the cross-gratings and/or hexagonal gratings is in a range of 200 nm to 450 nm and the grating depth of the cross-gratings and/or hexagonal gratings is more than 150 nm, and/or
   **in that** the average distance of the matte structures is in a range from 500 nm to 5 $\mu$m and the

average depth of the matte structures is in a range from 100 nm to 2 $\mu$m.

6. Method according to Claim 3 or 4, **characterised**

   **in that** the light pixels (31) and dark pixels (32) are formed by blazed gratings, wherein the orientation of the blazed grating in the light pixels (31) and the dark pixels (32) differs by at least 150° and in particular is approximately 180°, and/or
   **in that** the grating period of the blazed gratings is in a range from 3 $\mu$m to 20 $\mu$m and/or the grating depth of the blazed gratings is in a range from 500 nm to 2 $\mu$m.

7. Method according to one of the preceding claims, **characterised**
   **in that** the replication layer (12) has a UV-curable replication lacquer which is pre-cured or completely cured by means of UV radiation after the embossed structure has been moulded, in particular wherein, preferably after curing of the replication lacquer, a metal layer (13) is applied to the replication layer (12) at least partially or over the entire surface.

8. Method according to one of the preceding claims, **characterised**

   **in that** the first graphic code (21) is a machine-readable code, in particular a 2D barcode, a QR code or a data matrix code and/or
   **in that** the first graphic code (21) is a batch-specific code, in particular in that a batch number (20) is provided when reading out the first graphic code (21).

9. Method according to one of the preceding claims, **characterised**

   **in that** a second graphic code in the form of a print (18) is applied in front of the replication layer (12), the print (18) being applied to the carrier layer (11) and/or to a detachment layer (15) and/or to a protective layer (16) at least partially in a second region and/or
   **in that** the second graphic code in the form of a print (18) is applied behind the replication layer (12), the print (18) being applied to the replication layer (12) at least partially in a second region and/or a metal layer (13) and/or an HRI layer and/or an adhesive layer (14) and/or a primer (14) is applied, in particular wherein
   the print (18) is produced by means of a digital printing process and is selected from the group consisting of inkjet printing, thermal transfer printing, laser printing and laser engraving; and/or

**in that** the print (18) has an ink, preferably a UV-curable ink, and/or in that the print (18) is coated, overlaid and/or encapsulated with a UV-curing replication lacquer, resulting, in particular, in crosslinking.

10. Method according to Claim 9,
**characterised**

**in that** the ink, in particular UV-curable ink, is applied or the print (18) is provided in the same production step as the UV replication and/or
**in that** the ink and the UV-curable replication lacquer are cured together and/or in that the ink, in particular the UV-curable ink, undergoes post-crosslinking through the UV curing of the UV-curable replication lacquer and/or
**in that** the ink is applied to a substantially smooth surface of the replication layer (12), in particular to a replication layer (12) which has not yet been replicated.

11. Method according to Claim 9 or 10,
**characterised**

**in that** the replication layer (12) is replicated together with the print (18) applied thereto and/or
**in that** the print (18) is applied to an already replicated surface of the replication layer (12) (18, 24).

12. Method according to one of Claims 9 to 11,
**characterised**

**in that** the second graphic code is a machine-readable code, in particular a 2D barcode, a QR code or a data matrix code and/or
**in that** the second graphic code is an individual code, in particular a piece-specific or series-specific code, particularly preferably in that a serial number is provided when the second graphic code is read out, and/or
**in that** a URL of an authentication server is stored in the second graphic code.

13. Method according to one of Claims 9 to 12,
**characterised**

**in that** the first region and the second region are arranged adjacent to one another or spaced apart from one another or at least partially overlapping one another; and/or
**in that** furthermore at least one levelling layer (17) is applied which is preferably arranged between the replication layer (12) and the adhesive layer (14) or primer (14) or between the metal layer (13) and the adhesive layer (14) or primer (14).

14. Method according to one of Claims 9 to 13,
**characterised**

**in that** the first graphic code (21), in particular the batch number (20), and/or the second graphic code, in particular the serial number, are stored in an authentication database of an authentication server, in particular in pairs in an authentication database of an authentication server, in particular wherein
the binarised two-dimensional Fourier pattern (24) and/or the second graphic code are captured with a mobile terminal, and a data-conducting connection is established between the mobile terminal and the authentication server, and authentication software enables a comparison of the data captured by the mobile terminal and transmitted to the authentication server and the first graphic code (21), in particular the batch number (20), read out and/or the second graphic code, in particular the serial number, read out which are stored in the authentication database.

15. Method according to one of the preceding claims,
**characterised**
**in that** the binarised two-dimensional Fourier pattern is moulded with an effective resolution of at most 2500 dpi, preferably at most 1200 dpi, particularly preferably at most 900 dpi.

16. Multilayer body (1), in particular a laminating film or transfer film, preferably produced according to one of Claims 1 to 15,
**characterised**

**in that** the multilayer body (1) has a carrier layer (11) and a replication layer (12) arranged thereon,
wherein an embedded first graphic code (21) Fourier-transformed into a binarised two-dimensional Fourier pattern (24) is moulded, as an embossed structure, in the replication layer (12) at least partially in a first region, and in that a metal layer (13) and/or an HRI layer and/or a primer (14) and/or an adhesive layer (14) are arranged on the replication layer (12).

17. Multilayer body (1) according to Claim 16,
**characterised**
**in that** a detachment layer (15) and/or a protective layer (16) are arranged between the carrier layer (11) and the replication layer (12).

18. Multilayer body (1) according to Claim 16 or 17,
**characterised**

**in that** the binarised two-dimensional Fourier pattern (24) is moulded into the replication layer (12) as nanostructures and/or microstructures, in particular is moulded into the replication layer (12) as diffractive gratings, scattering matte structures, reflective facets and/or reflective microstructures and/or

**in that** the binarised two-dimensional Fourier pattern (24) is formed from light pixels (31) and dark pixels (32) which are arranged within a two-dimensional grid with a resolution of M x N pixels.

19. Multilayer body (1) according to Claim 18, **characterised**

    **in that** the light pixels (31) and dark pixels (32) are formed from diffractive gratings, wherein the gratings of the light pixels (31) and the dark pixels (32) differ in the grating period and/or grating depth and/or orientation, in particular wherein

    the grating period of the diffractive gratings is in a range from 200 nm to 20 μm, preferably from 250 nm to 10 μm, and/or the grating depth of the diffractive gratings is in a range from 50 nm to 2 μm and/or the grating depth of the diffractive gratings is 5% to 20% of the grating period.

20. Multilayer body (1) according to Claim 18, **characterised**

    **in that** the light pixels (31) and dark pixels (32) are formed by structures which appear light or dark in direct reflection, wherein the structures which appear dark comprise high-frequency and deep cross-grating structures and/or cross-gratings and/or hexagonal gratings and/or mirrors, and/or wherein the structures which appear light comprise static and/or dynamic matte structures and/or Fourier holograms, in particular wherein

    the grating period of the cross-gratings and/or hexagonal gratings is in a range of 200 nm to 450 nm and the grating depth of the cross-gratings and/or hexagonal gratings is more than 150 nm, and/or

    **in that** the average distance of the matte structures is in a range from 500 nm to 5 μm and the average depth of the matte structures is in a range from 100 nm to 2 μm.

21. Multilayer body (1) according to Claim 18 or 19, **characterised**

    **in that** the light pixels (31) and dark pixels (32) are formed by blazed gratings, wherein the orientation of the blazed grating in the light pixels (31) and the dark pixels (32) differs by at least 150° and in particular is approximately 180°, in particular wherein

the grating period of the blazed gratings is in a range from 3 μm to 20 μm and/or the grating depth of the blazed gratings is in a range from 500 nm to 2 μm.

22. Multilayer body according to one of Claims 16 to 21, **characterised**

    **in that** the first graphic code (21) is a machine-readable code, in particular a 2D barcode, a QR code or a data matrix code and/or

    **in that** the first graphic code (21) is a batch-specific code, in particular which provides a batch number (20) when read out.

23. Multilayer body (1) according to one of Claims 16 to 22, **characterised**

    **in that** a second graphic code in the form of a print (18) is applied in front of the replication layer (12), the print (18) being applied to the carrier layer (11) and/or to a detachment layer (15) and/or to a protective layer (16) at least partially in a second region, and/or

    **in that** the second graphic code in the form of a print (18) is applied behind the replication layer (12), the print (18) being applied to the replication layer (12) and/or a metal layer (13) and/or an HRI layer and/or an adhesive layer (14) and/or a primer (14) at least partially in a second region, and/or

    **in that** the second graphic code is a machine-readable code, in particular a 2D barcode, a QR code or a data matrix code, and/or

    **in that** the second graphic code is an individual code, in particular a piece-specific or a series-specific code.

24. Multilayer body (1) according to Claim 23, **characterised**

    **in that** the first region and the second region are arranged adjacent to one another or spaced apart from one another or at least partially overlapping one another; and/or

    **in that** the multilayer body (1) has at least one levelling layer (17) which is preferably arranged between the replication layer (12) and the adhesive layer (14) or between the metal layer (13) and the adhesive layer (14).

25. Multilayer body according to one of Claims 16 to 24, **characterised**
    **in that** the binarised two-dimensional Fourier pattern has an effective resolution of at most 2500 dpi, preferably at most 1200 dpi, particularly preferably at most 900 dpi.

26. Method for authenticating a multilayer body (1) according to one of Claims 16 to 25, produced using a method according to Claims 1 to 15, with an authentication system,

 an image of a binarised two-dimensional Fourier pattern (24) of the multilayer body (1) being captured with a camera of a mobile terminal, the captured image is inversely Fourier transformed, and
 the inversely Fourier transformed image is fed to a first reading algorithm for a first graphic code (21)
 and the first graphic code (21) is read out and the first graphic code (21) is checked.

27. Method according to Claim 26, **characterised**

 **in that**, when capturing the image, a second graphic code of the multilayer body (1) is also captured,
 the captured image is fed to a second reading algorithm for the second graphic code, the second graphic code is read out and the first graphic code (21) read out and the second graphic code read out are checked; and/or
 **in that** a batch number (20) is provided by reading out the first graphic code (21) and a serial number is provided by reading out the second graphic code, and in that the batch number (20) and the serial number are checked; and/or
 **in that** the first graphic code (21) read out, in particular the batch number (20) read out, is fed to an authentication server and compared with valid first graphic codes (21), in particular batch numbers (20), stored on the authentication server, and the first graphic code (21) read out, in particular the batch number (20), is authenticated if it matches one of the stored valid first graphic codes (21), in particular the batch number (20); and/or
 **in that** the second graphic code read out, in particular the serial number read out, is fed to the authentication server and compared with valid second graphic codes, in particular serial numbers, stored on the authentication server, and the second graphic code read out, in particular the serial number, is authenticated if it matches one of the stored valid second graphic codes, in particular the serial number.

28. Method according to Claim 26 or 27, **characterised**

**in that** the multilayer body (1) is authenticated if the first graphic code (21) has been authenticated or if both the first graphic code (21), in particular the batch number (20), and the second graphic code, in particular the serial number, have been authenticated; and/or in that the multilayer body (1) is authenticated if the combination of the first graphic code (21) read out, in particular the batch number (20), and the second graphic code read out, in particular the serial number, have been authenticated.

29. Authentication system for authenticating a multilayer body (1) according to one of Claims 16 to 25, produced using a method according to one of Claims 1 to 15,

 - with a mobile terminal with a camera for capturing the image of the binarised two-dimensional Fourier pattern (24) of the forgery-proof multilayer body (1) and a transceiver unit with which data of the multilayer body (1) captured by the camera can be transmitted to an authentication server,
 - an inverse Fourier transformation program with which the binarised two-dimensional Fourier pattern (24) can be inversely Fourier transformed,
 - a first reading algorithm for the first graphic code (21) which is read out from the inverse Fourier transformed image,
 - with an authentication server which is connected to the mobile terminal in a data-conducting manner and on which the first graphic code (21) read out, in particular the batch number (20), stored in the multilayer body (1) is stored and on which the first graphic code (21) read out, in particular the batch number (20), transmitted by the mobile terminal can be authenticated and with which an authentication signal can be sent to the mobile terminal.

**Revendications**

1. Procédé de fabrication d'un corps multicouche (1), en particulier d'un film de laminage ou d'un film de transfert, dans lequel une couche de réplication (12) est appliquée sur une couche de support (11), et un premier code graphique (21) est transformé par Fourier en un motif de Fourier bidimensionnel (23) et le motif de Fourier bidimensionnel (23) est ensuite binarisé pour obtenir un motif de Fourier bidimensionnel binarisé (24), et le motif de Fourier bidimensionnel binarisé (24) est transféré à un outil d'estampage, et le motif de Fourier bidimensionnel binarisé (24) est moulé, au moyen de l'outil d'estampage, en tant que structure d'estampage, au moins en partie, dans une première zone dans la couche de réplication (12), et une couche métallique (13) et/ou une couche HRI et/ou un apprêt (14) et/ou une couche de colle (14) sont appliqués sur la couche de réplication (12).

2. Procédé selon la revendication 1, **caractérisé en ce**

   **qu'**une couche de décollement (15) et/ou une couche de protection (16) sont appliquées sur la couche de support (11), en particulier dans lequel la couche de décollement (15) et/ou la couche de protection (16) sont disposées entre la couche de support (11) et la couche de réplication (12).

3. Procédé selon l'une quelconque des revendications précédentes, **caractérisé en ce**

   **que** le motif de Fourier bidimensionnel binarisé (24) est fourni sous forme de nanostructures et/ou de microstructures, en particulier sous forme de réseaux diffractifs, de structures mates de diffusion, de facettes réfléchissantes et/ou de microstructures réfléchissantes ; et/ou que le modèle de Fourier bidimensionnel binarisé (24) est formé à partir de pixels clairs (31) et de pixels foncés (32) qui sont disposés à l'intérieur **d'une** grille bidimensionnelle avec une résolution de M x N pixels.

4. Procédé selon la revendication 3, **caractérisé en ce**

   **que** les pixels clairs (31) et les pixels foncés (32) sont formés à partir de réseaux diffractifs, dans lequel les réseaux des pixels clairs (31) et des pixels foncés (32) se distinguent par la période du réseau et/ou la profondeur du réseau et/ou l'orientation, en particulier dans lequel la période de réseau des réseaux diffractifs se situe dans une plage de 200 nm à 20 $\mu$m, de manière préférée de 250 nm à 10 $\mu$m, et/ou la profondeur de réseau des réseaux diffractifs se situe dans une plage de 50 nm à 2 $\mu$m et/ou la profondeur de réseau des réseaux diffractifs va de 5 % à 20 % de la période de réseau.

5. Procédé selon la revendication 3, **caractérisé en ce**

   **que** les pixels clairs (31) et les pixels foncés (32) sont formés par des structures apparaissant claires ou foncées en réflexion directe, dans lequel les structures apparaissant foncées comprennent des structures de réseau en croix à haute fréquence et profondes et/ou des réseaux en croix et/ou des réseaux hexagonaux et/ou des miroirs, et dans lequel les structures apparaissant claires comprennent des structures mates statiques et/ou dynamiques et/ou des hologrammes de Fourier, en particulier dans lequel la période de réseau des réseaux croisés et/ou des réseaux hexagonaux se situe dans une plage de 200 nm à 450 nm et la profondeur de réseau des réseaux croisés et/ou hexagonaux est supérieure à 150 nm, et/ou la distance moyenne des structures mates se situe dans une plage de 500 nm à 5 $\mu$m et que la profondeur moyenne des structures mates se situe dans une plage de 100 nm à 2 $\mu$m.

6. Procédé selon la revendication 3 ou 4, **caractérisé en ce**

   **que** les pixels clairs (31) et les pixels foncés (32) sont formés par des réseaux blaze, dans lequel l'orientation du réseau blaze dans les pixels clairs (31) et les pixels foncés (32) diffère d'au moins 150° et est en particulier approximativement de 180° et/ou **que** la période de réseau des réseaux blaze se situe dans une plage de 3 $\mu$m à 20 $\mu$m et/ou que la profondeur de réseau des réseaux blaze se situe dans une plage de 500 nm à 2 $\mu$m.

7. Procédé selon l'une quelconque des revendications précédentes, **caractérisé en ce** **que** la couche de réplication (12) présente un vernis de réplication durcissable aux UV, qui est prédurci ou est complètement durci après le moulage de la structure d'estampage par rayonnement UV, en particulier dans lequel, de préférence après le durcissement du vernis de réplication, une couche métallique (13) est appliquée au moins en partie ou sur l'ensemble de la surface de la couche de réplication (12).

8. Procédé selon l'une quelconque des revendications précédentes, **caractérisé en ce**

   **que** le premier code graphique (21) est un code lisible par machine, en particulier un code-barres 2D, un code QR ou un code Datamatrix et/ou **que** le premier code graphique (21) est un code spécifique au lot, en particulier qu'un numéro de lot (20) est fourni lors de la lecture du premier code graphique (21).

9. Procédé selon l'une quelconque des revendications précédentes, **caractérisé en ce**

   **qu'**un deuxième code graphique est appliqué sous forme d'une impression (18) devant la couche de réplication (12) dans laquelle l'impression (18) est appliquée au moins en partie dans une deuxième zone sur la couche de support (11) et/ou sur une couche de décollement (15) et/ou sur une couche de protection (16) et/ou,

que le deuxième code graphique est appliqué sous forme d'une impression (18) derrière la couche de réplication (12), dans laquelle l'impression (18) est appliquée au moins en partie dans une deuxième zone sur la couche de réplication (12) et/ou une couche métallique (13) et/ou une couche HRI et/ou une couche de colle (14) et/ou un apprêt (14), en particulier dans lequel

l'impression (18) est effectuée par un procédé d'impression numérique et est sélectionnée parmi le groupe comprenant l'impression à jet d'encre, l'impression par transfert thermique, l'impression laser et la gravure laser ; et/ou

que l'impression (18) présente une encre, de manière préférée une encre durcissable par UV, et/ou que l'impression (18) est recouverte, surmoulée et/ou encapsulée par un vernis de réplication durcissant par UV, ce qui entraîne en particulier une réticulation et/ou un enchevêtrement.

10. Procédé selon la revendication 9,
**caractérisé en ce**

que l'application de l'encre, en particulier de l'encre durcissant par UV, ou la fourniture de l'impression (18) est réalisée dans la même étape de fabrication que la réplication UV et/ou
que l'encre et le vernis de réplication durcissant par UV sont durcis ensemble et/ou que l'encre, en particulier l'encre durcissable par UV, subit une réticulation ultérieure par le durcissement UV du vernis de réplication durcissant par UV et/ou
que l'encre est appliquée sur une surface sensiblement lisse de la couche de réplication (12), en particulier sur une couche de réplication (12) qui n'a pas été encore répliquée.

11. Procédé selon la revendication 9 ou 10,
**caractérisé en ce**

que la couche de réplication (12) est répliquée conjointement avec l'impression (18) appliquée dessus et/ou
que l'impression (18) est appliquée sur une surface déjà répliquée de la couche de réplication (12) (18, 24).

12. Procédé selon l'une quelconque des revendications 9 à 11,
**caractérisé en ce**

que le deuxième code graphique est un code lisible par machine,
en particulier un code-barres 2D, un code QR ou un code Datamatrix et/ou
que le deuxième code graphique est un code individuel, en particulier un code individuel à une pièce ou un code individuel à une série, de manière particulièrement préférée qu'un numéro de série est fourni lors de la lecture du deuxième code graphique, et/ou
qu'une URL d'un serveur d'authentification est stockée dans le deuxième code graphique.

13. Procédé selon l'une quelconque des revendications 9 à 12,
**caractérisé en ce**

que la première zone et la deuxième zone sont disposées de manière adjacente l'une à l'autre ou de manière espacée ou en superposition au moins en partie l'une par rapport à l'autre ; et/ou
qu'au moins une couche de compensation (17) est appliquée par ailleurs, qui de préférence est disposée
entre la couche de réplication (12) et de la couche de colle (14) ou l'apprêt (14) ou entre la couche métallique (13) et la couche adhésive (14) ou l'apprêt (14).

14. Procédé selon l'une quelconque des revendications 9 à 13,
**caractérisé en ce**

que le premier code graphique (21), en particulier le numéro de lot (20), et/ou le deuxième code graphique, en particulier le numéro de série, sont stockés
dans une base de données d'authentification d'un serveur d'authentification, en particulier sont stockés par paires dans une base de données d'authentification d'un serveur d'authentification, dans lequel en particulier
le modèle de Fourier bidimensionnel binarisé (24) et/ou le deuxième code graphique sont détectés à l'aide d'un terminal mobile, et une connexion de transmission de données est établie entre le terminal mobile et le serveur d'authentification et
un logiciel d'authentification permet de comparer les données détectées par le terminal mobile et transmises au serveur d'authentification aux premiers codes graphiques (21) lus stockés dans la base de données d'authentification, en particulier au numéro de lot (20), et/ou au deuxième code graphique, en particulier au numéro de série.

15. Procédé selon l'une quelconque des revendications précédentes,
**caractérisé en ce**
**que** le motif de Fourier bidimensionnel binarisé est reproduit avec une résolution effective ne dépassant pas 2500 dpi, de manière préférée ne dépassant pas 1200 dpi, et de manière particulièrement préférée ne dépassant pas 900 dpi.

16. Corps multicouche (1), en particulier film de laminage ou film de transfert, de préférence fabriqué selon l'une quelconque des revendications 1 à 15,
**caractérisé en ce**

> **que** le corps multicouche (1) présente une couche de support (11) et une couche de réplication (12) disposée dessus,
> dans lequel un premier code graphique (21) intégré, transformé par Fourier en un motif de Fourier bidimensionnel binarisé (24), est au moins en partie moulé en tant que structure d'estampage dans une première zone dans la couche de réplication (12) et
> **qu'**une couche métallique (13) et/ou une couche HRI et/ou un apprêt (14) et/ou une couche de colle (14) sont disposés sur la couche de réplication (12).

17. Corps multicouche (1) selon la revendication 16,
**caractérisé en ce**
**qu'**une couche de décollement (15) et/ou une couche de protection (16) sont disposées entre la couche de support (11) et la couche de réplication (12).

18. Corps multicouche (1) selon la revendication 16 ou 17,
**caractérisé en ce**

> **que** le motif de Fourier bidimensionnel binarisé (24) est moulé sous forme de nanostructures et/ou de microstructures dans la couche de réplication (12), en particulier sous forme de réseaux diffractifs, de structures mates de diffusion, de facettes réfléchissantes et/ou de microstructures réfléchissantes dans la couche de réplication (12) et/ou
> **que** le motif de Fourier bidimensionnel binarisé (24) est formé à partir de pixels clairs (31) et de pixels foncés (32) qui sont disposés à l'intérieur d'une trame bidimensionnelle avec une résolution de M x N pixels.

19. Corps multicouche (1) selon la revendication 18,
**caractérisé en ce**

> **que** les pixels clairs (31) et les pixels foncés (32) sont formés à partir de réseaux diffractifs, dans lequel les réseaux des pixels clairs (31) et des pixels foncés (32) se différencient par la période de réseau et/ou la profondeur de réseau et/ou l'orientation, en particulier dans lequel
la période de réseau des réseaux diffractifs se situe dans une plage de 200 nm à 20 $\mu$m, de manière préférée de 250 nm à 10 $\mu$m, et/ou la profondeur de réseau des réseaux diffractifs se situe dans une plage de 50 nm à 2 $\mu$m et/ou la profondeur de réseau des réseaux diffractifs va de 5 % à 20 % de la période de réseau.

20. Corps multicouche (1) selon la revendication 18,
**caractérisé en ce**

> **que** les pixels clairs (31) et les pixels foncés (32) sont formés par des structures apparaissant claires ou foncées en réflexion directe, dans lequel les structures apparaissant foncées comprennent des structures en croix à haute fréquence et profondes et/ou des réseaux en croix et/ou des réseaux hexagonaux et/ou des miroirs, et dans lequel les structures apparaissant claires comprennent des structures mates statiques et/ou dynamiques et/ou des hologrammes de Fourier, en particulier dans lequel la période de réseau des réseaux en croix et/ou des réseaux hexagonaux se situe dans une plage de 200 nm à 450 nm et la profondeur de réseau des réseaux en croix et/ou des grilles hexagonaux est supérieure à 150 nm et/ou la distance moyenne des structures mates se situe dans une plage de 500 nm à 5 $\mu$m et que la profondeur moyenne des structures mates se situe dans une plage de 100 nm à 2 $\mu$m.

21. Corps multicouche (1) selon la revendication 18 ou 19,
**caractérisé en ce**

> **que** les pixels clairs (31) et les pixels foncés (32) sont formés par des réseaux blaze, dans lequel l'orientation du réseau blaze dans les pixels clairs (31) et les pixels foncés (32) diffère d'au moins 150° et est en particulier d'approximativement 180°, en particulier dans lequel la période de réseau des réseaux blaze se situe dans une plage de 3 $\mu$m à 20 $\mu$m et/ou la profondeur de réseau des réseaux blaze se situe dans une plage de 500 nm à 2 $\mu$m.

22. Corps multicouche selon l'une quelconque des revendications 16 à 21,
**caractérisé en ce**

> **que** le premier code graphique (21) est un code lisible par machine, en particulier un code-barres 2D, un code QR ou un code Datamatrix et/ou **que** le premier code graphique (21) est un code spécifique au lot, en particulier qui fournit un numéro de lot (20) lors de la lecture.

23. Corps multicouche (1) selon l'une quelconque des revendications 16 à 22, **caractérisé en ce**

> **qu'**un deuxième code graphique est appliqué sous forme d'une impression (18) avant la couche de réplication (12), dans laquelle l'impression (18) est appliquée au moins en partie dans une deuxième zone sur la couche de support (11) et/ou sur une couche de décollement (15) et/ou sur une couche de protection (16) et/ou,
>
> **que** le deuxième code graphique est appliqué sous forme d'une impression (18) derrière la couche de réplication (12), dans laquelle l'impression (18) est appliquée au moins en partie dans une deuxième zone sur la couche de réplication (12) et/ou une couche métallique (13) et/ou une couche HRI et/ou une une couche de colle (14) et/ou un apprêt (14) sont appliqués, et/ou
>
> **que** le deuxième code graphique est un code lisible par machine, en particulier un code-barres 2D, un code QR ou un code Datamatrix, et/ou
>
> **que** le deuxième code graphique est un code individuel, en particulier un code individuel à une pièce ou un code individuel à une série.

24. Corps multicouche (1) selon la revendication 23, **caractérisé en ce**

> **que** la première zone et la deuxième zone sont disposées de manière adjacente l'une à l'autre ou de manière espacée l'une par rapport à l'autre ou par superposition au moins en partie l'une par rapport à l'autre ; et/ou
>
> **que** le corps multicouche (1) présente au moins une couche de compensation (17) qui est disposée de préférence entre la couche de réplication (12) et la couche de colle (14) ou entre la couche métallique (13) et la couche de colle (14).

25. Corps multicouche selon l'une quelconque des revendications 16 à 24, **caractérisé en ce** **que** le modèle de Fourier bidimensionnel binarisé présente une résolution effective de maximum 2500 dpi, de manière préférée de maximum 1200 dpi, de manière particulièrement préférée de maximum 900 dpi.

26. Procédé d'authentification d'un corps multicouche (1) selon l'une quelconque des revendications 16 à 25, fabriqué avec un procédé selon les revendications 1 à 15, avec un système d'authentification,

> par la détection d'une image d'un modèle de Fourier bidimensionnel binarisé (24) du corps multicouche (1) avec une caméra d'un terminal mobile,
>
> par la transformation inverse de Fourier de l'image détectée et
>
> par l'amenée de l'image ayant subi une transformation inverse de Fourier à un premier algorithme de lecture pour un premier code graphique (21)
>
> par la lecture du premier code graphique (21) et par la vérification du premier code graphique (21).

27. Procédé selon la revendication 26, **caractérisé en ce**

> **que** lors de la détection de l'image, un deuxième code graphique du corps multicouche (1) est également détecté, l'image détectée est amenée à un deuxième algorithme de lecture pour le deuxième code graphique, et le deuxième code graphique est lu, et le premier code graphique (21) et le deuxième code graphique lu sont vérifiés ; et/ou
>
> **qu'**un numéro de lot (20) est fourni par la lecture du premier code graphique (21) et qu'un numéro de série est fourni par la lecture du deuxième code graphique, et que le numéro de lot (20) ainsi que le numéro de série sont vérifiés ; et/ou
>
> **que** le premier code graphique (21) lu, en particulier le numéro de lot (20) lu, est amené à un serveur d'authentification et est comparé à des premiers codes graphiques (21) valides, en particulier des numéros de lot (20), stockés sur le serveur d'authentification, et le premier code graphique (21) lu, en particulier le numéro de lot (20), est authentifié s'il correspond à l'un des premiers codes graphiques (21) valides stockés, en particulier au numéro de lot (20), et/ou
>
> **que** le deuxième code graphique lu, en particulier le numéro de série, est amené au serveur d'authentification et est comparé à des deuxièmes codes graphiques valides, notamment les numéros de série, stockés sur le serveur d'authentification, et le deuxième code graphique lu, en particulier le numéro de série, est authentifié s'il correspond à l'un des deuxièmes codes graphiques valides stockés, en particulier au numéro de série.

28. Procédé selon la revendication 26 ou 27, **caractérisé en ce**

**que** le corps multicouche (1) est authentifié lorsque le premier code graphique (21) a été authentifié ou lorsqu'à la fois le premier code graphique (21), en particulier le numéro de lot (20), et le deuxième code graphique, en particulier le numéro de série, ont été authentifiés ; et/ou

**que** le corps multicouche (1) est authentifié lorsque la combinaison du premier code graphique (21) lu, en particulier du numéro de lot (20), et du deuxième code graphique lu, en particulier du numéro de série, ont été authentifiés.

29. Système d'authentification pour authentifier un corps multicouche (1) selon l'une des revendications 16 à 25, fabriqué avec un procédé décrit selon l'une quelconque des revendications 1 à 15,

   - avec un terminal mobile avec une caméra de détection de l'image du modèle de Fourier bidimensionnel binarisé (24) du corps multicouche infalsifiable (1) et une unité d'émission-réception permettant de transmettre à un serveur d'authentification des données du corps multicouche (1) détecté par la caméra,
   - un programme de transformation inverse de Fourier permettant d'effectuer une transformation inverse de Fourier du modèle de Fourier bidimensionnel binarisé (24),
   - un premier algorithme de lecture du premier code graphique (21), qui est lu de l'image ayant subi une transformation inverse de Fourier,
   - avec un serveur d'authentification qui est relié au terminal mobile par transmission de données et sur lequel est stocké le premier code graphique (21) lu, en particulier le numéro de lot (20), du corps multicouche (1) et sur lequel le premier code graphique (21) lu, transmis par le terminal mobile, en particulier le numéro de lot (20), peut être authentifié, permettant ainsi l'envoi d'un signal d'authentification au terminal mobile.

Fig. 1

Fig. 2

Fig. 3

Fig. 4

Fig. 5

Fig. 6

Fig. 7

Fig. 8

Fig. 9

Fig. 10a

Fig. 10b

Fig. 11a

Fig. 12a

Fig. 11b

Fig. 12b

Fig. 11c

Fig. 12c

Fig. 13a

Fig. 13b

Fig. 14

Fig. 15a

Fig. 15b

Fig. 15c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017206466 A1
- WO 2008058331 A1
- EP 3388250 A1
- WO 2018189033 A1


**In der Beschreibung aufgeführte Nicht-Patentliteratur**

- **GOODMAN, J. W.** Introduction to Fourier Optics. McGraw-Hill, 1996
- *Appl. Opt.*, 1973, vol. 12, 2336-43